(19) Europäisches Patentamt
European Patent Office
Office européen des brevets

(11) **EP 2 078 945 A2**

(12) **EUROPÄISCHE PATENTANMELDUNG**

(43) Veröffentlichungstag:
**15.07.2009 Patentblatt 2009/29**

(51) Int Cl.:
***G01M 15/05*** *(2006.01)*

(21) Anmeldenummer: **09150458.9**

(22) Anmeldetag: **13.01.2009**

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**
Benannte Erstreckungsstaaten:
**AL BA RS**

(30) Priorität: **14.01.2008 AT 222008 U**

(71) Anmelder: **AVL List GmbH**
**8020 Graz (AT)**

(72) Erfinder:
• **Fritz, Sven Christian**
**88048 Friedrichshafen (DE)**
• **Guntschnig, Thomas**
**8043 Graz (AT)**
• **Stettner, Martin**
**8010 Graz (AT)**
• **Berger, Marvin**
**8670 Krieglach (AT)**
• **Fuchs, Werner**
**9911 Assling (DE)**

(74) Vertreter: **Laminger, Norbert et al**
**Pinter, Laminger & Weiss OG**
**Patentanwälte**
**Prinz-Eugen-Strasse 70**
**1040 Wien (AT)**

(54) **Verfahren und Vorrichtung zur Analyse und Bewertung von Messdaten eines Messsystems**

(57) Ein Verfahren zur Analyse und Bewertung von Messdaten eines Messsystemes mit zumindest einem Messkanal, sieht die Bewertung der Messdaten zu frei wählbaren Zeitpunkten und über frei wählbare Dauer nach zumindest einem von mehreren vorgebbaren Kriterien vor.

Um dabei eine zentrale und allgemein anwendbare Messdatendiagnose zu entwickeln, bei der beliebig viele Messkanäle mit geringem Aufwand und mit guter Ergebnisdarstellung, vorzugsweise mit Bestimmung der fehlerhaften Kanäle, gleichzeitig überwacht werden können, werden die Rohdaten des Messkanals einer Fehlerisolations-Stufe und anschließend einer Fehlerklassifikations-Stufe zugeführt und wird anschließend ein Maß für die Güte der Messdaten des jeweiligen Messkanals ermittelt.

Dafür sind in der Vorrichtung zur Analyse und Bewertung von Messdaten eines Messsystems ein Eingang für die Rohdaten des Messkanals sowie eine Einheit vorgesehen, in welcher eine Fehlerisolations-Stufe und anschließend eine Fehlerklassifikations-Stufe implementiert sind.

FIG. 53

**Beschreibung**

Die Erfindung betrifft ein Verfahren zur Analyse und Bewertung von Messdaten eines Messsystemes mit zumindest einem Messkanal, umfassend die Bewertung der Messdaten zu frei wählbaren Zeitpunkten und über frei wählbare Dauer nach zumindest einem von mehreren vorgebbaren Kriterien.

Die Anforderungen an moderne Prüffelder in Bezug auf Reproduzierbarkeit, Qualität und Kosten im Prüfprozess sind in den letzten Jahren durch komplexere Aufgabenstellungen deutlich angestiegen.

Der Forderung nach kürzeren Entwicklungszeiten steht ein überproportionaler Anstieg des Applikationsaufwands gegenüber. Dieser Zielkonflikt ist durch den stetigen Anstieg der Freiheitsgrade und durch die wachsende Anzahl von Messgrößen begründet. Hieraus folgt, dass in Zukunft deutlich umfangreichere und komplexere Prüfaufgaben in immer kürzerer Zeit abgearbeitet werden müssen.

Diese Entwicklung wird nicht zuletzt durch immer strengere Vorgaben der Abgasgesetzgebung hervorgerufen. Als Konsequenz nimmt die Anzahl moderner steuerungs- und regelungstechnische Funktionen mit entsprechender Sensorik und Aktuatorik für die Regelung des Verbrennungsmotors stetig zu.

Die Aufgabe der Applikation besteht nun darin, die optimale Einstellung der hieraus resultierenden Freiheitsgrade unter Berücksichtigung bestimmter Restriktionen zu ermitteln.

Auf diese Anforderungen wird in den Prüffeldern der Motoren- und Antriebsstranghersteller durch die Ausbreitung intelligenter Messmethoden reagiert. Gerade der Einsatz der statistischen Versuchsplanung (DoE - Design of Experiment) fokussiert auf eine maximale Aussage der Versuchsergebnisse bei gleichzeitiger Minimierung des Messaufwands.

Durch die Kombination von technischem Expertenwissen mit mathematischen Methoden führt DoE durch spezielle Versuchspläne zu einer Reduktion der benötigen Messpunkte und gleichzeitig zu einer effizienten Modellbildung. Aus der anschließenden Optimierung ergibt sich die Bedatung der Parameter, Kennlinien und Kennfelder für die ECU. Das Ergebnis der Optimierung hängt dabei von der Modell- und Messdatenqualität ab.

Der Applikateur bestimmt über sein Fachwissen den anzuwendenden Modellansatz und trägt damit wesentlich zur späteren Modellqualität bei.

Für die Modellbildung stehen bei DoE jetzt nur noch wenige Messdaten zur Verfügung. Hieraus folgt, dass an diese Daten entsprechende Qualitätsanforderungen gestellt werden müssen. Dies wird sofort klar, wenn man ein Polynommodell 2ten Grades mit gleicher Modellqualität aus 3 anstatt 5 Messwerten bildet.

Üblicherweise reagieren die Modellqualität und das Optimierungsergebnis extrem sensibel auf falsche Messdaten und eine Überprüfung der Messdaten vor der Modellbildung und Optimierung ist unbedingt erforderlich.

Aus ökonomischer Sicht macht eine Messdatendiagnose für jeden Prüflauf Sinn, da hierdurch Fehlmessungen verhindert oder erheblich reduziert werden können. Schätzungen über verlorene Prüfstandszeiten durch zu spät oder nicht erkannte Fehlmessungen liegen zwischen 10% und 40%.

Aufgrund der großen Datenmengen ist eine objektive und automatisierte Bewertung der Messdaten jedoch nur dann wirklich sinnvoll, wenn diese zentral und online auf alle benötigten Daten zugreifen kann.

Ein weiterer Aspekt ergibt sich aus dem unbemannten Prüfstandsbetrieb. Mit einem durchgängigen Diagnosewerkzeug kann auch im un- oder teilbemannten Betrieb eine entsprechende Reaktion bei Unregelmäßigkeiten während der Datenerfassung erfolgen.

Wird die Messdatendiagnose nicht nur zentralisiert, sondern auch noch parametrierbar gestaltet, kann sie für jeden beliebigen Prüflauf und Prüfling verwendet werden.

Für die Diagnose technischer Systeme, die mit den Diagnoseanforderungen von Motorenprüfständen vergleichbar sind, wurden unterschiedliche Lösungsansätze vorgeschlagen. Neben der Eigendiagnose der Motorelektronik (OBD) sind beispielsweise verschiedene modellbasierte und spezielle prüfstandsbezogene Ansätze vorgestellt und ist deren Optimierungspotential aufgezeigt worden.

Die Anforderungen an die OBD und an die Messdatendiagnose sind in weiten Bereichen sehr ähnlich. Gesetzliche Bestimmungen der CARB (California Air Resource Board) führten in Kalifornien ab 1988 zu einer gesetzlich geforderten Überwachung bestimmter Komponenten im Fahrzeug. Die erste Stufe dieser Vorschrift (OBD I) bezog sich zunächst nur auf die elektrische Überwachung aller Sensoren und Aktoren, die mit der ECU in Verbindung stehen. Über eine Fehlerlampe, die MIL (Malfunction Indicator Light), wird der Fahrer über Fehlfunktionen im OBD- überwachten Emissionsregelkreis informiert. Werkstätten und Servicedienste konnten über die MIL gespeicherte Fehler über einen Blinkcode auslesen.

Ab 1994 trat die OBD II in Kraft. Neben der Überwachung einfacher Komponenten wurde jetzt auch die Überwachung kompletter abgasrelevanter Systeme gefordert.

Eine genormte Datenübertragung mit standardisierten Stecker (GST = Generic-Scan-Tool) ersetzt seitdem den Blinkcode zum Auslesen der Fehlerspeicher im Fahrzeug. Über diese Schnittstelle lassen sich neben den Fehlercodes auch zusätzliche Motorbetriebsdaten für den Fehlerzeitraum auslesen. Etwa ein Drittel des Gesamtzeitaufwands bei der Applikation geht üblicherweise in die Abstimmung der OBD eingehen. Die OBD-Funktionen sind heute so aufgebaut, dass neben dem Erkennen, Isolieren und Speichern auch aktive Reaktionen erfolgen. Diese sind teilweise ebenfalls durch die Gesetzgebung vorgeschrieben. Ein klassisches Beispiel ist z.B. der Wechsel in den Betriebsmodus Notlauf. Über die gesetzlichen Anforderungen hinaus werden heute zahlreiche Systemüberwachungen durchgeführt um Informationen für die Instandsetzungsarbeiten in den Werkstätten zu sammeln.

Die Grundfunktionen der OBD bestehen zum einen aus der Überwachung der Ein- und Ausgangssignale und zum anderen aus der Kontrolle der Steuergerätekommunikation und den internen Gerätefunktionen der ECU. Die Überwachung der Eingangssignale prüft in der Regel die Verbindungsleitungen zur ECU, die Versorgungsspannung der Sensoren und führt mögliche Plausibilitätsprüfungen durch (siehe die auf "Abgastechnik für Ottomotoren", Bosch Technische Unterrichtung, Gelbe Reihe, 2002, beruhende Tabelle T2.1). Die Überwachung der Ausgangssignale erfolgt über eine Stromkreisanalyse zwischen Ausgangssignal und Endstufe oder durch gezielte Systemauswirkungen, die bei der Funktion eines Aktor entstehen. Hierzu wurden auf dem Gebiet der Aktorüberwachung in den letzten Jahren viele modellbasierten Fehlererkennungsmethoden entwickelt.

Die Überwachung der ECU-Kommunikation erfolgt heute im Wesentlichen über Kontrollmechanismen der CAN-Bus-Systeme. Interne Funktionen und Bauteile werden direkt nach dem Start und dann in regelmäßigen Abständen während des Betriebs geprüft.

Die Geschichte der OBD zeigt, dass der Stellenwert der Fahrzeugdiagnose stetig gewachsen ist. Die Grundanforderungen der OBD können also auch als Vorbild für eine Messdatendiagnose mit entsprechender Visualisierung und Datenverwaltung herangezogen werden. Die Fehlerdiagnose der OBD gilt jedoch immer nur für die applizierte Motorfamilie. Hierzu wird das fehlerfreie Systemverhalten während der Applikation durch Modelle, Kennlinien und Kennwerten bestimmt und abgelegt. Die bekannte Systemumgebung erlaubt außerdem die in Tabelle T2.1 beschriebene Überprüfung bestimmter elektrischer Schaltkreise oder von entsprechenden Signalbereichen.

Tabelle T2.1 Überwachte Eingangssignale

| Signalpfad | Überwachung |
|---|---|
| Fahrpedalsensor | Überprüfung der Versorgungsspannung und des Signalbereichs |
| | Plausibilität mit redundantem Signal |
| | Plausibilität mit Bremse |
| Kurbelwellendrehzahlsensor | Überprüfung des Signalbereichs |
| | Plausibilität mit Nockenwellendrehzahlgeber |
| | Überprüfung der zeitlichen Änderungen (dynamische Plausibilität) |
| Motortemperatursensor | Überprüfung des Signalbereichs |
| | Logische Plausibilität in Abhängigkeit von Drehzahl und Motorlast |
| Geschwindigkeitssignal | Überprüfung des Signalbereichs |
| | Logische Plausibilität in Abhängigkeit von Drehzahl und Motorlast |
| AGR-Ventil | Überprüfung auf Kurzschlüsse und Leitungsbruch |
| | Abgasrückführregelung |
| | Überprüfung der Systemreaktion auf die Ventilansteuerung |
| Batteriespannung | Überprüfung des Signalbereichs |
| Luftmassenmesser | Überprüfung der Versorgungsspannung und des Signalbereichs |
| | Logische Plausibilität |
| Lufttemperatur | Überprüfung des Signalbereichs |
| | Logische Plausibilität |

Im Unterschied zur OBD ist eine Messdatendiagnose an Motorenprüfständen jedoch nicht nur auf die emissionsrelevanten Komponenten oder auf einen bestimmten Motor beschränkt. Im Gegensatz zur OBD muss die Messdatendiagnose auf verschiedene Motoren und Versuche flexibel anwendbar sein.

In "Modellbasierte Fehlererkennung und Diagnose der Einspritzung und Verbrennung von Dieselmotoren", Frank Kimmich, Dissertation 2003, Technische Universität Darmstadt, sind dagegen einige ausgesuchte Beispiele zur Anwendung signal- und prozessmodellbasierter Methoden zur Fehlererkennung an Verbrennungskraftmaschinen beschrieben. Diese Methoden beziehen sich (wie die OBD) ebenfalls auf eindeutig beschreibbare technische Systeme.

Bei der Anwendung von Signalmodellen finden in der Regel die Grundlagen der Signaltheorie Anwendung. So wird in "Erkennung von Zündaussetzern aus Drehzahlsignalen mit Hilfe eines Frequenzbereichsverfahrens", von Führer et al., Tagung Elektronik im Kraftfahrzeug, Haus der Technik, Essen, ein FTT (Fast Fourier Transformation) basiertes Verfahren zur Zündaussetzererkennung aus dem Drehzahlsignal beschrieben. Als Alternative zur Aussetzererkennung mit Drehzahlsignalen wird in "Verbrennungsdiagnose von Ottomotoren mittels Abgasdruck und Zonenstrom", von M. Willimowski, Shaker Verlag, Aachen, ein Verfahren zur Aussetzererkennung mit Abgasgegendrucksensoren unter Anwendung von FFT und Wavelet-Transformation vorgestellt.

Im Gegensatz zur signalmodellbasierten Fehlererkennung wird bei der prozessmodellbasierten Variante ein mathematisches Prozessmodell mit dem realen Prozess verglichen, wie beispielsweise in "Detection of instrument malfunctions in control systems", von R. N. Clark, D.C. Fosth und V.M. Walton, EEE Transactions on Automatic Control, 1984, beschrieben ist. Die Anwendung von Parameterschätzverfahren oder von Zustandgrößenschätzern wird z.B. in "Modellgestützte Fehlererkennung und Diagnose am Beispiel eines Kraftahrzeugaktors", von T. Pfeufer, Fortschrittberichte VDI, Reihe 8, Nr. 749, VDI-Verlag., 1999, beschrieben.

Neben modellbasierten Ansätzen finden auch immer häufiger Black-Box-Modelle z.B. in Form von neuronalen Netzen Anwendung. Die Arbeit "Modellgestützte Fehlererkennung mit Neuronalen Netzen - Überwachung von Radaufhängungen und Diesel-Einspritzanlagen", von S. Leonhardt, Forschungsberichte, VDI-Reihe 12, Nr. 295, VDI-Verlag Düsseldorf, 1996, beschreibt z.B. ein Verfahren, mit dem auf Basis der Zylinderdruckmessung an Dieselmotoren die Einspritzmenge und der Einspritzzeitpunkt mit neuronalen Netzen aus dem Drucksignal rekonstruiert werden kann. In den Arbeiten "Entwicklung und Verifizierung eines neuronalen Netzwerkmodells zur Beschreibung des Verhaltens von PKW-Partikelfiltersystemen in Bezug auf Beladung und Regeneration" von Sven Fritz, Diplomarbeit 2002, Technische Universität Darmstadt, und "Entwicklung und Applikation eines virtuellen Sensors zur Bestimmung der Beladung von Partikelfiltern" von Christian Landgraf, Dissertation 2005, Technische Universität Darmstadt, wird die Umsetzung eines virtuellen Russmassensensors auf Basis neuronaler Netze beschrieben.

Die oben angeführten Beispiele beschreiben den Einsatz der Fehlerdiagnose für technisch vollständig beschriebene oder vermessene Systeme. Im Gegensatz zu solchen Systemen ist die Situation an Prüfständen deutlich komplizierter. Aus Zeit- und Kostengründen ist man an einer entsprechenden Auslastung dieser Prüfeinrichtung interessiert. Daher kommt es durch unterschiedliche Prüfaufgaben oder Versuchsträger häufig zu wechselnden Randbedingungen. Dies hat zur Folge, dass daten- oder modellbasierte Ansätze für ein Diagnosesystem im Allgemeinen ausscheiden, da in der Regel kein Spielraum zur Systemidentifikation besteht.

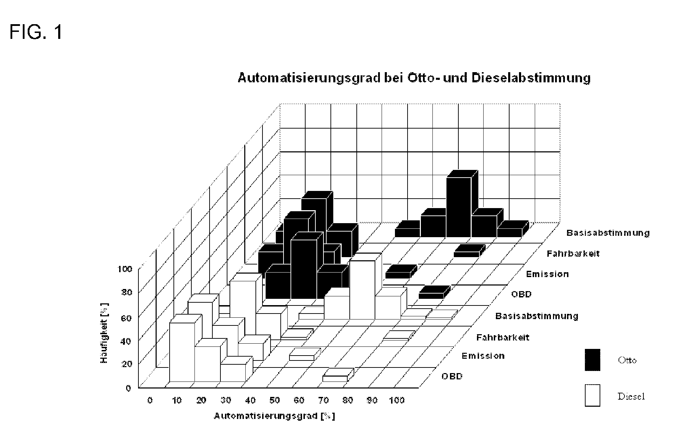

Auf der anderen Seite zeichnen sich moderne Prüffelder durch erprobte Abläufe mit stetig steigendem Automatisierungsgrad aus. Die Fig. 1 zeigt hierzu das Ergebnis einer Studie zum Thema Methodikeinsatz in der Motorenentwicklung, die im Rahmen der Arbeit "Motorsimulation in Echtzeit", von Timo Combé, Dissertation 2006, Technische Universität Darmstadt, durchgeführt wurde. Hieraus geht hervor, dass in weiten Bereichen der Motor- und Antriebsstrangentwicklung vermehrt automatisierte Prozesse eingesetzt werden. Ein automatisierter Ablauf geht dabei auch häufig mit einem unbemannten oder teilbemannten Betrieb einher. Alleine diese Tatsache begründet die Forderung nach einer Messdatendiagnose für Prüfstände.

Aber auch beim normalen Betrieb führen die gestiegene Datenmenge und komplexere Prüfläufe zu einer Situation, bei der eine einfache Online-Plausibilisierung durch das Prüfstandspersonal kaum noch möglich ist. Außerdem beinhaltet die Überprüfung der Messdaten durch das Prüfstandspersonal den Mensch als Fehlerquelle und ist somit nicht als optimaler Lösungsansatz zu bewerten. Von Prüfstandsbetreibern entwickelte Lösungen zur Systemüberwachung sind in der Regel sehr spezialisiert und daher nur von Experten auf neue Aufgaben übertragbar. Eine prüffeldweite Nutzung ist dementsprechend schwierig.

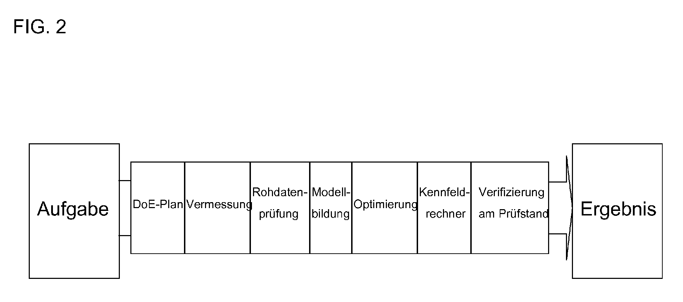

Am Beispiel des DoE-Workflows (Fig. 2) wird sogar deutlich, dass die Rohdatenplausibilisierung üblicherweise erst nach der Vermessung stattfindet. Treten während des Prüflaufs Fehler auf, die nicht über die Grenzwertüberwachung des Automatisierungssystems oder durch die DoE-Software abgefangen werden, dann läuft der Prüflauf mit diesen fehlerhaften Daten bis zum Ende weiter. Da ein Prüflauf durchaus auch mehrere Tage in Anspruch nehmen kann, entstehen durch einen nicht erkannten Fehler oder Sensorausfall erhebliche Zeit- und Kostenbelastungen.

Maßnahmen, wie gute Messausrüstung, hohe Qualität in der Signalverarbeitung oder ein stabiles Gesamtsystem verbessern zwar die grundsätzliche Systemstabilität, geben letztlich aber keinen Aufschluss über die tatsächlich vorliegende Messqualität, Signalgüte oder Plausibilität der erfassten Daten.

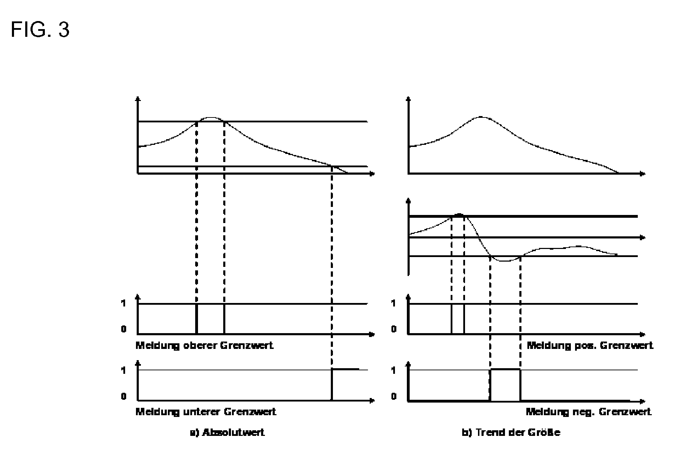

Allerdings verfügen moderne Prüfstandssysteme bereits heute schon über einige Mechanismen zur Fehlererkennung und Grenzwertüberwachung ausgewählter Messwerte (Fig. 3). Diese Mechanismen prüfen, ob Messwerte innerhalb eines definierten Gültigkeitsbereichs liegen. Die Überwachung wird in der Regel durch Grenzwerte für Prüfstand, Prüfling oder Versuch durch den Anwender auf die aktuelle Aufgabenstellung angepasst.

Bei einem DoE-Prüflauf werden z.B. die sogenannten "harten Limits" mit der Grenzwertüberwachung des Automatisierungssystems überwacht. "Harte Limits" sichern die Betriebssicherheit von Prüfling und Versuchseinrichtung ab und führen bei einer Grenzwertverletzung in der Regel zur Systemabschaltung (z.B. Öldruck- oder Drehzahlgrenzwerte). Die Überwachung der "Weichen Limits" erfolgt dagegen im DoE-Prüflauf. Sie dienen zur Bestimmung des Versuchsraums und zur Steuerung der Versuchsstrategie.

Häufig wird die Grenzwertüberwachung auch in Verbindung mit einem Soll-Ist-Vergleich angewendet. Ein klassisches Beispiel ist der Vergleich von Referenzpunkten mit aktuellen Messdaten. Hierzu kommen spezielle Datenstände zum Einsatz, für die entsprechende Sollwerte in definierten Referenzpunkten bekannt sind. Mit dieser Methode wird aber in der Regel nicht die Messdatenqualität sondern das Motorverhalten überprüft.

Grundsätzliche Voraussetzung für diese Methode ist, die messtechnische Erfassung der Prozessgröße in einem stationären Betriebspunkt und ein entsprechender Sollwert. Genauso wichtig ist die Zuordnung des Ist-Zustand zu der entsprechenden Datenreferenz. Die Grenzwertüberwachung erfolgt z.B. über Gln. 2.1

$$Sollwert - Toleranz \leq Istwert \leq Sollwert + Toleranz \qquad \text{[Gln. 2.1]}$$

Die Trendkontrolle (Fig. 3, rechtes Diagramm) ist eine besondere Art der Grenzwertüberwachung. Sie wird in der Regel für sich langsam verändernde Signale eingesetzt um z.B. rechtzeitig das Erreichen kritischer Systemzuständen zu erkennen. An Prüfständen wird diese Methode vereinzelt zur Überwachung des Langzeitverhaltens von Messgeräten (z.B. Abgasmesstechnik) oder zur Analyse von Motorreferenzpunkten (z.B. Blowby) angewendet.

Außer einer Grenzwertüberwachung erlauben die meisten Prüfstandssysteme auch die Berechnung einfacher Formeln. Hieraus resultieren die sogenannten Rechengrößen am Prüfstand. Diese Funktionalität wird z.B. zur Berechnung des spezifischen Kraftstoffverbrauchs oder anderer typischer Kennwerte verwendet. Diese Größen werden als Maß für die Prozessgüte herangezogen und geben wichtige Hinweise über den Zustand des Gesamtsystems. Übliche Kennwerte sind z.B. Wirkungsgrad, spez. Kraftstoffverbrauch, Schmiermittelverbrauch oder Blowby.

Die Berechnung von Formeln erlaubt auch einfache Plausibilitätsbetrachtungen. Ein klassisches Beispiel ist die Berechnung von $\lambda$-Brettschneider und der anschließende Vergleich mit einem redundant ermittelten Lambda (z.B. aus der ECU). Hierbei handelt es sich aber in der Regel um speziell angepasste Lösungsansätze.

Umfragen bei den Prüffeldbetreibern bzw. bei Ingenieuren aus den Prüffeldern haben gezeigt, dass bereits einige Ansätze zur Bewertung der Messdaten angewendet werden. Die Befragung hat allerdings auch ergeben, dass bei der Bewertung der Messdaten weniger die Qualität der Messdaten im Vordergrund steht, sondern eher die Bewertung des Motors (Prüfling). Vielfach werden z.B. Methoden zur Grenzwertüberwachung oder zur Referenzpunktkontrolle nur zur Bewertung des Prüflings eingesetzt. In Einzelfällen werden auch Trendanalysen oder Lambda-Vergleiche durchgeführt. Die Beurteilung von Drücken und Temperaturen erfolgt in den meisten Fällen visuell durch das Prüfstandpersonal. Die Umfrage hat weiterhin gezeigt, dass regelmäßige Plausibilitätsprüfungen mit vorgegebener Vorgehensweise die Ausnahme darstellt. Man baut in diesem Bereich auf die Kompetenz und die Erfahrung des Prüfstandpersonals und der Versuchsingenieure.

In den letzten Jahren wurden daher am Fachgebiet Verbrennungskraftmaschinen verschiedene Ansätze zur Umsetzung einer automatisierten Messdatendiagnose erarbeitet.

Nach den "Visionen zu einem Motorenprüfstand für das 21. Jahrhundert", von G. Hohenberg, Haus der Technik, Tagung, Essen, 1999, lässt sich die Diagnose für Motorenprüfstände grundsätzlich in drei Funktionssäulen aufteilen. Hierbei muss angemerkt werden, dass es sich dabei streng genommen nur um eine Fehlererkennung handelt und nicht um eine Fehlerdiagnose, da eine Diagnose die Benennung einer Fehlerursache bedeutet.

Der Gerätecheck (Säule 1) teilt sich in die Level Sensordiagnose (z.B. Kabelbrucherkennung) und Eigendiagnose der Sondermessgeräte. Die Sensordiagnose (Level 1) erfolgt mit direkt messbaren Signalen des Automatisierungssystems. Bei der Eigendiagnose von Sondermessgeräten wird auf die Rückmeldung der einzelnen Geräte zurückgegriffen. In VDI/VDE 2650 (Anforderungen an Selbstüberwachung und Diagnose in der Feldinstrumentierung) sind die Eigendiagnose von Messgeräten sowie die entsprechenden Statussignale beschrieben. Vorraussetzung ist natürlich eine ausreichende Kommunikation zwischen Prüfstandssystem und den angeschlossenen Sondermessgeräten.

Die Säule Signalgüte (Level 3) beschäftigt sich mit dem Signalverlauf und der statistische Analyse des Signalverhaltens (z.B. Rauschen).

Die dritte Säule (Level 4 und 5) beschäftigt sich mit der Plausibilität von Messwerten. Durch die Bildung analytischer und empirischer Redundanzen kann geprüft werden, ob der aktuelle Messwert zu dem gerade eingestellten Betriebspunkt des Motors passt. Die Bildung analytischer Redundanzen erfolgt dabei durch physikalische oder empirische Beziehungen, wobei Rechenwerte direkt mit Messwerten in Verbindung gebracht werden. Empirische Redundanzen basieren dagegen auf der Betrachtung von Referenzpunkten, wobei die aktuellen Messwerte mit definierten Referenzen verglichen werden.

In der Arbeit "Konzept und Umsetzung einer Messdatendiagnose an Motorenprüfständen" von Andreas Flohr, Dissertation 2005, Technische Universität Darmstadt, wurde eine Analyse der häufigsten Fehler an Motorenprüfständen durchgeführt und erstmals ein durchgängiges Konzept zur Messdatendiagnose, beispielsweise in der DE 10 2006 048730 A und der DE 10 2005 052921 A, vorgestellt. Das Konzept bezieht sich im Wesentlichen aber nur auf die dritte Säule der Fehlererkennung (Plausibilität) und vernachlässigt die Signalqualität und den Gerätecheck.

Der Ansatz von Flohr geht davon aus, dass alle notwendigen Messgrößen zur Verfügung stehen und durch eine entsprechende Parametrierung als solche auch vom System richtig erkannt und zugeordnet werden können.

Neben der Fehlererkennung wurde auch ein Algorithmus zur Identifizierung fehlerhafter Kanäle eingebaut, der sich als wirksame Hilfestellung bei der Diagnose der tatsächlichen Fehlerursache darstellte. Dieser Ansatz ist jedoch nur schwer erweiterbar, relativ kompliziert und rechenintensiv. Außerdem wird die Fehlersignifikanz nicht berücksichtigt. Dies führt dazu, dass auch einzelne Extremwerte zu einer entsprechenden Anzeige führen.

Abschließend kann bemerkt werden, dass sich der Ansatz nach Flohr gut zur Analyse grundlegende Zusammenhänge, basierend auf chemischen und physikalischen Zusammenhängen eignet. Nachteilig ist, dass die entwickelte Software nur in Verbindung mit einer speziellen Schnittstelle angewendet werden kann und dass keine Bewertung der Signalqualität erfolgt.

Im Rahmen des EU-Forschungsprojektes AMPA (Automatic Measurement Plausibility and Quality Assurance) wurde u.a. der Bereich der physikalischbasierten Fehlererkennung bearbeitet. Ziel des Projekts war die Neuentwicklung und die Optimierung bestehender Methoden zur Fehlerdiagnose. Insbesondere sollten anwendungsorientierte Prüfregeln und Modelle eingebracht und mit generischer Prüfmethodik in einem Prototyp kombiniert werden. Anschließend sollte eine Alltagserprobung im Prüffeld erfolgen um den Nachweis zu erbringen, dass die Ziele "Verkürzung von effektiven Motor-Prüfzeiten und Prüfkosten" sowie "verbesserte und nachweisbare Datenqualität" erfüllt sind. Hierzu wurde die Fehlerdiagnose als Prozess betrachtet, bei dem unter Berücksichtigung mehrerer Messkanäle für jeden Messpunkt die Teilschritte Modellwertberechnung, Fehlererkennung und Fehlerergebnisabgleich durchgeführt wurden. Für Prüfungen durch automatisch gelernte Modelle kamen die automatische Modellbildung und Modellanpassung hinzu. Ziel war die Entwicklung einer Strategie, die eine bestmögliche Synergie zwischen menschlicher Expertise und automatisch erlernten Erfahrungswerten ermöglicht. Unter diesem Gesichtspunkt kamen physikalische, konfigurierbare Modelle genauso wie Parameterschätzer oder Black-Box-Modelle zum Einsatz. Für die Modellierung wurden verschiedene statistische und Fuzzy-Logik-Ansätze untersucht und implementiert. Die Black-Box-Modelle sollten dagegen kennfeldbasierte Modelle für das fehlerfreie Systemverhalten abbilden.

Der beschriebene Ansatz sollte die Fehlererkennung mit physikalisch parametrierbaren Experten-Modulen und mit automatisch trainierten Neuronetz-Modulen verbinden, um ohne weiteren Parametrieraufwand viele Messkanäle in die Diagnose einzubeziehen.

Die Aufgabe der vorliegenden Erfindung war es daher, den gestiegenen Anforderungen moderner Prüffelder gerecht zu werden und eine zentrale und allgemein anwendbare Messdatendiagnose für Motorenprüfstände zu entwickeln. Ziel der vorliegenden Arbeit ist daher auch die Entwicklung eines Diagnosesystems, das beliebig viele Messkanäle mit geringem Aufwand gleichzeitig überwachen kann.

Neben einer robusten und frühzeitigen Fehlererkennung muss das System schnell auf unterschiedliche Prüfstände, Prüflinge oder Prüfaufträge einstellbar sein.

Die Verknüpfung der Messwerte mit den Diagnoseergebnissen ist dabei genauso wichtig wie die frühzeitige Fehlererkennung und die Bestimmung der fehlerhaften Messkanäle.

Unter diesem Aspekt besteht die Aufgabe der Zentralisierung darin, bekannte aber im Prüfstandssystem verteilte Informationen wie Motortyp, Kraftstoffart oder Betriebsart automatisch zu bündeln und in die Diagnose mit einzubeziehen.

Für einen breiten Einsatz im Prüffeld ist neben der technischen Funktionalität auch die Akzeptanz beim Anwender von wesentlicher Bedeutung. Das heißt, dass anwenderspezifische Aspekte wie einfache Bedienbarkeit und eine gute Ergebnisdarstellung bei der Umsetzung des Diagnosewerkzeugs berücksichtigt werden müssen.

Das Ziel der vorliegenden Arbeit lässt sich somit in die vier Teilbereiche Konzeptentwicklung, Methodenentwicklung, Parametrierung und Datenmanagement und Ergebnisverwaltung unterteilen.

In der Konzeptphase ist zu untersuchen, wie ein zentrales Diagnosesystem in ein Prüfstandssystem integriert werden kann. Für den gewählten Ansatz muss im Anschluss eine Analyse möglicher Engpässe in Bezug auf Systemressourcen, Datenzugriff und Systemsicherheit erfolgen.

Aus methodischer Sicht besteht die wichtigste Aufgabe dieser Arbeit in der Entwicklung von Methoden zur Bewertung der Signalqualität und des Gerätechecks.

Für die Methoden der Fehlererkennung sind gegebenenfalls entsprechende Freigabebedingungen zu formulieren. Die Erkennung und Steuerung der Freigabebedingungen ist ebenfalls Bestandteil der Methodenentwicklung.

Besonders wichtig ist, dass die Fehlererkennung so aufgebaut wird, dass neue Methoden problemlos in das bestehende Diagnosesystem eingebaut werden können. Gleiches gilt für die Auswertung der Fehlererkennung. Die Entscheidungslogik zur Auswertung der Fehlererkennung muss zu einer sicheren und leicht interpretierbareren Diagnoseaussage führen und eine Hilfestellung bei der Bestimmung der Fehlerursache darstellen.

Die Parametrierung und das Datenmanagement sind für die Handhabung und den flexiblen Einsatz des Diagnosesystems wichtig. Aus Zeit und Akzeptanzgründen muss der Parametrieraufwand so gering wie möglich gehalten werden.

Neben der Auswahl der zu überwachenden Messkanäle ist eine automatische Auswahl der durchführbaren Methoden genauso wichtig wie die manuelle Deaktivierung einzelner Methoden durch den Anwender.

Zur Verwaltung der Diagnosedaten ist ein entsprechendes Datenmanagement zu entwerfen. Die Visualisierung des Diagnoseergebnisses ist ebenfalls Bestandteil des Datenmanagements. Bei der Ergebnisdarstellung ist darauf zu achten, dass der Anwender genau die Informationen bekommt um einen Fehler und die entsprechende Fehlerursache richtig interpretieren zu können.

Bei der Archivierung ist darauf zu achten, dass die Diagnoseergebnisse mit den Messdaten und den Randbedingungen abgespeichert werden. Anwendereingriffe wie z.B. die Deaktivierung einzelner Fehlererkennungsmethoden müssen ebenfalls dokumentiert werden. Hierdurch wird sichergestellt, dass auch bei einer späteren Auswertung der Messdaten immer eine Information zur Datenqualität mitgeführt wird.

Die Umsetzung der oben genannten Teilaufgaben führt zu einer objektiven und automatischen Gesamtbeurteilung des Prüfstandssystems. Die Erhöhung der Prüfstandsverfügbarkeit wird durch entsprechende Reaktionen des Prüfstandspersonals realisiert. Ein automatisches Eingreifen des Diagnosesystems ist an dieser Stelle ausdrücklich nicht erwünscht.

Die Umsetzung der genannten Aufgaben führt zu einer geplanten und zielorientierten Qualitätsbewertung von Messdaten und Prüfstandssystemen. Hieraus kann ein standardisiertes Qualitätssiegel für die Messergebnisse abgeleitet werden.

Zur Lösung der oben definierten Aufgaben ist das Verfahren zur Analyse und Bewertung von Messdaten eines Messsystemes dadurch gekennzeichnet, dass die Rohdaten des Messkanals einer Fehlerisolations-Stufe und anschließend einer Fehlerklassifikations-Stufe zugeführt werden, und dass anschließend ein Maß für die Güte der Messdaten des jeweiligen Messkanals ermittelt wird.

Gemäß einer vorteilhaften Ausführungsform ist vorgesehen, dass die Rohdaten in der Fehlerisolations-Stufe zuerst einer Fehlererkennungs-Stufe zugeführt werden.

Eine weitere Variante sieht vor, dass die Daten nach Verarbeitung in der Fehlerisolations-Stufe einer Fehleridentifikations-Stufe innerhalb der Fehlerklassifikations-Stufe zugeführt werden.

Vorteilhafterweise werden die Rohdaten zeitrichtig aufgezeichnet und je nach Bedarf der Fehlerisolations-Stufe bzw. deren Fehlererkennungs-Stufe zugeführt.

Dabei kann vorteilhafterweise weiters vorgesehen sein, dass die Fehlerisolations-Stufe bzw. deren Fehlererkennungs-Stufe eine Hochfrequenz-Signalanalyse der Rohdaten durchführt.

Gemäß einem weiteren vorteilhaften Erfindungsmerkmal ist das Verfahren dadurch gekennzeichnet, dass das aktuelle Maß für die Güte der Messdaten eines beliebigen Messkanals mit einem vorgebbaren Grenzwert verglichen und dessen Unterschreitung zur Anzeige gebracht wird.

Allenfalls kann auch vorgesehen sein, dass ein chronologisches Protokoll über den Verlauf der Maße für die Güte der Messdaten generiert und zur Anzeige gebracht wird.

Eine bevorzugte Ausführungsform der Erfindung sieht vor, dass der aktuelle Status der Fehlerisolations-Stufe ausgelesen und zur Anzeige gebracht wird.

Vorteilhafterweise sind Betriebsmodi Stillstandsfehlererkennung, zyklische Online-Fehlererkennung (ZOF) und messsynchrone Fehlererkennung (MSF) vorgesehen.

Dabei sieht eine besonders vorteilhafte Variante vor, dass die Betriebsmodi einzeln oder parallel vorgesehen sein können, insbesondere die zyklische Online-Fehlererkennung (ZOF) und messsynchrone Fehlererkennung (MSF).

Die Vorrichtung zur Analyse und Bewertung von Messdaten eines Messsystems, umfassend eine Einheit für die Bewertung der Messdaten zumindest eines Messkanals des Prüfstandes zu jedem beliebigen Zeitpunkt nach mehreren vorgebbaren Kriterien, ist zu Lösung der oben dargelegten Aufgabenstellung gekennzeichnet durch einen Eingang für die Rohdaten des Messkanals, eine Einheit, in welcher eine Fehlerisolations-Stufe und anschließend eine Fehlerklassifikations-Stufe implementiert sind, sowie einem Ausgang für ein Maß für die Güte der Messdaten des jeweiligen Kanals.

Vorteilhafterweise ist eine Ausführungsform dadurch gekennzeichnet, dass in der Fehlerisolations-Stufe eine Fehlererkennungs-Stufe mit einem Eingang für die Rohdaten implementiert ist.

Eine weitere vorteilhafte Ausführungsform der Erfindung ist dadurch gekennzeichnet, dass der Ausgang der Fehlerisolations-Stufe mit einem Eingang einer innerhalb der Fehlerklassifikations-Stufe implementierten Fehlererkennungs-Stufe verbunden ist.

Weiters kann vorgesehen sein, dass ein Ringspeicher für die zeitrichtige Aufzeichnung der Rohdaten vorgesehen und mit dem Eingang der Fehlerisolations-Stufe bzw. deren Fehlererkennungs-Stufe zur Abfrage durch diese Stufe(n) verbunden ist.

Allenfalls kann auch vorgesehen sein, dass in der Einheit mit der Fehlerisolations-Stufe bzw. deren Fehlererkennungs-Stufe eine Hochfrequenz-Signalanalyse-Einrichtung für die Rohdaten vorgesehen ist.

Eine weitere Ausführungsform der Erfindung ist dadurch gekennzeichnet, dass ein frei wählbarer Grenzwert für das Maß für die Güte der Messdaten eines beliebigen Messkanals abgelegt ist, und dass eine Vergleichslogik vorgesehen ist, die das aktuelle Maß mit dem Grenzwert vergleicht und dessen Unterschreitung signalisiert, wobei dieses Signal vorzugsweise eine Anzeigeeinrichtung ansteuert.

Gemäß einer weiteren Variante der Erfindung kann ein auslesbarer Speicherbereich für ein chronologisches Protokoll über den Verlauf der Maße für die Güte der Messdaten vorgesehen sein.

Schließlich kann auch vorgesehen sein, dass eine Visualisierung für den aktuellen Status der Fehlerisolations-Stufe vorgesehen und abrufbar ist.

Unter Verwendung statistischer und physikalischer Verfahren gelang die Entwicklung einer signalbasierten Messdatendiagnose zur Bewertung und Dokumentation der Messqualität an Motorenprüfständen. Die Methode setzt sich aus den Bereichen Signalqualität, Plausibilität und Gerätecheck zusammen und konnte als virtuelles Gerät in das Prüfstandssystem Puma Open implementiert werden. Die Methodenentwicklung in den Bereichen Signalanalyse und Geräteprüfung sowie Ansätze zur instationären Fehlererkennung standen dabei im Vordergrund der Arbeit, da in diesen Bereichen keine brauchbaren Ansätze vorhanden waren.

Das erarbeitete Verfahren zur Bewertung der Signalqualität entstand aus einer Kombination statistischer Hypothesentests mit der Analyse des Signal-Rausch-Abstands. Da statistische Verfahren unabhängige und normalverteilte Zufallsstichproben voraussetzen, war eine Überprüfung dieser Randbedingungen durch eine Korrelationsanalyse sowie durch Lage- und Anpassungstests notwendig. Die eigentliche Bewertung der Signalqualität erfolgt anschließend durch das Signal-Rausch-Verhältnis und durch Qualitätsregelkarten. Am Ende werden alle Teilergebnisse durch eine speziell hierfür entwickelte Logik zum Gesamtergebnis Signalqualität zusammengefasst.

Im Rahmen der vorliegenden Arbeit konnte außerdem erstmals ein Beobachtersystem zur instationären Fehlererkennung auf Basis neuronaler Netze (ARTMAP) vorgestellt und in einem Prototyp umgesetzt werden. Die Erprobung erfolgte offline mit simulierten NEDC-Abgastestzyklen. Das Beobachtersystem war dabei bereits nach einmaliger Präsentation eines neuen Datenmusters in der Lage dieses zu erlernen. Bei erneuter Präsentation eines ähnlichen Musters erfolgte eine entsprechende Klassifizierung, die zu guten Ergebnissen bei der Vorhersage der erwarteten Zielgröße führte.

Für die automatische Gesamtauswertung der Fehlererkennung wurde ein neues, mathematisch basiertes Verfahren entwickelt, mit dem das Ergebnis der Fehlererkennung auf die beobachteten Messsignale zurückgeführt werden konnte. Hierzu musste eine Kenngröße (die Methodentrennschärfe) definiert werden, die bestimmt wie gut eine Methode fehlerhafte Messkanäle identifizieren kann. Die Kombination aus Stochastik und Methodentrennschärfe führt zum Ergebnis der Fehlerisolation. Die Zusammenführung von Fehleridentifikation und Fehlerklassifikation ergab anschließend über einen Entprellalgorithmus eine eindeutige Aussage zur Fehlersignifikanz.

Die Entwicklung der Auswertelogik und die Einführung der Fehlerentprellung führten zu einer übersichtlichen Fehlerdarstellung und Dokumentation. Besonders wichtig ist in diesem Zusammenhang das eingeführte Qualitätssiegel für geprüfte Messdaten. Dieses Siegel wird an alle geprüften Messdaten angehängt. Damit ist eine sichere redundante Datennutzung möglich. Zusätzlich wird die Art und Weise, wie die Daten geprüft wurden, transparent und reproduzierbar dokumentiert.

In der nachfolgenden Beschreibung soll unter Bezugnahme auf die beigefügten Zeichnungen die Erfindung näher erläutert werden.

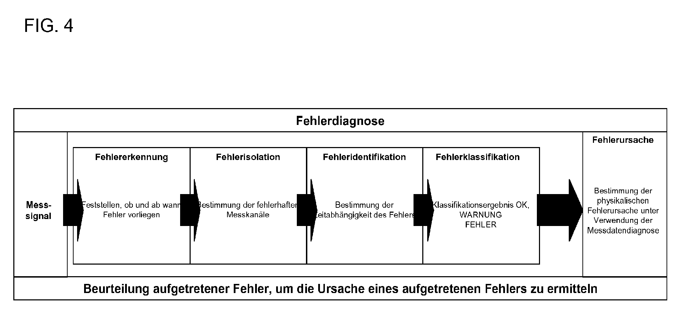

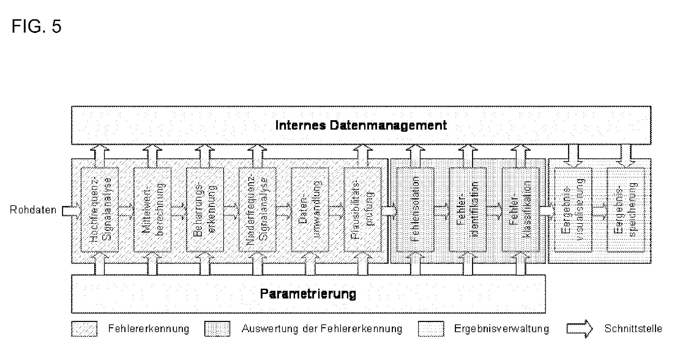

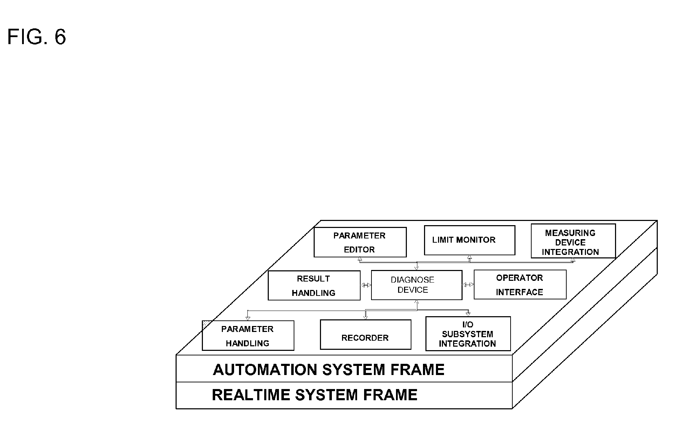

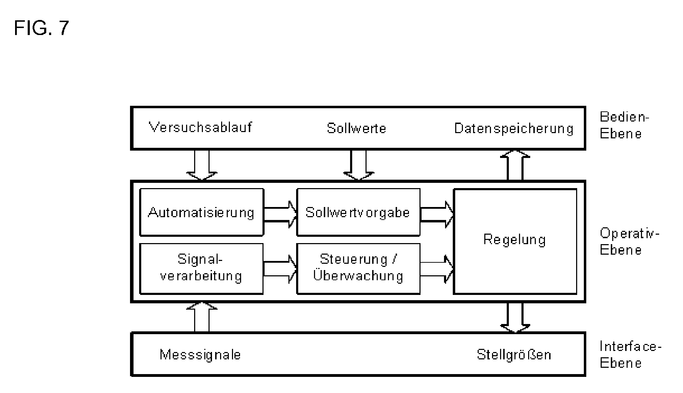

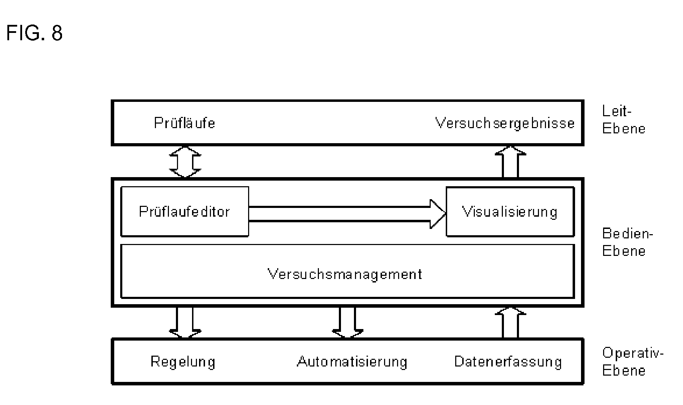

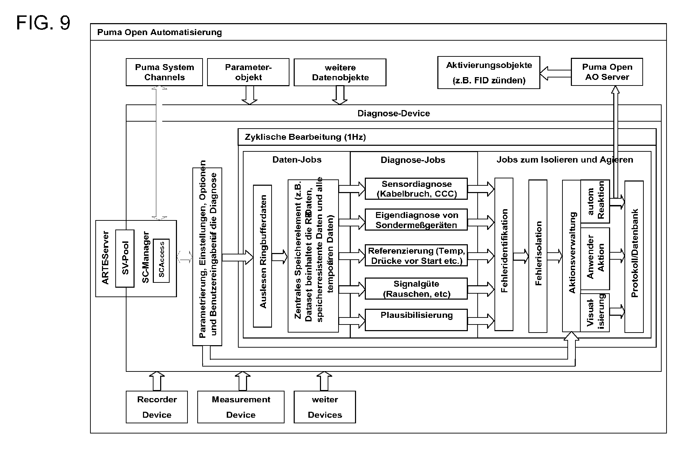

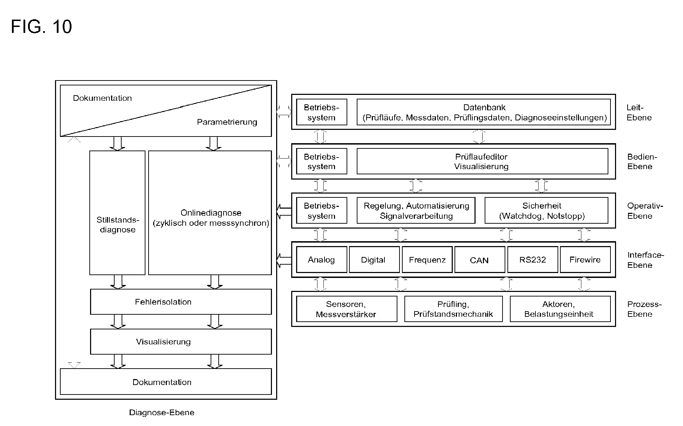

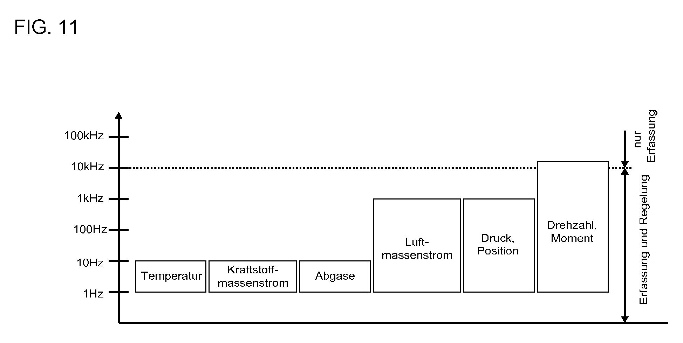

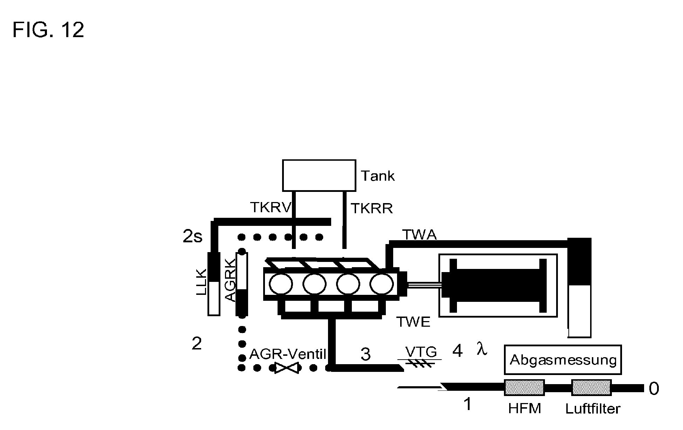

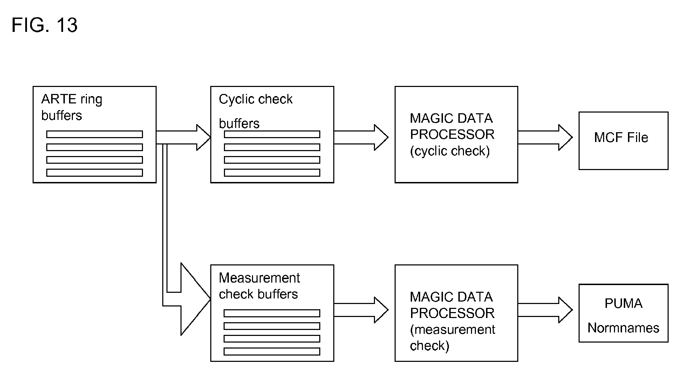

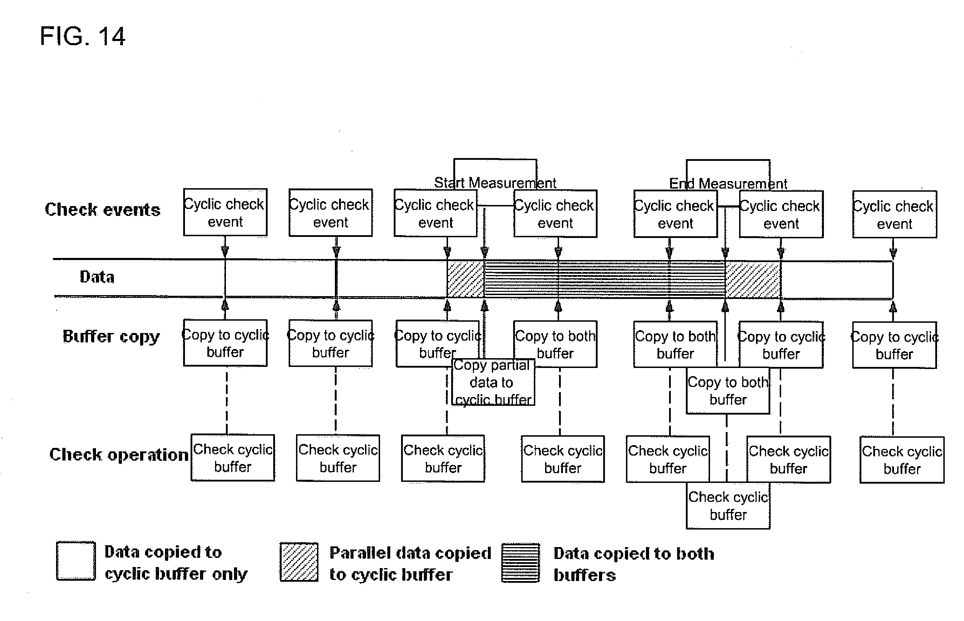

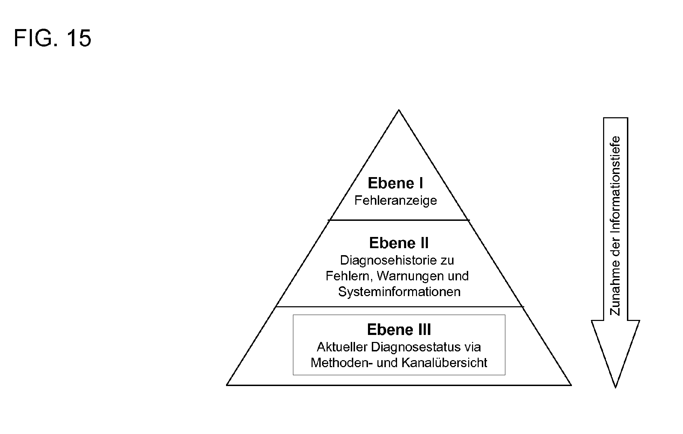

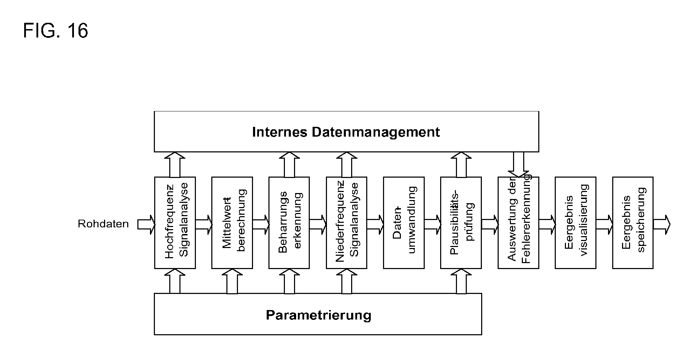

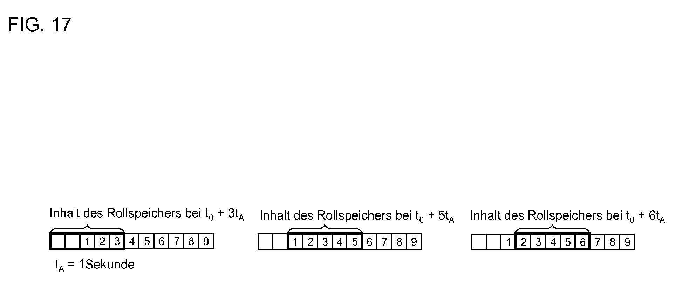

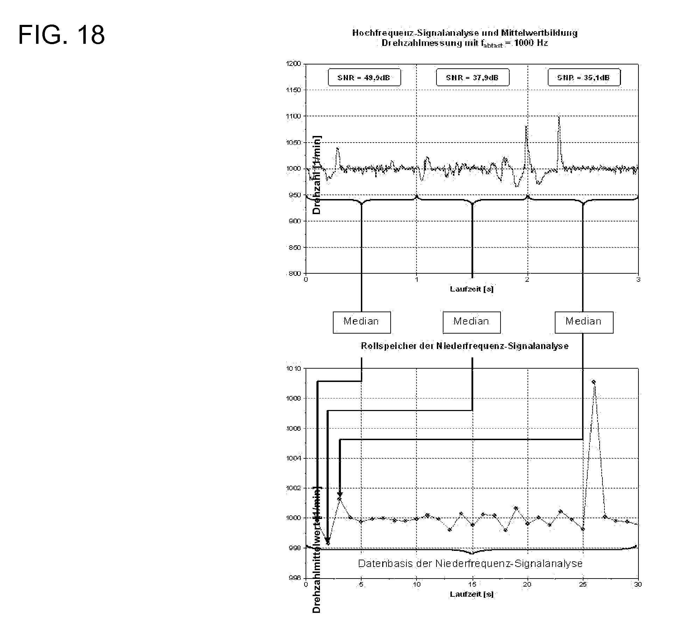

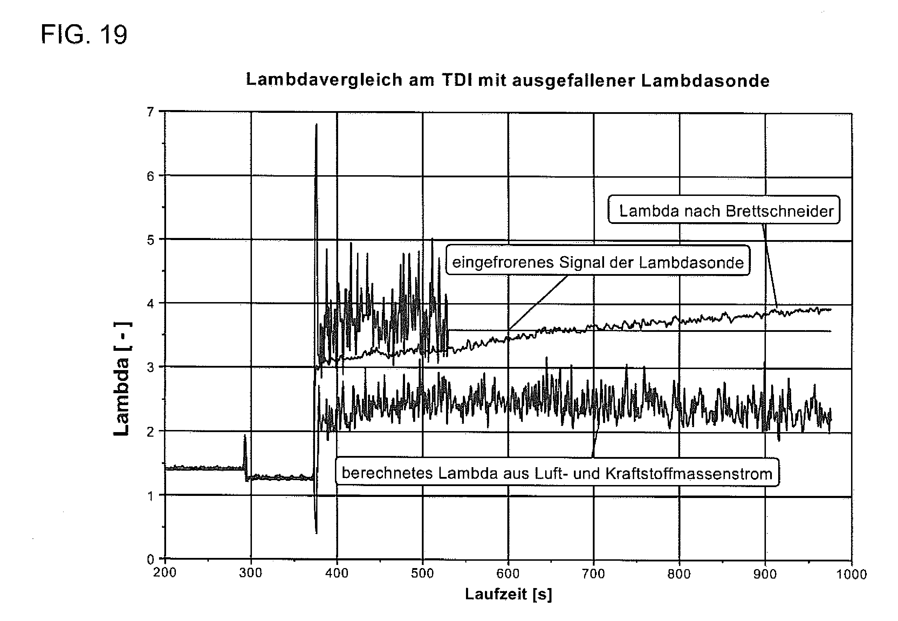

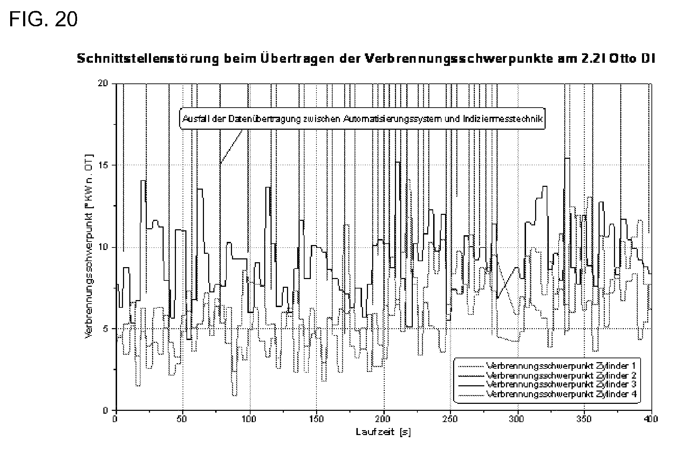

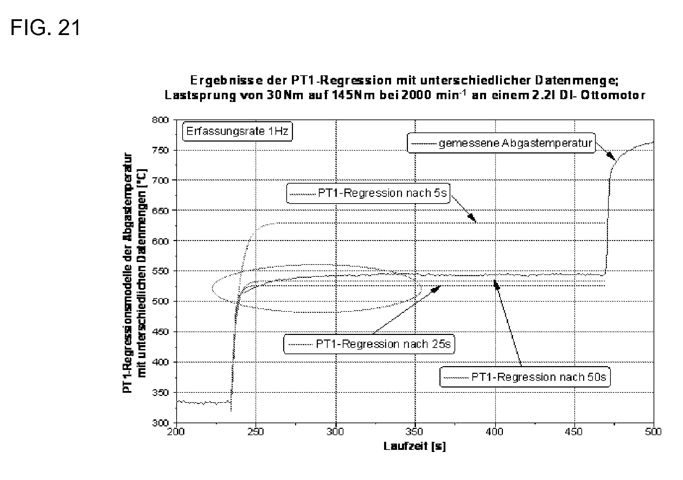

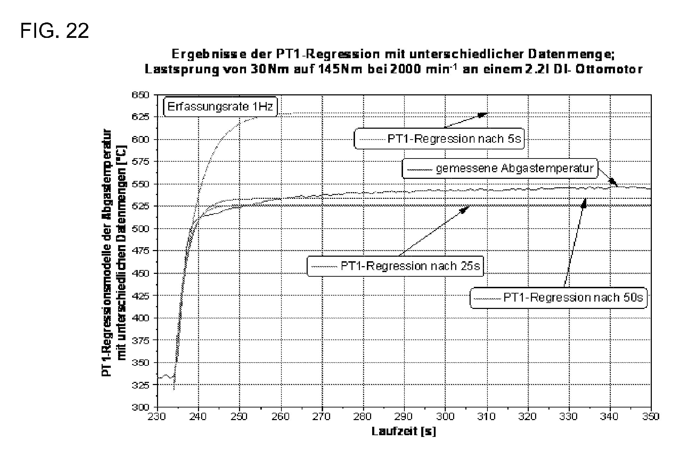

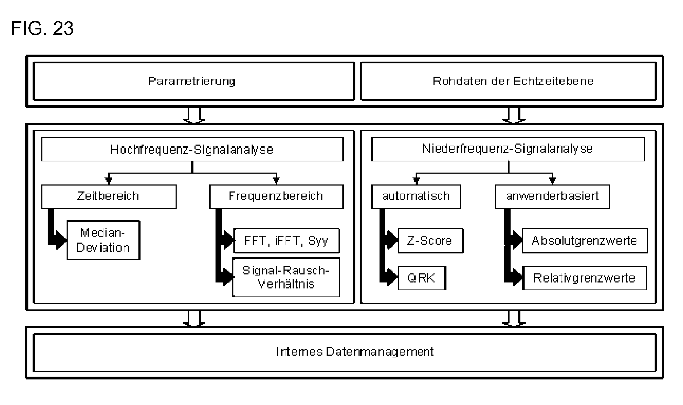

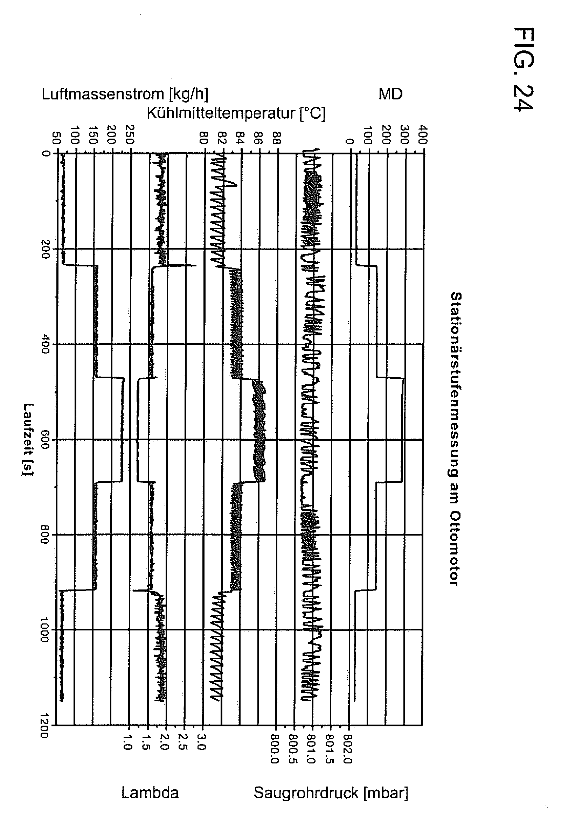

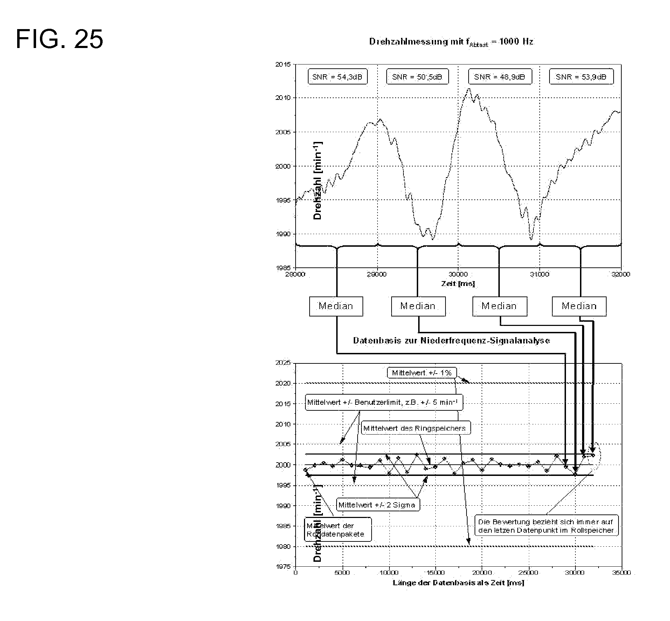

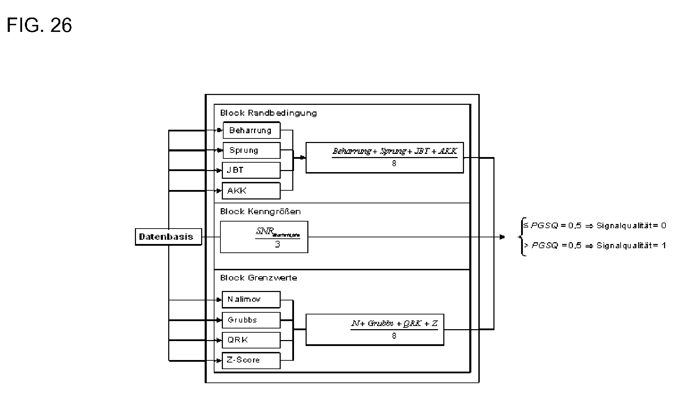

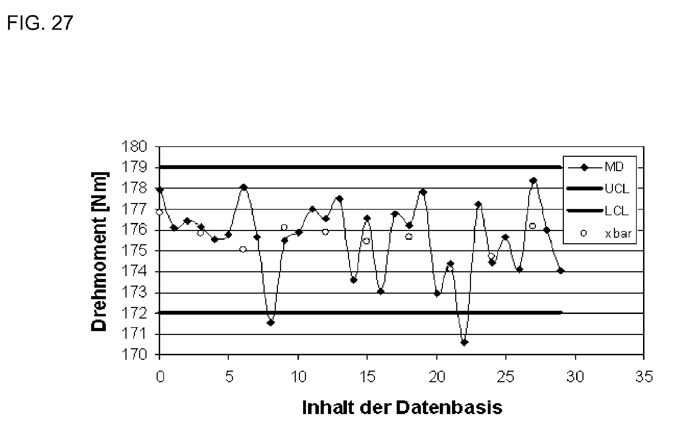

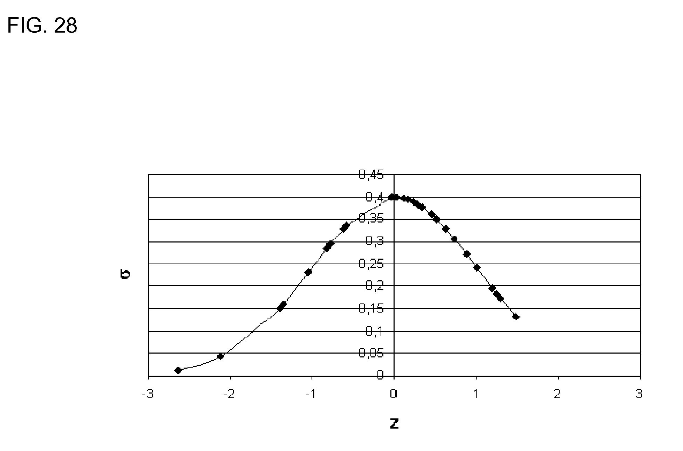

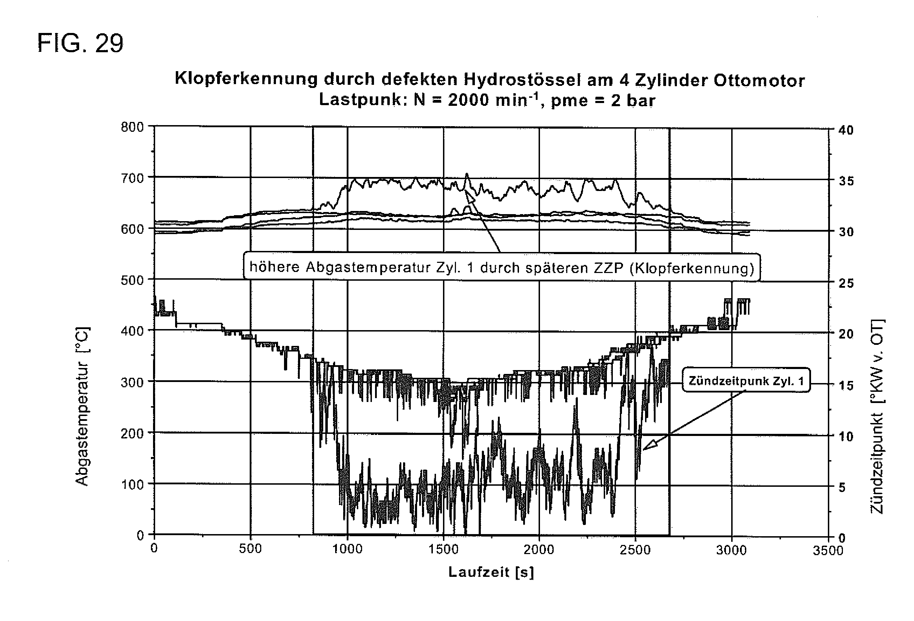

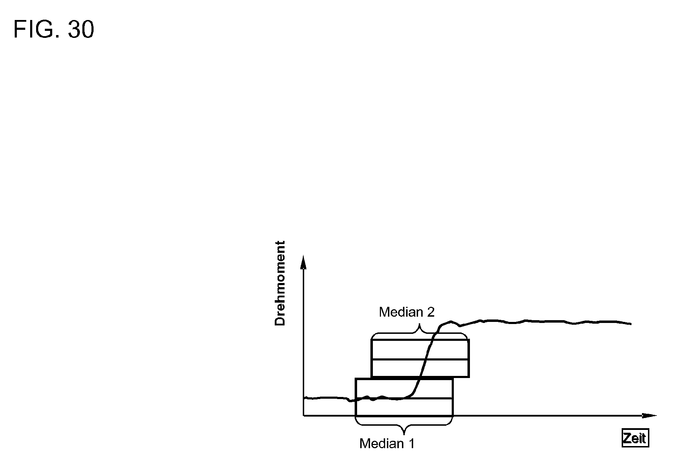

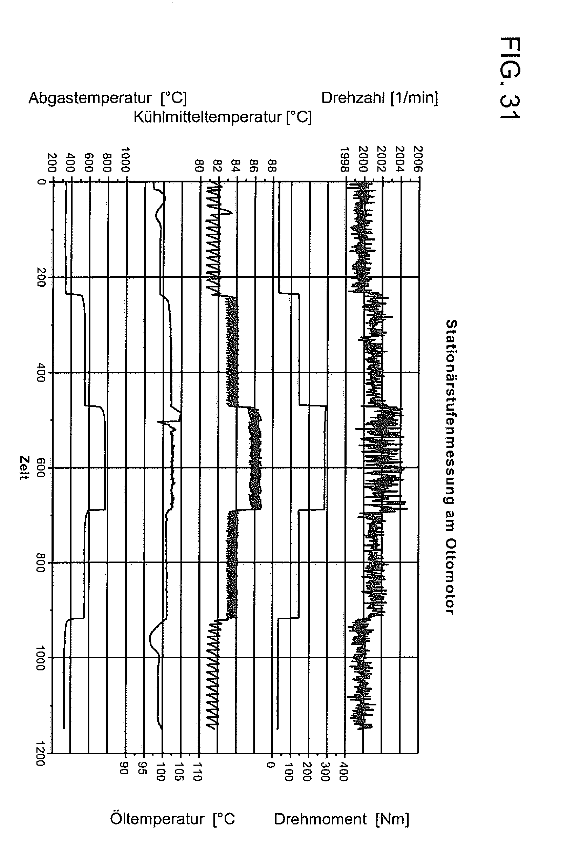

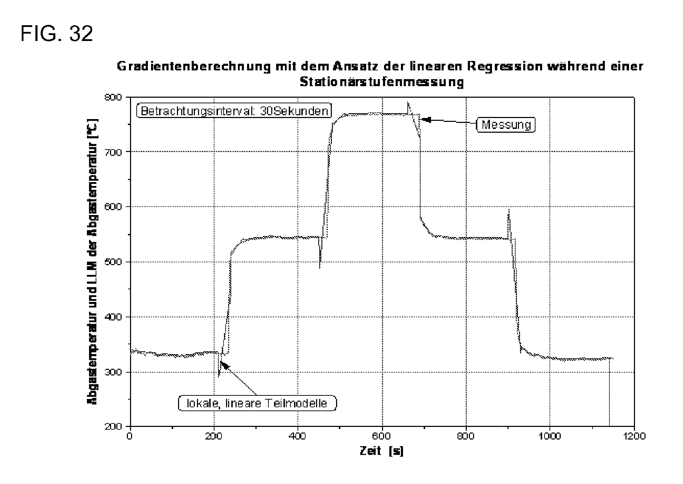

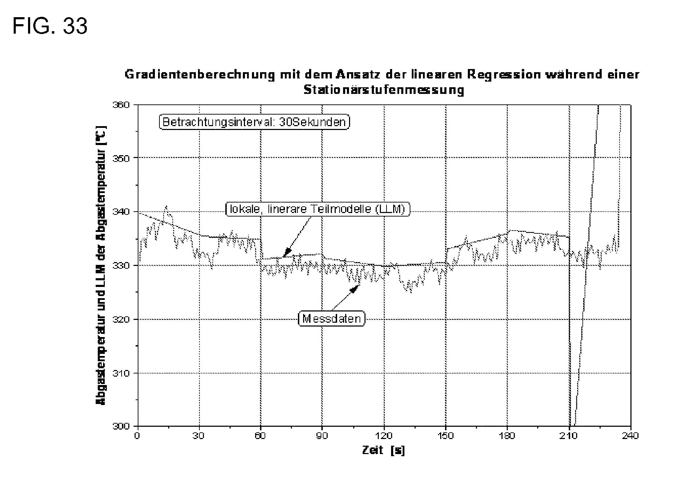

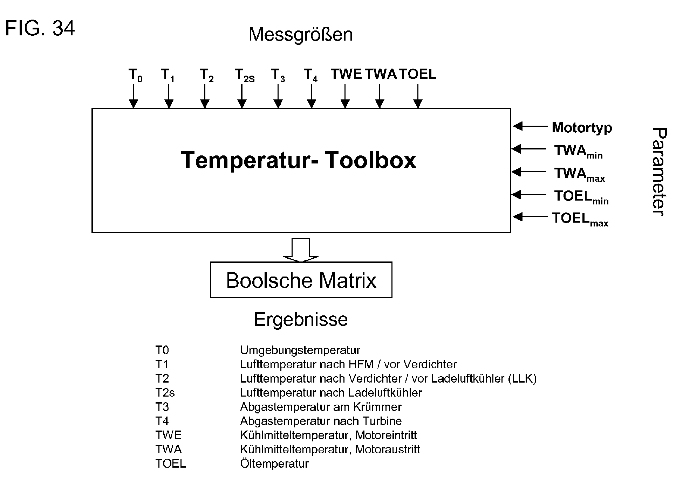

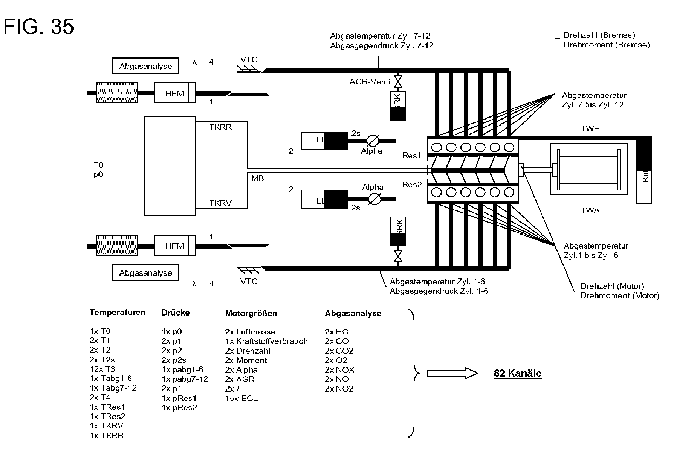

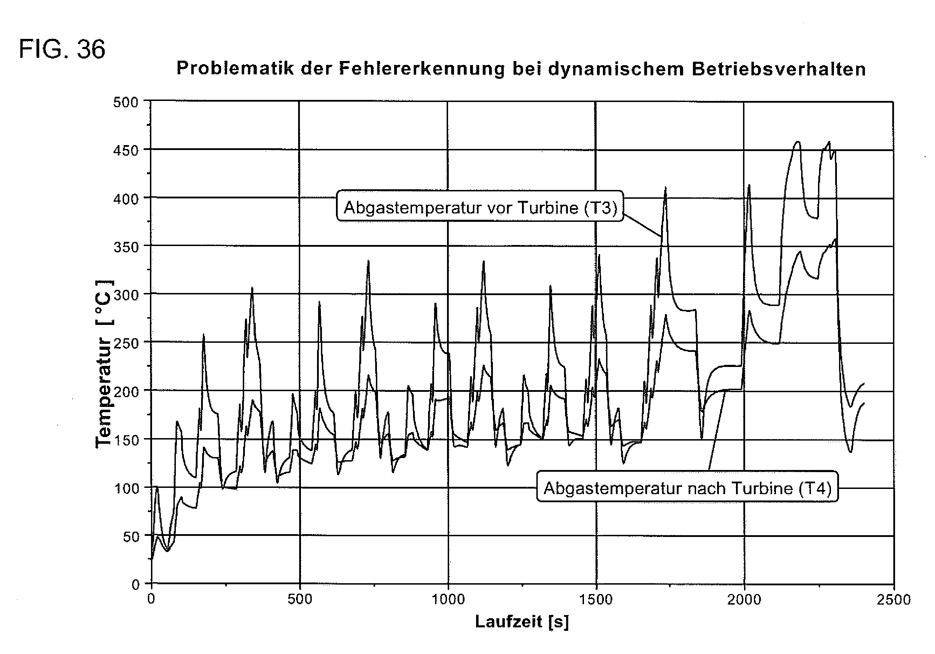

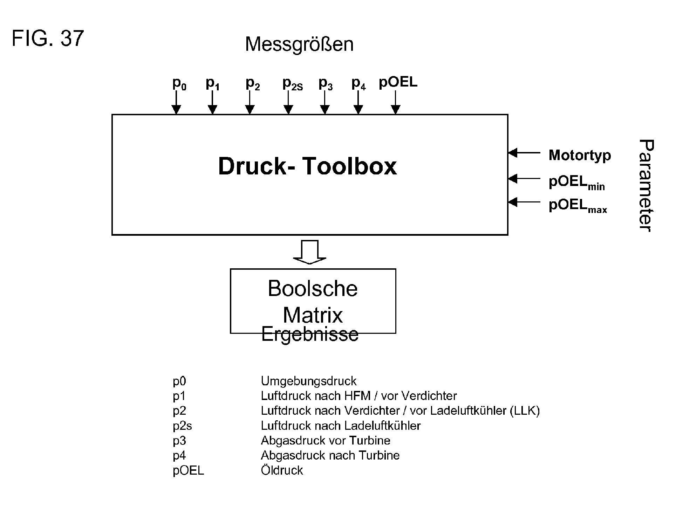

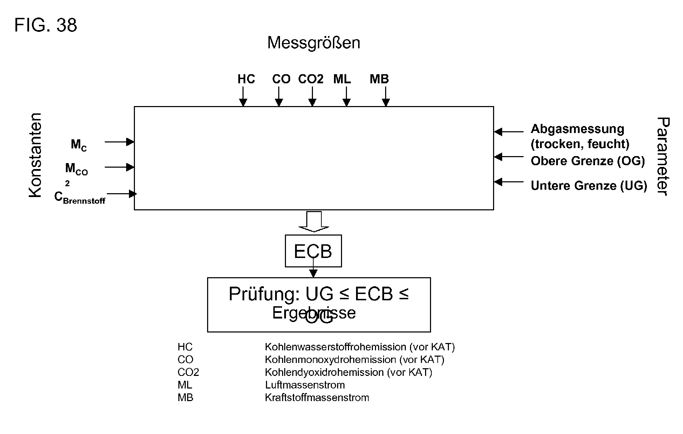

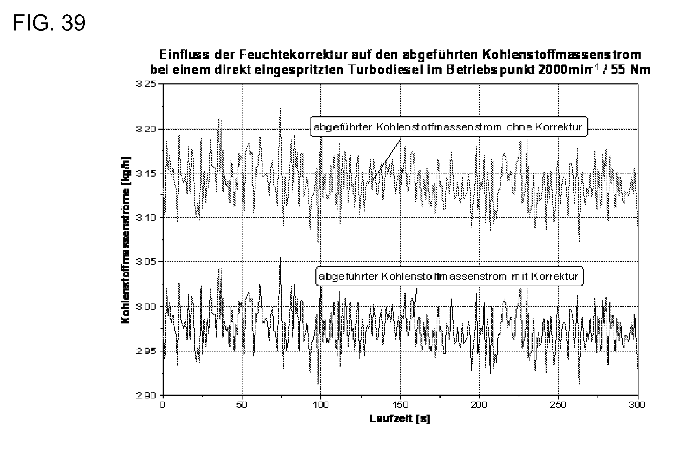

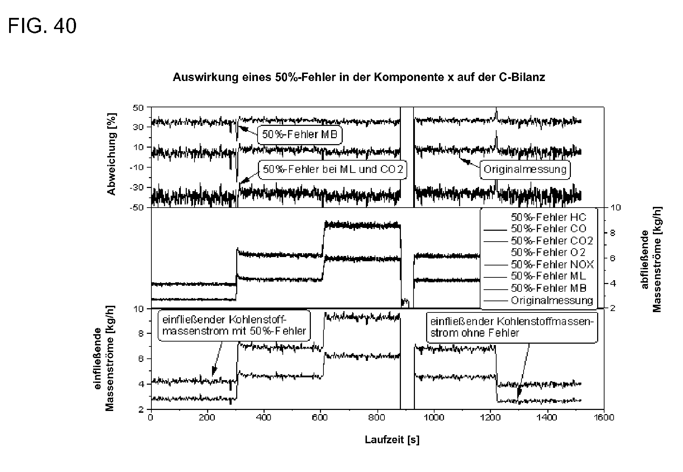

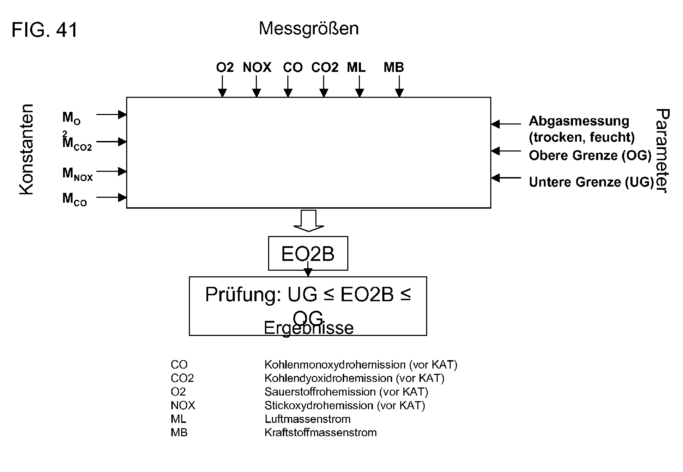

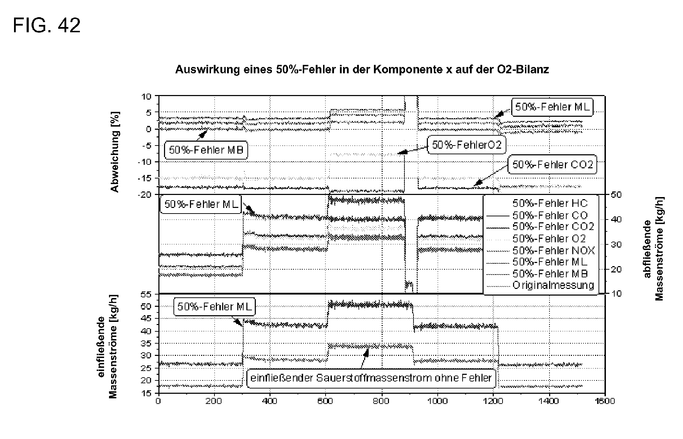

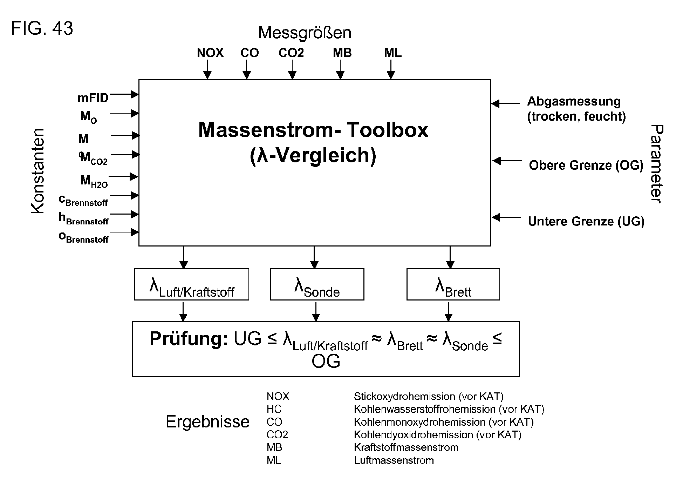

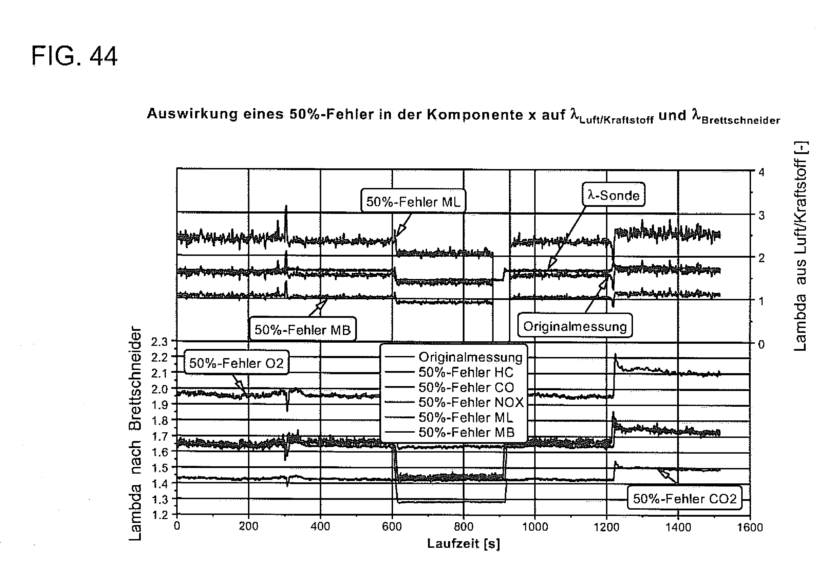

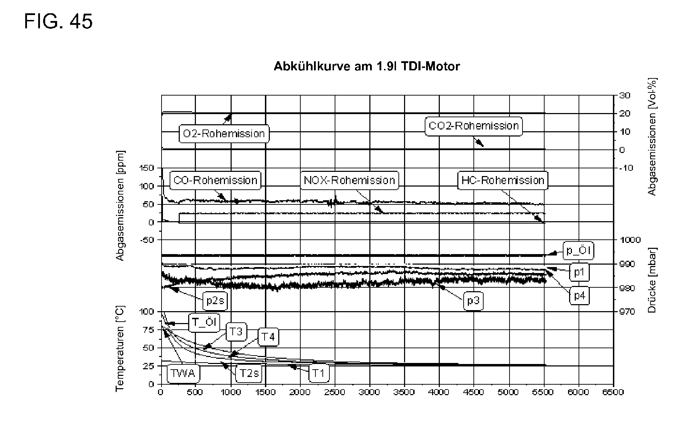

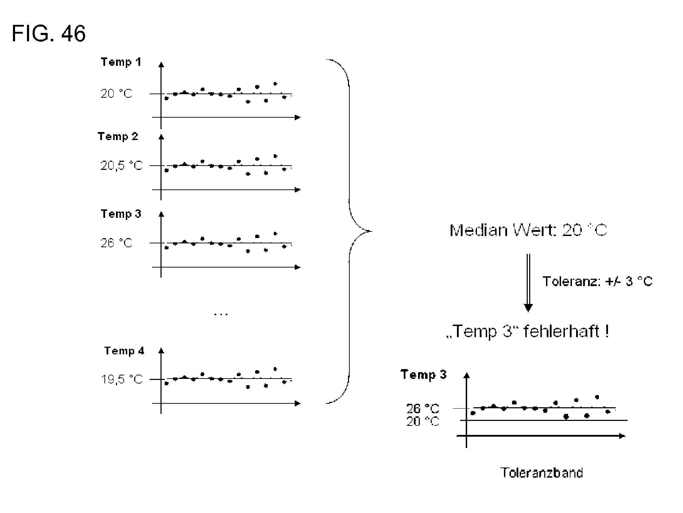

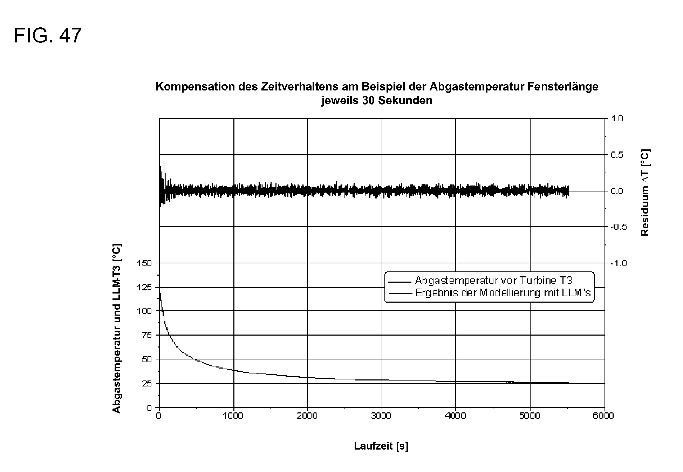

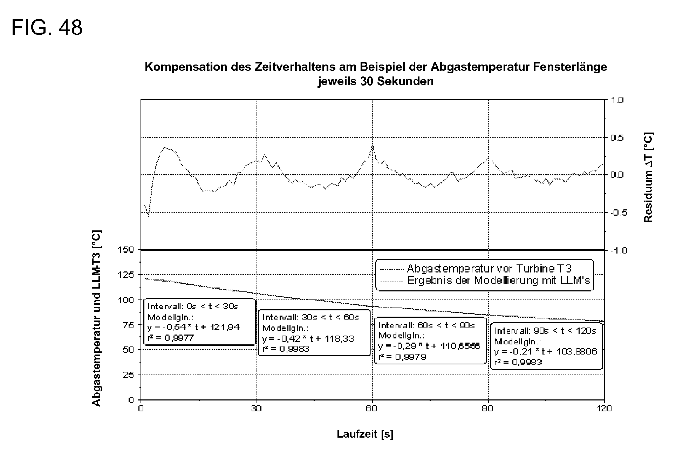

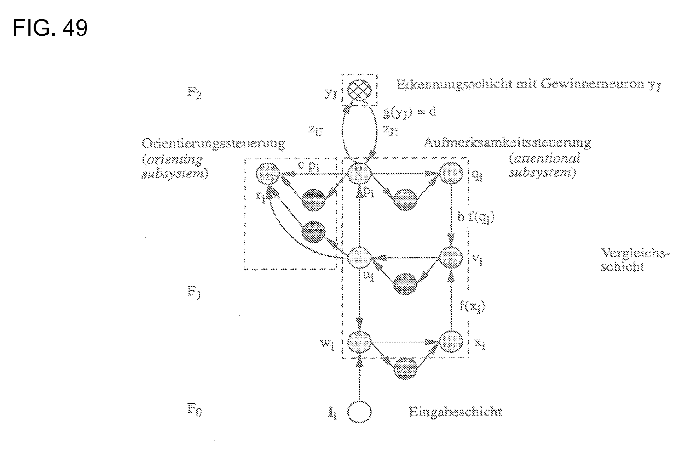

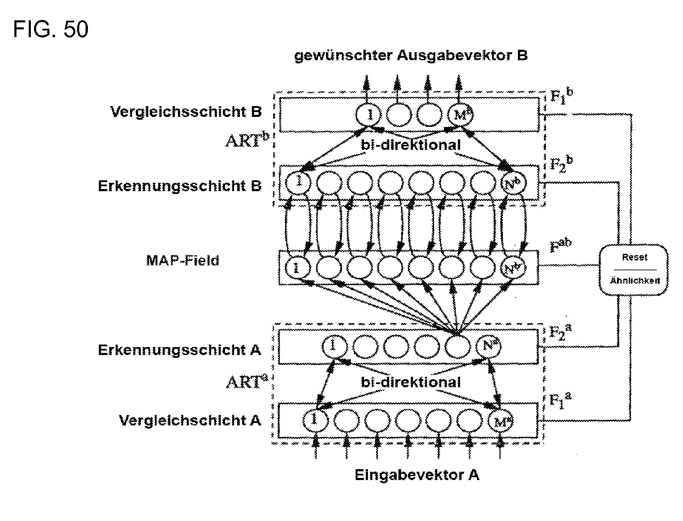

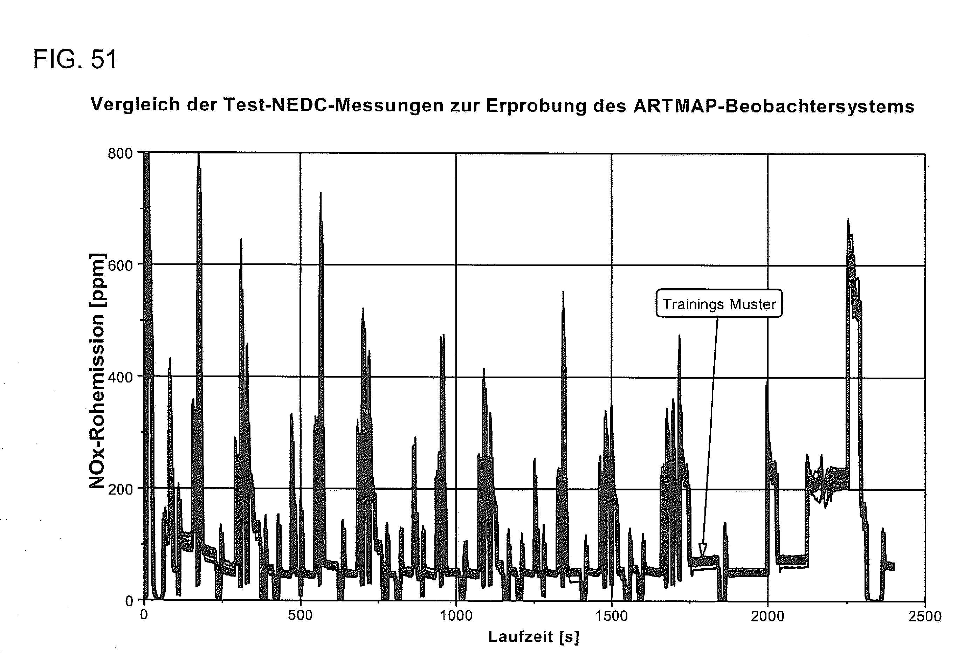

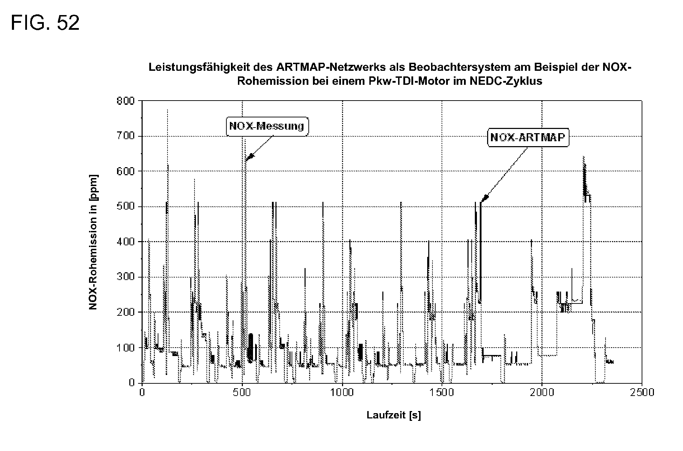

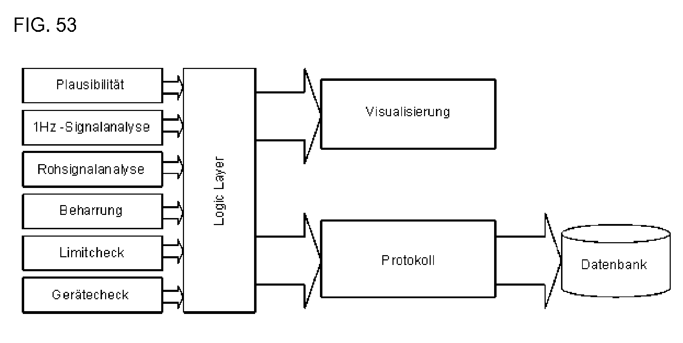

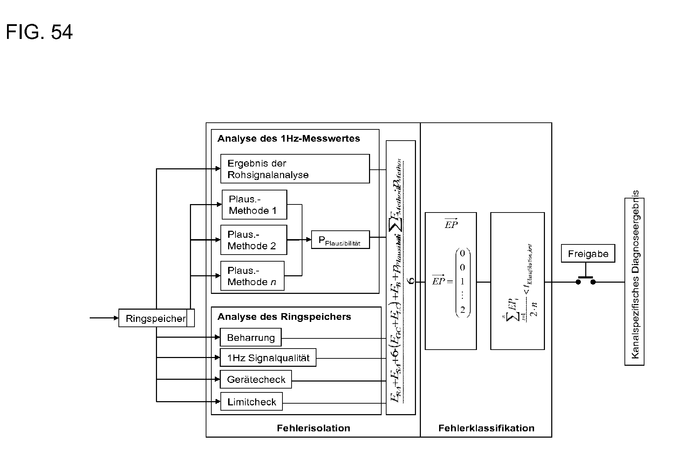

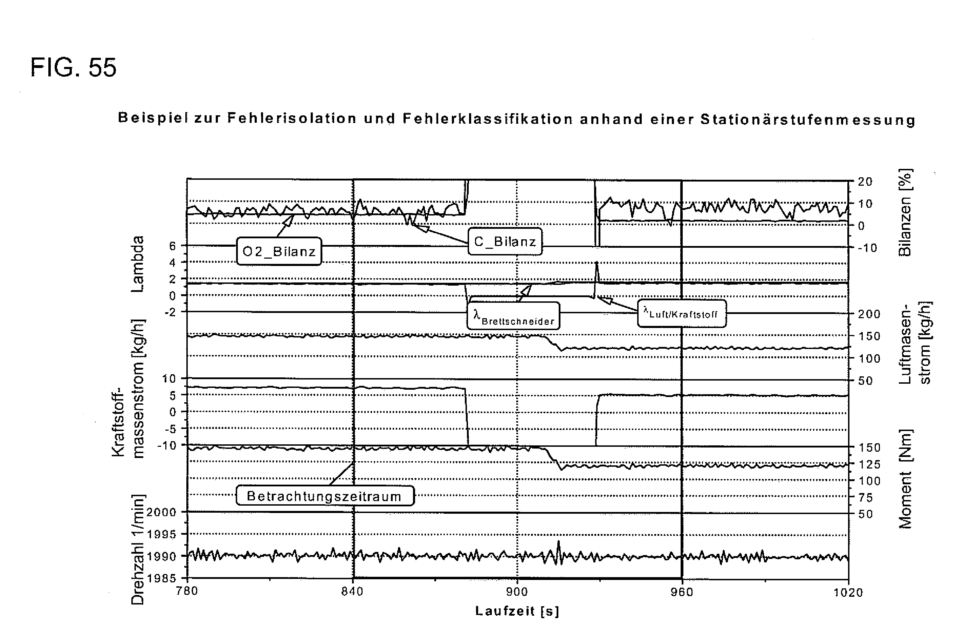

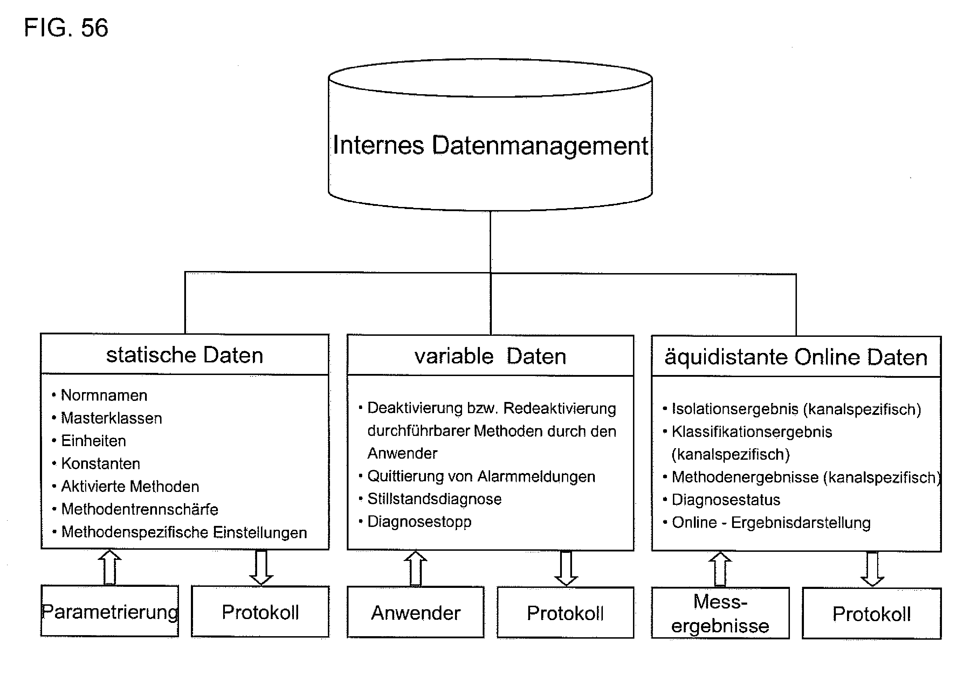

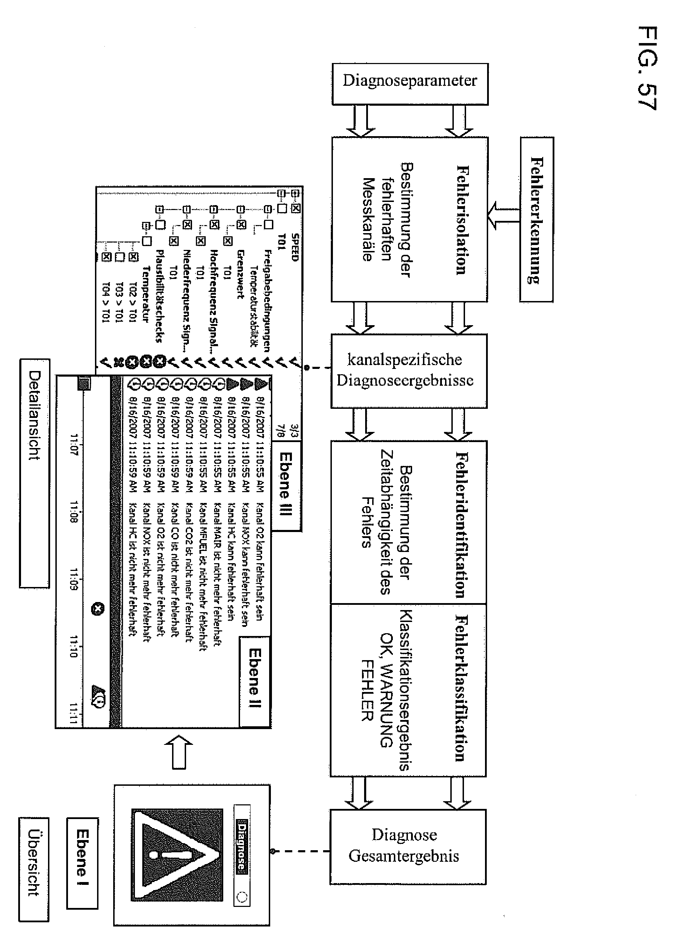

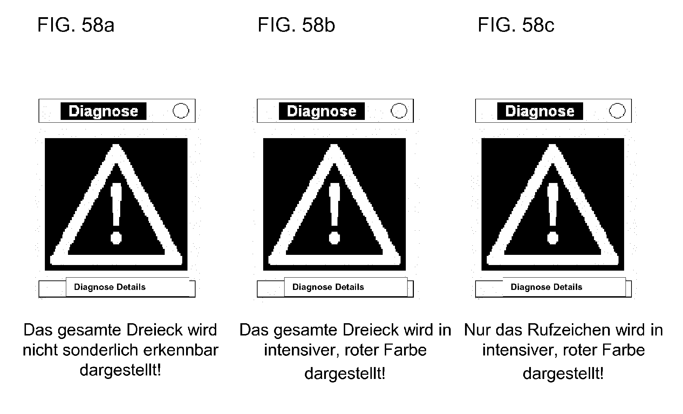

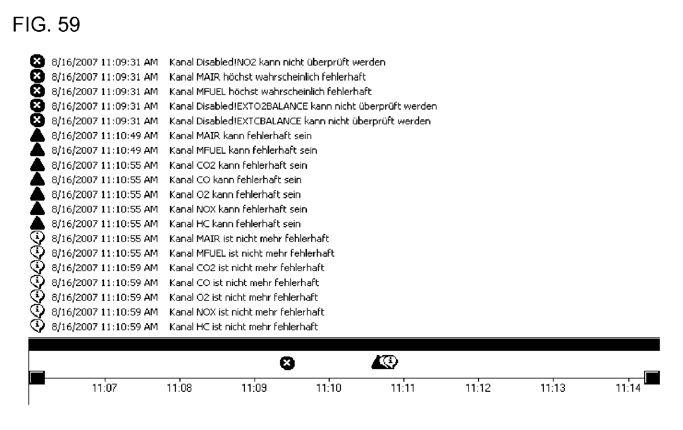

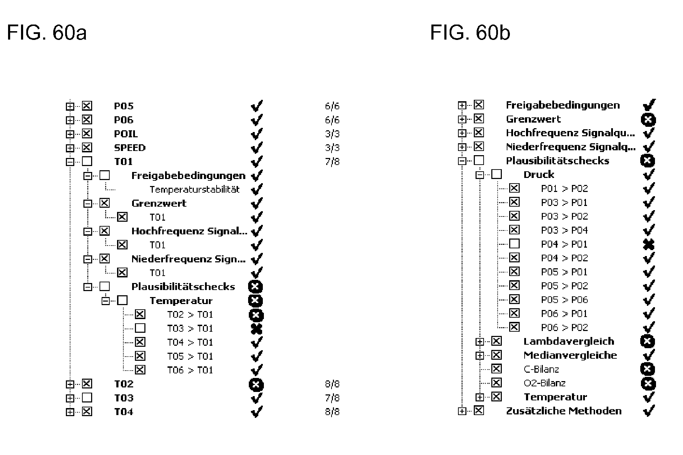

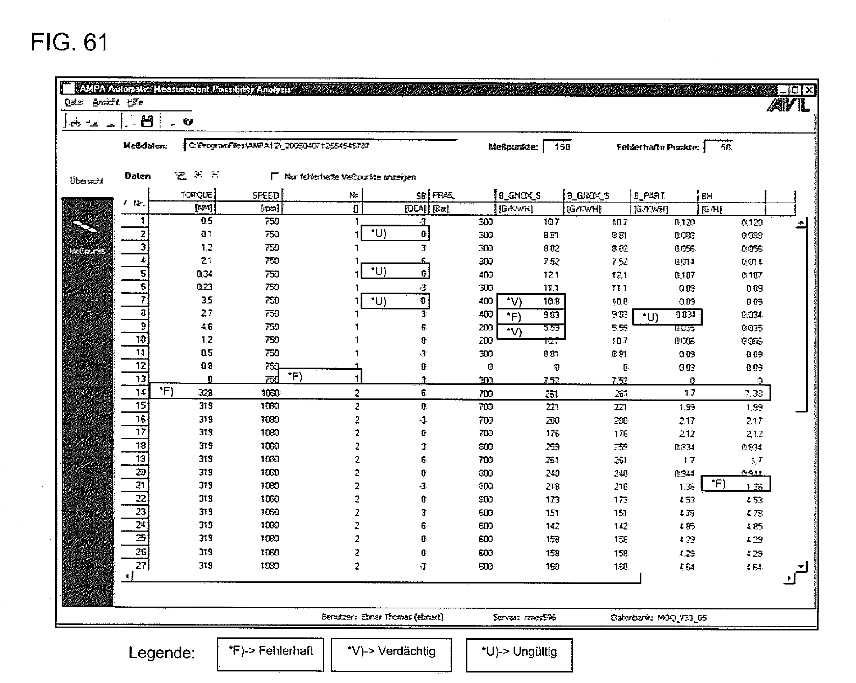

Dabei zeigt die Fig. 1 ein Diagramm des Automatisierungsgrades bei der heutigen Applikation, Fig. 2 zeigt schematisch die aktuell übliche Vorgangsweise bei der Versuchsplanung, Fig. 3 zeigt schematisch eine übliche Grenzwertkontrolle, Fig. 4 ist eine schematische Darstellung des Ablaufes einer erfindungsgemäßen Datendiagnose, Fig. 5 ist eine schematische Darstellung der Interaktion der Hauptkomponenten der erfindungsgemäßen Datendiagnose, Fig. 6 zeigt das Konzept der Einbindung der Messdatendiagnose in ein Prüfstandssystem, Fig. 7 zeigt die Funktion der Operativ-Ebene eines realen Prüfstandssystems, Fig. 8 jene der Bedien-Ebene, Fig. 9 ist ein Schema betreffend die Implementierung der Prüfstandsdiagnose im Framework, Fig. 10 stellt die logische Basisstruktur der Prüfstandsdiagnose dar, Fig. 11 zeigt typische Erfassungsraten analoger und digitaler Signale, Fig. 12 zeigt die typischen Messstellen bei einem Prüflauf für Turbodiesel-Motoren, Fig. 13 ist eine schematische Darstellung der Cachespeicher für die zyklische und die messsynchrone Fehlererkennung, Fig. 14 zeigt den Ereignismanager, Fig. 15 stellt die Pyramidenstruktur für die Visualisierung dar, Fig. 16 ist eine schematische Darstellung des Gesamtverlaufes der Datendiagnose gemäß der vorliegenden Erfindung, Fig. 17 zeigt das Rollspeicherschema, Fig. 18 ist eine Darstellung für beispielsweise die Verarbeitung der Rohdaten am Beispiel der Drehzahl, Fig. 19 stellt ein Beispiel für die Fehlererkennung mittels der Anti-Freeze-Methode dar, Fig. 20 ist ein Beispiel für ein Erkennung bei Ausfall der Datenübertragung, Fig. 21 zeigt ein Diagramm mit dem Ergebnis einer PT1-Regression für die Abgastemperatur bei einem Lastsprung an einem Prüfling, Fig. 22 ein Ergebnis der selben Methode, jedoch mit unterschiedlicher Datenmenge, Fig. 23 ist eine schematische Darstellung verschiedener Pfade zur Bewertung der Signalqualität, Fig. 24 zeigt ein Diagramm über eine Stationärstufenmessung an einem Prüfling zur Ermittlung praktikablen Signal-Rausch-Verhältnisses, Fig. 25 erläutert die Bildung der Datenbasis aus den Echtzeitdaten für die Niederfrequenz-Signalanalyse, Fig. 26 zeigt schematisch die Logik zur Ermittlung der Signalqualität, Fig. 27 ist ein Diagramm einer Mittelwert-Qualitätsregelkarte am Beispiel einer Drehzahlmessung, Fig. 28 zeigt die Verteilungsfunktion der Datenbasis für das Beispiel der Fig. 27, Fig. 29 ist ein Diagramm zur Fehlererkennung mittels Medianvergleich am Beispiel einer Klopferkennung, Fig.30 zeigt das Schema einer Betriebspunktwechselerkennung durch Medianberechnung, Fig. 31 ist ein Diagramm einer Stationärstufenmessung an einem Prüfling, Fig. 32 ist ein Diagramm einer Gradientenberechnung mit linearer Regression während einer Stationärstufenmessung, Fig. 33 zeigt einen Ausschnitt der Fig. 32 in vergrößertem Maßstab, Fig. 34 zeigt schematisch den Aufbau der Temperatur-Toolbox für die Plausibilitätsbestimmung, Fig. 35 ist eine Darstellung eines Messstellenplans für einen speziellen Prüfling, Fig. 36 zeigt ein Diagramm zur Problematik der Fehlererkennung bei dynamischem Betriebsverhalten, Fig. 37 zeigt analog zu Fig. 34 den Aufbau der Druck-Toolbox für eine Plausibilitätsbestimmung, Fig. 38 zeigt schematisch die C-Bilanz- oder Abgas-Toolbox, Fig. 39 ist ein Diagramm über den Einfluss der Feuchtekorrektur, Fig. 40 zeigt ein Diagramm zur Ermittlung der Auswirkung verschiedener Fehler auf die C-Bilanz, Fig. 41 zeigt schematisch die $O_2$-Bilanz-Toolbox, Fig. 42 zeigt ein Diagramm zur Ermittlung der Auswirkung verschiedener Fehler auf die $O_2$-Bilanz, ähnlich der Fig. 40, Fig. 43 zeigt schematisch die Lambda-Toolbox, Fig. 44 zeigt ein Diagramm zur Ermittlung der Auswirkung verschiedener Fehler bei der Lambda-Bestimmung, Fig. 45 ist ein Diagramm mit den Abkühlkurven eines Prüflings, Fig. 46 zeigt einen Wertevergleich im Stillstand des Prüflings mit Medianvergleich, Fig. 47 ist eine Darstellung der Kompensation des Zeitverhaltens am Beispiel der Abgastemperatur, Fig. 48 zeigt dazu die Kennwerte einzelner lokaler, linearer Modelle, Fig. 49 zeigt einen Schnitt durch ein ART-2-Netzwerk, Fig. 50 ist die schematische Darstellung eines ARTMAP-Netzwerkes, Fig. 51 zeigt das Streuband der NOX-Messdaten bei Erprobung eines ARTMAP-Beobachtersystems, Fig. 52 zeigt das Ergebnis eines beliebig ausgewählten NEDC-Zyklusses gegen die Referenzmessung aus einem ARTMAP-Netz, Fig. 53 zeigt das Grundkonzept der erfindungsgemäßen Fehlerisolation und Fehlerklassifikation, Fig. 54 zeigt den grundlegenden Aufbau des erfindungsgemäßen Logic Layer zur Fehlerisolation und Fehlerklassifikation, Fig. 55 zeigt ein Beispiel zur Fehlerisolation und Fehlerklassifikation anhand einer Stationärstufenmessung, Fig. 56 zeigt schematisch den Aufbau und die Funktion des internen Datenmanagements, Fig. 57 schematische Darstellung der Ebenen der Ereignisvisualisierung, Fig. 58a bis c zeigt vorteilhafte Symbole für verschiedenen Status der Messdatendiagnose, Fig. 59 ist ein Beispiel für eine Darstellung der Diagnosehistorie, Fig. 60a und 60b zeigen beispielhafte Ansichten über Umfang und Status der Fehlererkennung entsprechend der dritten Ebene der Ergebnisvisualisierung, und Fig. 61 zeigt ein Beispiel für die Kennzeichnung von Messdaten mit Qualitätssiegel.

Das frühzeitige Erkennen von Störungen, Ausfällen oder Fehlern ist für die Zuverlässigkeit und Sicherheit technischer Prozesse von zentralem Interesse und somit auch Motivation für eine Fehlerdiagnose an Motorenprüfständen.

Aus dem Stand der Technik können folgende Schlussfolgerungen für die Entwicklung einer zentralisierten Messdatendiagnose gezogen werden:

Der Datenaustausch zwischen Prüfstandssystemen und externen Diagnosewerkzeugen ist nach dem heutigen Stand der Technik beschränkt, da die verfügbaren Schnittstellen unter anderem die Arbeitsfrequenz auf maximal 1 Hz oder weniger beschränken, in der Regel nur einen beschränkten Zugriff auf Informationen des Prüfstandssystems zulassen (z.B. Messkanalliste, Betriebsmodus, Prüflingsbeschreibung, etc.) und damit nicht alle notwendigen Informationen zur Messdatendiagnose bereitstellen können, keine bidirektionale Kommunikation zulassen und nur in bestimmten Betriebsmodi angesprochen werden können.

Externe Diagnosetools benötigen zusätzliche Ressourcen in Form von PCs oder Notebooks und erhöhen damit die Komplexität am Prüfstand.

Modellbasierte Ansätze sind für den allgemeinen Prüfstandseinsatz ungeeignet, weil die mathematische Modellbeschreibung des gesamten Prüfstandssystems aufwendig und komplex ist und/oder der Prüfling oder der Prüfstandsaufbau nicht lange genug beibehalten werden, um eine entsprechende Systemidentifikation zu rechtfertigen.

Die Arbeiten auf dem Gebiet der Messdatendiagnose zeigen den Bedarf für ein Diagnosewerkzeug, das mit geringem Aufwand eine große Anzahl von Messgrößen automatisch analysieren kann.

Aus der Analyse der beschriebenen Ansätze folgt, dass für die Problemlösung ein direktes Zusammenwirken zwischen Messdatendiagnose und Prüfstandssystem notwendig erscheint.

Die genannten Schlussfolgerungen und der stetig zunehmende Einsatz der statistischen Versuchsplanung waren die Triebfeder für einen Ansatz, bei dem die Fehlererkennung in die DoE-Software AVL-Cameo implementiert wurde. Dieser Ansatz wurde gewählt, da Cameo bereits über die notwendigen Schnittstellen zum Datenaustausch mit den gängigsten Prüfstandssystemen verfügt. Zusätzlich besteht die Möglichkeit, eigene Algorithmen über eine spezielle Schnittstelle in der Software zu implementieren.

Konzeptionell bestand der Ansatz aus einer signalbasierten Stillstands- und Online-Fehlererkennung. Auf Projektebene wurde gefordert, dass neben einer Standardparametrierung keine weiteren Benutzereingaben erfolgen sollten.

Mit der Stillstandsfehlererkennung wird die Prüflaufbereitschaft für einen CAMEO -Prüflauf am kalten, stehenden Motor ermittelt. Hierzu kommen einfache statistische Methoden wie der Medianvergleich und Konfidenzintervalle zum Einsatz.

Nach erfolgreicher Stillstandsdiagnose erfolgt die Prüfstandsfreigabe für den eigentlichen DoE-Prüflauf. Der Start der Onlinefehlererkennung erfolgt automatisch durch den Prüflauf. In Abhängigkeit der ausgewählten Messgrößen werden Unregelmäßigkeiten während der Vermessung online angezeigt.

Mit diesem Ansatz konnten einfache Algorithmen der signalbasierten, physikalischen Fehlererkennung online angewendet werden. Die Umsetzung zeigte allerdings, dass der beschriebene Ansatz nicht als optimal zu bezeichnen ist. Dies begründet sich durch die Tatsache, dass die verwendete Schnittstelle eigentlich zur Integration anwenderspezifischer Versuchsstrategien vorgesehen ist. Dieser Umstand erfordert für jeden neuen Prüflauf das Zusammenführen von Versuchsstrategie und Fehlererkennungsmethoden, wobei für die Implementierung spezielle Softwarekenntnisse erforderlich sind. Hinzu kommt, dass Cameo über keine eigene Datenerfassung verfügt und deshalb auf die Daten des Prüfstandssystems zugreifen muss. Dieser Zugriff erfolgt jedoch nur über den eingestellten Messmodus (Mittelwert- oder Aktualwertmessung). Bei Cameo-Messungen ist das üblicherweise die Mittelwertmessung. Cameo startet hierzu eine sog. Stationärstufenmessung (Mittelwertmessung) am Prüfstandssystem und bekommt am Ende den Mittelwert der Stufenmessung als Messwert zurück. Damit steht für die Messdatendiagnose pro Messung nur ein einziger Messwert zur Verfügung. Auf das Datenmaterial, das zur Bildung des Mittelwerts herangezogen wird, besteht kein Zugriff. Damit scheidet der komplette Bereich zur Bewertung der Signalqualität vollständig aus und es werden viele Informationen ungenutzt "weggeworfen". Weiterhin wurde festgestellt, dass sich die notwendige Parametrierung der Fehlererkennung als ausgesprochen kompliziert darstellte.

Die genannten Nachteile führen zu der Schlussfolgerung, dass der Cameo-Ansatz für den allgemeinen Prüfstandseinsatz ungeeignet ist. Positiv ist zu bewerten, dass mit diesem Ansatz die grundsätzliche Machbarkeit einer Onlinefehlererkennung an Motorprüfständen aufgezeigt und wichtige Erkenntnisse für die Optimierung in Bezug auf Struktur, Parametrierung, Freigabebedingungen und Ergebnisdarstellung gewonnen werden konnten.

Die Erfahrungswerte des Cameo-Ansatzes wurden in einem neuen Ansatz zur Online-Messdatendiagnose umgesetzt. Der Ansatz basiert diesmal auf der Anbindung an das

Wenn im Rahmen der vorliegenden Arbeit von Messdatendiagnose gesprochen wird, ist darunter immer ein signalbasiertes Verfahren zur Erkennung und Benennung von Abweichungen, Störungen, Fehlern oder Ausfällen bei der Datenerfassung an Motorenprüfständen zu verstehen. Hierzu ist ein geplantes und zielorientiertes Vorgehen notwendig, das im Folgenden als Diagnoseworkflow bezeichnet wird. Der Diagnoseworkflow als Schema für die Datendiagnose gemäß der vorliegenden Erfindung besteht, wie in Fig. 4 ersichtlich, aus den Schritten Fehlererkennung, Fehlerisolation, Fehleridentifikation und Fehlerklassifikation.

Die Umsetzung des Diagnoseworkflows erfolgt als integrierter Bestandteil des Prüfstandssystems Puma Open. Die notwendigen Eingriffe in die Architektur des Prüfstandssystems verlangen dabei ein durchgängiges Konzept das von der Parametrierung bis zur Ergebnisdokumentation reicht.

In Bezug auf das Gesamtdiagnosekonzept bedeutet dies, dass zunächst alle Hauptkomponenten und deren Interaktion definiert werden müssen. Dabei gehören zur Messdatendiagnose etwa die Komponenten Parametrierung, Stillstands-Früherkennung, Online-Fehlererkennung mit den Varianten messsynchroner Prüfstandssystem Puma 5.5 der Firma AVL. Dabei erfolgt die Umsetzung der Fehlererkennungsmethoden in einem eigenständigen Programm.

Das Programm wird beim Start des Prüfstandssystems automatisch aktiviert und mit den entsprechenden Diensten des Prüfstandssystems verbunden. Hierzu stellt Puma eine spezielle Schnittstelle (CAPI) zur Verfügung. Über diese Schnittstelle können neben den Messdaten auch erstmals Informationen aus dem Prüfstandssystem mit einer maximalen Arbeitsfrequenz fArbeit = 1 Hz abgefragt und analysiert werden. Die Tatsache, dass die Schnittstelle auch Informationen an das Automatisierungssystem übertragen kann, machte erstmals eine bidirektionale Kommunikation zwischen Diagnose- und Prüfstandssystem möglich. Damit kann das Diagnoseergebnis z.B. direkt im Benutzerfenster des Prüfstandssystems angezeigt werden. Dies hat den Vorteil, dass der Anwender die Diagnoseinformation in seiner gewohnten Systemumgebung dargestellt bekommt.

Neben physikalischen und logischen Ansätzen konnte erstmals die Bewertung der Signalqualität und ein einfacher Gerätecheck als fester Bestandteil der Fehlererkennung eingeführt werden. Den Kern bildeten Qualitätsregelkarten (QRK) für Standartabweichung und Mittelwert.

Zusammenfassend kann festgestellt werden, dass mit dem Puma-Ansatz ein funktionsfähiges Konzept zur Online-Fehlererkennung umgesetzt werden kann. Erwähnenswert ist außerdem, dass mit diesem Ansatz erstmals eine großflächige Verbreitung der Messdatendiagnose in Prüffeldern möglich wurde.

Obwohl der Puma-Ansatz deutlich bessere Ergebnisse als der Cameo-Ansatz lieferte, muss auch hier wieder die Leistungsfähigkeit der Schnittstelle als Nachteil angeführt werden. Neben einer maximalen Arbeitsfrequenz fArbeit = 1Hz steht auch bei dieser Lösung nur ein sehr beschränkter Befehlsumfang zur Verfügung. Eine Rohdatenplausibilität vor Filterung oder eine Hochfrequenz-Signalanalyse scheiden damit aus.

Somit konnte keines der gängigen Prüfstandssysteme eine standardisierte Schnittstelle bereitstellen, die den Ansprüchen einer Messdatendiagnose genügt, was jedoch für eine erfolgreiche Umsetzung der Messdatendiagnose unumgänglich ist. Diese Messdatendiagnose kann als abgeschlossenes Programm entweder auf den Prüfstands-PC oder auf einem zusätzlichen Rechner betrieben werden. Der Einsatz eines eigenen Diagnoserechners hat den Vorteil, dass keine zusätzliche Systemlast auf dem Prüfstandsrechner verursacht wird und dass das Diagnosewerkzeug flexibel an unterschiedlichen Prüfständen eingesetzt werden kann.

Für eine externe Lösung muss ein sicherer Datentransfer zwischen dem Prüfstands- und Diagnoserechner garantiert werden. Nachteilig ist dabei, dass es keine einheitlichen Schnittstellen für die gängigen Prüfstandssysteme gibt (z.B. USB) und dass mit einem zusätzlichen Rechner auch der finanzielle Aufwand steigt.

Wenn die Messdatendiagnose auf dem Prüfstandsrechner ausgeführt wird, ist streng darauf zu achten, dass die resultierende Systembelastung den Prüfstandsbetrieb nicht beeinträchtigt. Die Integration der Messdatendiagnose in das Prüfstandssystems hat jedoch den Vorteil, dass auf alle internen Informationen des Prüfstandssystems zugegriffen werden kann.

Sowohl der externe als auch der interne Ansatz führen zu neuen Anforderungen an das Framework (Rahmenstruktur der Software) des Prüfstandssystems. Diese müssen durch neue Funktionen und Schnittstellen realisiert werden. Dafür sind elementare Eingriffe in die Systemstruktur des Prüfstandssystems notwendig, die nur mit der Unterstützung der entsprechenden Hersteller realisiert werden können.

Die Umsetzung der Schlussfolgerungen kann mit der Unterstützung der Systemhersteller sowohl für eine externe Schnittstelle als auch für eine interne Lösung erfolgen.

Für eine externe Schnittstelle muss jedoch ein Großteil des internen Datenflusses nach außen geleitet werden. Die hierzu notwendige Transparenz ist von den meisten Herstellern aus Wettbewerbsgründen nicht erwünscht. Diese Transparenz ist bei einer internen Lösung nicht notwendig.

Nachfolgend wird zunächst das Grundkonzept der zentralisierten Messdatendiagnose auf Puma Open Basis vorgestellt und diskutiert. Um nachträgliche Änderungen in der Architektur zu vermeiden ist eine sorgfältige Formulierung aller bekannten Anforderungen an die Messdatendiagnose dringend erforderlich. Besondere Aufmerksamkeit muss der Beantwortung der Fragen nach dem Diagnoseumfang, der Diagnosetiefe und der Ergebnisaufbereitung gewidmet werden. Anschließend erfolgt eine Bewertung der Machbarkeit und die hierzu notwendige Analyse der Systemarchitektur.

Anschließend werden die nach dem aktuellen Stand der Technik bekannten Anforderungen diskutiert, welche speziell die Detektionsschärfe, Robustheit und Diagnosetiefe, die Arbeitsfrequenz der Messdatendiagnose, den Überwachungsumfang gemäß dem Konzept der vorliegenden Erfindung, die Betriebsmodi der Fehlererkennung, die Zuordnung zwischen Messkanal und Rechenalgorithmus, die Anforderungen an die Parametrierung der Messdatendiagnose, das Visualisierungskonzept, das Konzept zur Ergebnisverwaltung, die Rand- und Freigabebedingungen, sowie den Datenfluss betreffen, ebenso wie die Fehlererkennung bzw. zyklischer Fehlererkennung, internes Datenmanagement, Auswertung der Fehlerdiagnose, umfassend die Fehlerisolation und Fehleridentifikation mit Signifikanzaussage, die Visualisierung und/oder Dokumentation des Diagnoseergebnisses, sowie die Verbindung von Mess- und Diagnosedaten.

Im Gegensatz zu früheren Arbeiten auf dem Gebiet der Messdatendiagnose an Motorenprüfständen hat in dieser Arbeit die Maximierung von Fehlererkennungsmethoden eine sekundäre Priorität. Die Fehlererkennung ist hier, genauso wie die Fehlerisolation oder die Fehleridentifikation, nur eine Teilfunktion des Diagnoseworkflows, die zur Sicherung und Dokumentation der Messdatenqualität beiträgt.

Der Begriff Hauptkomponente beschreibt in diesem Zusammenhang jeweils eine abgeschlossene Funktionseinheit, die ihrerseits über beliebig viele Unterfunktionen verfügen kann.

Das Grundkonzept der integrierten Messdatendiagnose besteht aus zwei Gruppen von Hauptkomponenten. Die erste Gruppe besteht aus den Hauptkomponenten Fehlererkennung, Fehlerisolation, Fehleridentifikation und Fehlerklassifikation und beschreibt den eigentlichen Diagnoseworkflow. Die Fehleridentifikation und die Fehlerklassifikation können dabei zur Fehleridentifikation zusammengefasst werden.

Die zweite Gruppe übernimmt die Kommunikation mit der Umwelt. Diese Komponenten sind für einen effizienten und flexiblen eingesetzt notwendig. Sie ermöglichen den notwendigen Datenaustausch mit dem Anwender und werden durch die Hauptkomponenten Parametrierung, internes Datenmanagement und durch die Ergebnisverwaltung realisiert.

Gleichzeitig ergibt sich aus der Priorität der Konzeptintegration die Anforderung nach einer erweiterbaren Funktionsstruktur innerhalb der Hauptkomponenten. Dies ist wichtig um eine nachträgliche Implementierung und Auswertung neuer Fehlererkennungsfunktionen zu ermöglich.

In der Informatik nennt man diese Strategie generische Programmierung. Darunter versteht man ein Verfahren zur Entwicklung wieder verwendbare Software-Bibliotheken. Dabei werden Funktionen möglichst allgemein entworfen, um sie für unterschiedliche Datenstrukturen verwendet werden zu können. Wesentlich bei der generischen Programmierung ist, dass die Algorithmen nicht für einen bestimmten Datentyp geschrieben werden, sondern nur bestimmte Anforderungen an die Typen stellen. Ein generisches Modell ist an spezifische Gegebenheiten einer konkreten Situation anpassbar. Fig. 5 stellt dazu schematisch den Datenfluss und die Interaktion der einzelnen Hauptkomponenten dar. Die Schnittstellen zwischen den einzelnen Hauptkomponenten sind so ausgelegt, dass Informationen in codierter Form durch definierte Zahlenwerte übertragen werden.

Anhand des Systems Puma Open der AVL List GmbH wurde untersucht, wie der Datenfluss und die notwendigen Schnittstellen in einem realen Prüfstandsystem umgesetzt werden können. Hierzu erfolgte zunächst die Untersuchung der Systemarchitektur von Puma Open, das in einer in Fig. 6 dargestellten Device-Struktur aufgebaut ist, die wiederum auf eine zweigeteilte Betriebssystemstruktur aufgesetzt wird.

Die Prozess-Ebene übernimmt dabei den Informationsaustausch zwischen Prüfstand und der Umgebung. Neben dem Prüfling und der Belastungseinheit gehören auch alle Sensoren, Aktoren sowie Mess- und Ladungsverstärker und die Prüfstandsmechanik zu dieser Ebene. Die Interface-Ebene sorgt für die Signalumsetzung zwischen Sensor und Informationsverarbeitung und ggf. für die Anbindung weiterer Subsysteme.

Die Operativ-Ebene erfüllt die in Fig. 7 dargestellten zentralen Funktionen des Prüfstands und bildet somit den Kern des Automatisierungssystems, wie auch in "Modellbasierte Methoden für die Validierungsphase im Produktentwicklungsprozess mechatronischer Systeme am Beispiel der Antriebsstrangentwicklung", von Christian Schyr, Dissertation 2006, Universität Karlsruhe beschrieben ist.

Die Ein-/Ausgabe-Ebene (I/O-Ebene) ist üblicherweise Bestandteil einer echtzeitfähigen Hard- und Softwareplattform. Dabei werden die digitalisierten Messwerte der Interface-Ebene durch entsprechende Algorithmen für die Steuerung, Regelung, Überwachung sowie für die Datenspeicherung aufbereitet. An dieser Stelle werden z.B. auch Filterverfahren zur Minderung des Störsignaleinflusses oder Klassierungsverfahren zur Datenreduktion eingesetzt. Einige Messwerte (z.B. Motordrehzahl oder Öldruck) werden nicht nur als Messwerte, sondern auch parallel als Istwert für Regelungen oder Sicherheitseinrichtungen verwendet.

Auf der anderen Seite kommuniziert die Operativ-Ebene außerdem mit der Bedien-Ebene. Hier werden vom Anwender festgelegte Versuchsabläufe in Echtzeit ausgeführt, wobei die einzelnen Ablaufschritte zeit- oder ereignisgesteuert sein können. Um eine maximale Dynamik zu erzielen, wird die Abarbeitung des Versuchsablaufs zeitsynchron mit der Signalerfassung durchgeführt. Die Sollwertvorgabe für die Prüfstandsregelung kann dabei sowohl durch den Anwender manuell oder automatisch über einen entsprechenden Versuchsplan erfolgen.

Die Bedien-Ebene (Fig. 8) beinhaltet alle Editoren zur Prüflauferstellung, Visualisierung und zum Versuchsmanagement. Sie ist damit das Bindeglied zwischen der Operativ-Ebene und der Leit-Ebene.

Die Leit-Ebene bietet eine Plattform zur Vernetzung von Prüfläufen und Versuchsergebnissen, die in der Regel auf einer zentralen Datenbank basieren. Diese ist für die prüfstandsübergreifende Verwaltung von Prüfläufen und Versuchsergebnissen der einzelnen Prüfstände in einem Prüffeld verantwortlich (Host-System). Bei der Verwaltung von Versuchsergebnissen wird heute oft ASAM-ODS verwendet. ASAM-ODS definiert ein generisches Datenmodell für die Interpretation von Daten, Schnittstellen für Modellmanagement, Datenablage, Datenzugriffe sowie für den Datenaustausch.

Jedes Device (Gerät oder Dienst) ist über das sogenannte Realtime System Interface in einen Echtzeit- und in einen Nicht-Echtzeit-Teil gegliedert.

Der Datenfluss beginnt beim Sensor in der Prozessebene und gelangt über die Interface-Ebene zum Echtzeit-Frame. Dort werden die Daten von einem Real Time IO-Handler aufgenommen und für die Weiterverarbeitung durch das Realtime System Channel Interface aufbereitet.

Die Einzelprozesse im Realtime-Frame sind für die Umsetzung der Messdatendiagnose nicht von Belang und werden daher auch nicht weiter beschrieben.

Der Datenfluss im Automation System Frame wird über ein Modell aus Geräten (Device) und Systemkanälen (Systemchannels) beschrieben. Ein Systemkanal kann dabei als Daten- oder Meldungskanal operieren.

Ein Datenkanal ist vergleichbar mit einem Kanal, der Werte von einer physikalischen Messgröße erhält. Der Systemkanal speichert Werte mit Hilfe sogenannter Systemvariablen (z.B. Online-, Min.-, Max.-, Mittelwert). Meldungskanäle enthalten dagegen Status- und Meldungsinformationen.

Die Systemvariable beinhaltet die Daten eines Systemkanals, also die Informationen aus den Daten- und Meldungskanälen. Da diese Daten den Systemkanal näher beschreiben, werden sie als Eigenschaften des Systemkanals bezeichnet.

Puma Open generiert eine Vielzahl dieser Systemkanäle. Diese können z.B. einem Normnamen zugeordnet sein. Normnamen bezeichnen dabei genau die Namen der Messkanäle, die der Anwender als Kanalnamen sieht.

Ein Systemkanal hat mindestens eine Systemvariable und kann eine unbestimmte Anzahl von weiteren Systemvariablen (Minimum, Maximum, Mittelwert, Standardabweichung, Filter oder Ringspeicher) besitzen.

Die Quantity ist die Beschreibung einer Online-Größe wie z.B. Name, Typ, Nachkommastellen, etc. Sie besitzt jedoch keine aktuellen Messwerte. Beim Starten des Onlinesystems wird für jede tatsächlich verwendete Quantity ein Systemkanal erzeugt. Dagegen kann ein Device (Gerät) jederzeit einen Systemkanal erzeugen.

Bei Puma Open werden drei Gerätegruppen unterschieden: Measurement Devices, z.B. eine Kraftstoffwaage, austauschbare & kundenspezifische I/O, sog. I/O Devices, und künstliche Geräte (virtuelle Devices) wie z.B. Regler oder Formeln.

Für die Verbindung der einzelnen Geräte wird ein Lieferanten-/Verbraucher-Modell verwendet. Physikalisch sind die Geräte über Systemkanäle verbunden, wobei jeder Systemkanal mehrere Verbraucher aber nur einen Liefernten haben kann.

Eine, für die integrierte Messdatendiagnose wesentliche Funktion ist der Zugriff auf die ungefilterten Rohdaten. Die Framework-Architektur ermöglicht, dass in Puma Open für definierte Systemkanäle Ringpuffer für die Online-Visualisierung (Grafik) und für Rekorder angelegt werden können. Hintergrund hiefür ist, dass das Nichtechtzeit-Betriebssystem ständig vom Echtzeit-Betriebssystem unterbrochen wird. Um die Daten dennoch zu sehen, werden Ringpuffer benötigt um Daten ohne Verlust aus der Echtzeit in die Nichtechtzeit zu transferieren. Die Daten werden dabei zeitrichtig aufgezeichnet, jedoch nicht zeitrichtig angezeigt.

Der Ringpuffer entspricht dabei einem Mini-Rekorder, der eine "Zeitspur" aufzeichnet. Die Startzeit des Ringpuffers wird durch den Clock Master Tick aus der Echtzeitebene bestimmt. Die Zeitabstände für die Datenerfassung sind konstant. Auf diese Weise erfolgt eine zeitgenaue Aufzeichnung der Werte. Gemäß der vorliegenden Erfindung ist vorgesehen, dass dieser Ringpuffer in die Messdatendiagnose eingebunden wird. Dies ermöglicht erstmals, dass eine Hochfrequenz-Signalanalyse der unmanipulierten Rohmessdaten durchgeführt werden kann.

Im Rahmen der oben beschriebenen Architektur von Puma Open wird die Integration der Messdatendiagnose wie in Fig. 6 schematisch gezeigt in Form eines zusätzlichen Devices umgesetzt. Begründet wird dies durch die Tatsache, dass die notwendigen Schnittstellen für ein neues Device in Puma bereits bestehen bzw. leicht hinzugefügt werden können. Hierdurch ist der Zugriff auf alle diagnoserelevanten Daten des Prüfstandssystems möglich. Fig. 9 zeigt wie die Architektur der notwendigen Frameworkzugänge zum Systemchannel-Manager, zur Prüfstandsverwaltung, zur Datenerfassung oder zum Limitmonitoring aussieht, und Fig. 10 zeigt abschließend noch einmal die Schnittstellen und Datenflüsse zwischen Prüfstandssystem und Messdatendiagnose. Der Ablauf beginnt mit dem auslesen der notwendigen Informationen für die Parametrierung aus der Leit-Ebene. Besonders wichtig sind hierbei die Prüflings- und Prüflaufdaten sowie die am System verfügbaren Messkanäle.

Die Fehlererkennung muss für die benötigten Eingangsinformationen mit der Interface-Ebene interagieren und zur Visualisierung der Diagnoseergebnisse Zugriff auf die Bedien-Ebene haben. Die Dokumentation der Diagnoseergebnisse fordert wieder einen Zugriff auf die Leit-Ebene.

Neben der grundsätzlichen Machbarkeit ist die Formulierung der Erwartungshaltung an die Messdatendiagnose ein wesentlicher Punkt bei der Konzeptentwicklung. D.h., es muss die Frage beantwortet werden, welche Fehler und welche Diagnosetiefe mit der integrierten Messdatendiagnose abgedeckt werden können und sollen. Ziel ist grundsätzlich die Detektion von Zuständen, die zu unbrauchbaren Messergebnissen führen.

Wesentlich ist dabei die Tatsache, dass an Prüfständen direkt gemessene Signale vorliegen und das in der Regel keine Zeit für aufwendige Identifikationsversuche zum Systemverhalten durchgeführt werden können. Dies begründet den signalbasierten Ansatz der Fehlererkennung. Dabei muss berücksichtigt werden, dass sich ein Fehler signifikant vom fehlerfreien Systemverhalten unterscheiden muss. Der zu erkennende Signifikanzunterschied hängt dabei sowohl vom Prozess als auch vom Potential der verwendeten Methoden oder Modelle ab.

Ein Maß für diese Signifikanz ist die Detektionsschärfe. Sie ist sowohl eine Methodeneigenschaft als auch Parameter und damit ein Maß für den kleinsten sicher detektierbaren Fehler.

Aufgrund von Vereinfachungen oder Annahmen muss die Detektionsschärfe als Methodeneigenschaft angesehen werden, da diese Annahmen und Vereinfachungen keine genauere Aussage der entsprechenden Methode ermöglichen.

Vereinfachungen bei der Kohlenstoffbilanz führen beispielsweise zu einer maximalen Detektionsschärfe von 10%. D.h., dass sich die ein- und ausströmenden Kohlenstoffmassenströme um mindestens 10% voneinander unterscheiden müssen um eine signifikante Abweichung vom erwarteten Systemverhalten zu erkennen.

Um die Messdatendiagnose optimal an eine definierte Prüfaufgabe anpassen zu können, muss die Detektionsschärfe parametrierbar sein. Damit hat der Anwender die Möglichkeit, seine Erwartungshaltung an die Fehlererkennung selbst zu definieren. Aus diesem Grund ist die Detektionsschärfe nicht nur als Systemeigenschaft sondern auch als Parameter zu betrachten.

Die Detektionsschärfe ist also eine wichtige Eigenschaft, die die Erwartungen an die Fehlerdiagnose quantifiziert. Dazu muss für jede verwendete Fehlererkennungsmethode die maximal mögliche Detektionsschärfe angegeben werden. Die Erwartung, dass eine Abweichung von 5ppm bei der HC-Rohemission als unplausibel oder gar als Fehler erkannt werden kann ist beispielsweise nicht realisierbar. Dagegen muss sichergestellt sein, dass eine Abgastemperatur von z.B. 100˚C bei betriebswarmem Motor sicher als unplausibel erkannt wird.

Weiterhin ist auf eine saubere Trennung zwischen den Begriffen Fehler und Fehlerursache bzw. Fehlerquelle zu achten. Praktisch gesehen ist z.B. der Gerätezustand "nicht messbereit" ein Fehler, der mit der signalbasierten Messdatendiagnose detektiert wird. Die Fehlerursache kann z.B. eine fehlende Hilfsenergie (z.B. Brenngas für den FID) sein. Die signalbasierte Fehlerdiagnose ist aber nicht in der Lage aus dem Fehler "Abgasanalyse nicht messbereit" die Fehlerursache "kein Brenngas für den FID" abzuleiten.

An diesem Beispiel ist schnell zu erkennen, dass die signalbasierte Fehlererkennung den Fehler bzw. die Auswirkungen des Fehlers auf entsprechende Messsignale bestimmen kann. Der Rückschluss vom erkannten Fehler zur Fehlerursache ist dagegen nur in Ausnahmefällen möglich. Allerdings sensibilisiert die Messdatendiagnose den Anwender durch eine entsprechende Anzeige auffälliger Messsignale und kann gleichzeitig ein wertvolles Werkzeug bei der Identifikation der eigentlichen Fehlerursache sein.

Unter bestimmten Umständen kann jedoch, wie weiter unten im Zusammenhang mit Methoden der Fehlererkennung noch näher erläutert werden wird, unter bestimmten Umständen eine Abweichung von Bilanzen oder Redundanzvergleichen zwischen abgasabhängigen und abgasunabhängigen Signalen oder Rechengrößen erfolgen. In einem nachgeschalteten Fehlerbaum können dann in Einzelfällen entsprechende Hinweise zur Fehlerursache gegeben werden, die dann z.B. den Schluss "Abgasmessung unplausibel" zulassen.

Prinzipiell steht die Diagnoseschärfe immer im Gegensatz zur Robustheit der Diagnose. Die Robustheit ist ebenfalls eine Systemeigenschaft, die sich bei der Fehlerdiagnose auf die Zuverlässigkeit der Diagnoseaussage bei Unsicherheiten und Störungen bezieht. Eine sehr scharf eingestellte Diagnose mit schmalen Vertrauensbereichen und kleinen Toleranzen ist genau dann als robust zu bezeichnen, wenn auch wenig signifikante Unterschiede und Abweichungen vom Systemrauschen sicher aufgelöst werden können. Dabei dürfen jedoch keine Fehlmeldungen produziert werden. Auf der anderen Seite wird eine zu locker eingestellte Diagnose signifikante Unterschiede eventuell nicht oder zu spät erkennen. Für beide Extremfälle gilt, dass bei häufigem Auftreten das Vertrauen in ein korrektes Diagnoseergebnis verloren geht. Diagnoseschärfe, Diagnosetiefe und Robustheit sind Eigenschaften die ausführlicher in Zusammenhang mit den Methoden der Fehlererkennung diskutiert und quantifiziert werden.

Eine wichtige Frage bei Anwendung der Messdatendiagnose ist es, wie schnell Unregelmäßigkeiten in den Daten erkannt werden können und müssen. Die Bestimmung der Arbeitsfrequenz fArbeit ist also ein weiterer wichtiger Punkt bei der Konzeptentwicklung. Fig. 11 zeigt die an Prüfständen üblichen Abtastfrequenzen für die wichtigsten Messgrößen.

Es ist leicht ersichtlich, dass alle wesentlichen Prüfstandsmessgrößen in einem Bereich zwischen 1 bis 10 Hz abgetastet werden können. Höhere Abtastfrequenzen bleiben in der Regel Sonderanwendungen vorbehalten. Gleichzeitig muss auch die, durch die Messdatendiagnose verursachte CPU-Belastung berücksichtigt werden.

Als drittes Kriterium ist die Erkennungsgeschwindigkeit zu diskutieren. Die Messdatendiagnose ist nicht als Überwachungsorgan für systemkritische Zustände angedacht. Betriebszustände, die die Sicherheit der Prüfeinrichtung oder des Prüflings betreffen werden im Prüfstandssystem durch entsprechende Kontrollmechanismen überwacht. Damit besteht also kein Echtzeitbedarf bei der Fehlererkennung. Auf der anderen Seite sollten Unregelmäßigkeiten so schnell wie möglich erkannt werden.

Die Analyse des täglichen Prüfstandsbetriebs zeigt, dass die Messdatenerfassung üblicherweise mit 1Hz und bei Dauerlaufversuchen teilweise mit 0,1 Hz erfolgt. Daher ist üblicherweise für den allgemeinen Prüfstandseinsatz eine Arbeitsfrequenz von fArbeit = 1Hz ausreichend. Auf höhere Arbeitsfrequenzen wird aus Gründen der Systembelastung verzichtet. Unter Berücksichtigung von Vorlaufzeiten für iterative Methoden und einer Arbeitsfrequenz von 1Hz sollte die Messdatendiagnose in der Lage sein, einen Fehler innerhalb von 30 bis 60 Sekunden nach Auftreten des Fehlers sicher zu detektieren.

Betreffend des Überwachungsumfanges gilt, dass grundsätzlich die Anzahl der zu überwachenden Messgrößen beliebig sein sollte. Grenzen ergeben sich hier durch den Rechenaufwand, die Speicherkapazität und durch das Framework des Prüfstandssystems. Fig. 12 zeigt die typischen Messstellen am Beispiel eines TDI-Aufbaus. Hieraus lassen sich die für Motorenprüfstände typischen Messkanäle ableiten.

Für die Messdatendiagnose werden alle in den Motor ein- und austretenden Massenströme sowie alle relevanten Temperaturen, Drücke und Abgasrohemissionen berücksichtigt. ECU-Größen oder zusätzliche Lambdawerte sind nicht an jedem Prüfstand verfügbar. Für die Fehlererkennung im Bereich Massenströme und bei der Abgasanalyse sind diese Größen besonders wichtig und sollten deshalb, sofern möglich, berücksichtigt werden.

Für eine eindeutige Identifikation der entsprechenden Messstellen wird in der Parametrierung jedem ausgewählten Messkanal eine sog. Masterklasse zuweisen. Diese repräsentieren die Variablen der programmierten Fehlererkennungsalgorithmen und verbinden somit Messgrößen und Berechnungsformeln. Die Verteilung der Messgrößen auf die Masterklassen erfolgt nach Position und Art der Messgröße. Die Messstellenpositionen werden von Position 0 bis Position 4 durchnummeriert und durch das Kürzel der entsprechenden physikalischen Größe ergänzt (z.B. T0 = Temperatur an der Messstelle 0).

Für die nachfolgenden Ausführungsformen der Erfindung kommen folgende Masterklassen und Messstellen zum Einsatz:

Tabelle T4.1 Masterklassen der integrierten Messdatendiagnose

| Masterklasse | Physikalisch | Messstelle |
|---|---|---|
| T0 | Temperatur | Umgebungstemperatur |
| T1 | | Lufttemperatur nach HFM / vor Verdichter |
| T2 | | Lufttemperatur nach Verdichter / vor Ladeluftkühler (LLK) |
| T2s | | Lufttemperatur nach Ladeluftkühler |
| T3 | | Abgastemperatur vor Turbine |
| T4 | | Abgastemperatur nach Turbine |
| TWE | | Kühlmitteltemperatur, Motoreintritt |
| TWA | | Kühlmitteltemperatur, Motoraustritt |
| TKRV | | Kraftstofftemperatur, Vorlauf |
| TKKK | | Kraftstofftemperatur, Rücklauf |
| TOEL | | Öltemperatur |
| p0 | Druck | Umgebungsdruck |
| p1 | | Luftdruck nach HFM / vor Verdichter |
| p2 | | Luftdruck nach Verdichter / vor Ladeluftkühler (LLK) |
| p2s | | Luftdruck nach Ladeluftkühler |
| p3 | | Abgasdruck vor Turbine |
| p4 | | Abgasdruck nach Turbine |
| pOEL | | Öldruck |
| Drehzahl | Betriebspunkt | Motordrehzahl, Laderdrehzahl , sonstige Drehzahlen |
| Drehmoment | | Drehmomente |
| Alpha | | Gaspedalstellung |
| HC_v_KAT | Abgase | Kohlenwasserstoffrohemission |
| CO_v_KAT | | Kohlenmonoxidrohemission |
| CO2_v_KAT | | Kohlendioxidrohemission |
| O2_v_KAT | | Sauerstoffrohemission |
| NOX_v_KAT | | Stickoxidrohemission |
| NO_v_KAT | | Stickstoffmonoxidrohemission |
| NO2_v_KAT | | Stickstoffdioxidrohemission |
| ML | Massenströme | Luftmassenstrommessung |
| MB | | Kraftstoffmassenstrommessung |
| MW | | Kühlwassermassenstom |
| Lambda-Sonde | ECU | Lambdasignal aus einer zusätzlichen Lambdasonde |
| Lambda-ECU | | Lambdasignal aus der ECU |
| ALPHA_ECU | | Drosselklappenstellung aus der ECU |
| MD_ECU | | Drehmoment aus der ECU |
| ML_ECU | | Luftmassenstrom aus der ECU |
| MB_ECU | | Kraftstoffmassenstrom aus der ECU |

Die Messwerte der Stationärstufe ergeben sich am Ende der Messphase aus den Mittelwert der Einzelmessungen. Eine MSF kann aber nur dann durchgeführt werden, wenn Start und Ende der Stufe bekannt sind. Diese Informationen kommen aus dem Prüfstandssystem.

Bei einer Stationärstufenmessung erkennt Puma die MSF als eigenständiges virtuelles Messgerät und sammelt die zu analysierenden Daten über das Messfenster. Zur Umsetzung musste ein entsprechender Ereignismanager (Device handler) entwickelt werden, der die Ereignisse zyklisch, Start und Ende steuert. Die zyklische und die messsynchrone Fehlererkennung können sowohl parallel als auch einzeln erfolgen. Die hierfür notwendigen Aktivierungen erfolgen während der Parametrierung.

Das Start- und Endereignis einer Messung wird von Puma zu Beginn der entsprechenden Stationärstufenmessung abgesetzt und muss vom Ereignismanager abgehört werden. Daraufhin startet oder beendet dieser die MSF. Zur Minimierung der Systembelastung erfolgt das Auslesen der Echtzeitringspeicher nur einmal pro Arbeitsschritt. Hierfür werden die Daten in zwei getrennte interne Cachespeicher kopiert (Fig. 13). Die Ereignissteuerung der Cachespeicher und die Ausführung der entsprechenden Fehlererkennungsmodi ist Fig. 14 zu entnehmen. Die bereits beschriebene generische Struktur erlaubt es, dass an dieser Stelle weitere Masterklassen eingebunden werden können.

Aus Voruntersuchungen und durch Erfahrungsaustausch mit Prüfingenieuren konnte ermittelt werden, dass es Bedarf für unterschiedliche Betriebsmodi bei der Messdatendiagnose gibt. Aus diesem Grund verfügt die integrierte Messdatendiagnose über die drei Betriebsmodi Stillstandsfehlererkennung, zyklische Online-Fehlererkennung (ZOF) und messsynchrone Fehlererkennung (MSF).

Die Stillstandsdiagnose führt bereits vor dem Motorstart eine einfache Systemprüfung durch. Hierdurch ist z.B. ein einfacher Vergleich der Temperaturmessgrößen möglich der bei laufendem Motor so nicht mehr durchgeführt werden kann.

Ein weiterer wichtiger Punkt sind Versuche, die konditionierte Startbedingungen benötigen. Hier ist die Stillstandsdiagnose besonders sinnvoll, da im Fehlerfall keine unnötigen Wartezeiten bis zum Erreichen der notwendigen Randbedingungen anfallen. Die Stillstandsdiagnose verfügt über spezielle Fehlererkennungsmethoden, die bei stehendem Motor vor dem Start manuell durch den Anwender ausgelöst werden. Eine genaue Beschreibung erfolgt weiter unten im Zusammenhang mit der Stillstandsdiagnose.

Die ZOF erklärt sich selbst und ist bereits durch die Aufgabenstellung begründet. Allerdings fallen bei langen Prüfläufen durch die ZOF auch entsprechend große Datenmengen an.

Die differenzierte Betrachtung zwischen zyklischer und messsynchroner Fehlererkennung begründet sich außerdem dadurch, dass im täglichen Prüfstandsbetrieb häufig Stationärstufenmessungen (mit der eigentlichen Messphase nach einer Einregel- und einer Stabilisierungsphase) durchgeführt werden. Die MSF analysiert nur dann die Messdaten, wenn vom System eine entsprechende Stationärstufenmessung ausgelöst wird. Dabei ist es aus Transparenz- und Zeitgründen sinnvoll, wenn die Messdatendiagnose mit der Datenerfassung während der Messung synchron abläuft. Zu bemerken ist außerdem, dass dieser Betriebsmodi erst durch die Integration in das Prüfstandssystem möglich wurde. Vor der Integration bestand keine Möglichkeit, den Start und das Ende der Stationärstufe für die Messdatendiagnose "sichtbar" zu machen.

Im Fall der zyklischen Fehlererkennung und wenn keine Messung aktiviert wurde, werden die Daten der Echtzeitringspeicher mit der Arbeitsfrequenz in den Cachespeicher der zyklische Fehlererkennung kopiert. Tritt hingegen das Ereignis "Messung starten" ein, müssen für die zyklische Fehlererkennung bereits gesammelte Daten der Echtzeitringspeicher teilweise in den Cachespeicher der messsynchronen Fehlererkennung kopiert werden. Genau das Gegenteil passiert, wenn ein zyklisches Ereignis während einer messsynchronen Fehlererkennung eintritt. Dann werden, genau wie beim Ereignis Ende, die Echtzeitdaten in beide Cachespeicher geschrieben. Die Auswertung des zyklischen Cachespeichers erfolgt dabei mit der entsprechenden Arbeitsfrequenz. Die Auswertung der messsynchronen Speicher erfolgt dagegen immer nur am Ende der Messung.

Für die Methoden der Plausibilität ist die physikalische Bedeutung jedes einzelnen Kanals wichtig, da dieser mit entsprechenden Methoden und Gleichungen verbunden werden muss. Diese Zuordnung wird Normnamenmapping genannt und erfolgt während der Parametrierung. Hier erfolgt zunächst die Aktivierung all jene Kanäle, für die eine Plausibilitätsprüfung durchgeführt werden soll. Anschließend wird jedem Normnamen eine entsprechende Masterklasse zugewiesen. Damit wird dem System z.B. bekannt gemacht, dass der Normname T_Zyl1 ein Messkanal der Masterklasse T3 ist. Mit den Informationen aus dem Normnamenmapping kann das Diagnosesystem automatisch alle durchführbaren Methoden bestimmen.

Um sicherzustellen, dass die Berechnung der physikalischen Gleichungen richtig erfolgt, ist eine Umwandlung der kanalspezifischen physikalischen Einheiten auf SI-Einheiten sinnvoll. Hierbei werden z.B. Temperaturen von ˚C in Kelvin umgerechnet.

Eine weitere Umwandlung ist ggf. bei der Druckmessung erforderlich, da hier sowohl Absolut- als auch Relativ- oder Differenzdrücke auftreten können. Zusätzlich werden Drücke häufig in verschiedenen Einheiten wie mbar, hPa, MPA oder bar angegeben. Um Fehler zu vermeiden, werden alle Drücke auf Absolutdrücke und die SI-Einheit Pascal umgerechnet. Die notwendigen Informationen zur Datenumwandlung kommen aus der Parametrierung.

Durch entsprechende Schnittstellen im Framework können Informationen zu den physikalischen Einheiten auch direkt aus der Normnamentabelle des Automatisierungssystems entnommen werden.

Die Parametrierung bewirkt, dass die Messdatendiagnose auf beliebige Prüfaufgaben anpassbar ist. Dabei ist besonders darauf zu achten, dass die Parametrierung schnell, übersichtlich und zentral erfolgt. Um diese Anforderung zu erfüllen, wurde ein eigenes Parametrierkonzept entwickelt. Wie zuvor erläutert, muss eine Verknüpfung zwischen Messgrößen und physikalischen Formeln über das Normnamenmapping erfolgen. Für die Signalanalyse ist die physikalische Bedeutung eines Kanals dagegen irrelevant, da hier nur eine datenbasierte Analyse stattfindet. Hier stehen Grenzwerte und Wahrscheinlichkeiten im Vordergrund. Die Funktionen des Gerätechecks setzen entsprechende Informationen der Sondermessgeräte voraus. Daher müssen Diagnoseparameter vorhanden sein, die frei parametrierbar sind um die Diagnose auf spezifische Anforderungen anpassen zu können. Da für die Bedatung der freien Parameter neben entsprechenden Voreinstellungen auch die Interaktion mit dem Anwender notwendig ist, muss eine entsprechende Parameterkomponente integriert werden.

Die Parametrierung hat dabei die wesentlichen Funktionen Zugriff auf alle Parameter, die eine prüflaufspezifische Anpassung ermöglichen, zu geben und der Entwicklung einer allgemein gültigen Voreinstellung aller Diagnoseparameter. Für die prüflaufspezifische Anpassung wurden folgende Parametrierungsgruppen gebildet: Normnamenverwaltung, Stillstandsdiagnose, Betriebspunktwechselerkennung, Beharrungserkennung, Signalgüte, Plausibilität, Archivierung. Diese einzelnen Gruppen sorgen für eine gute Übersicht und einen schnellen Zugriff auf die gewünschte Einstellung.

So erfolgt z.B. die Auswahl der zu überwachenden Messkanäle (Normnamen) in der Normnamenverwaltung. In den weiteren Gruppen erscheinen dann nur noch die ausgewählten Kanäle.

Bei der Betriebspunktwechselerkennung oder bei der Beharrungserkennung können dagegen Messkanäle angegeben werden, die ein bestimmtes Systemverhalten beschreiben.

Die Parametrierung der Signalgüte und die Plausibilität bestimmen dagegen den Umfang der Fehlererkennung. Dabei wird automatisch anhand der ausgewählten Normnamen der maximal mögliche Methodenumfang bestimmt.

Die einzelnen Parametergruppen werden weiter unten gemeinsam mit den entsprechenden Funktionen der Fehlererkennung diskutiert.

Eine der wichtigsten und anspruchvollsten Aufgaben ist die Auswertung der Fehlererkennung und das Erkennen realer Fehler. Dies entspricht im Diagnoseworkflow den Hauptkomponenten Fehlerisolation, Fehleridentifikation und Fehlerklassifikation. Hierfür muss eine generische Ausgabelogik unter Berücksichtigung der einzelnen Fehlererkennungsmethoden und der Fehlersignifikanz entwickelt werden. Damit wird sichergestellt, dass der Anwender nicht durch eine Flut von Informationen überfordert wird. Gleichzeitig muss diese Logik mit einer entsprechenden Visualisierung verbunden sein, die verschiedene Informationsebenen für unterschiedliche Anwender bereithält. Die Umsetzung erfolgt mit der in Fig. 15 dargestellten Pyramidenstruktur.

In Ebene I werden Informationen zum Funktions- und Fehlerstatus der Diagnose angezeigt. Bei Bedarf stehen dem Anwender in Ebene II Informationen zur Diagnosehistorie zur Verfügung. In Ebene III kann der aktuelle Status aller Fehlererkennnungsfunktionen eingesehen werden. Auch bei der Ausgabelogik ist ebenfalls darauf zu achten, dass das nachträgliche Einbinden von Einzelfunktionen möglich ist. Das heißt, dass auch für die nachträgliche Implementierung von Einzelfunktionen ein generischer Prozess zur Auswertung der Fehlererkennung entworfen werden muss. Diese Komponente wird später im Zusammenhang mit der Fehlerisolation und Fehlerklassifikation vorgestellt.

Für einen reibungslosen Ablauf der Messdatendiagnose ist eine zielorientierte Datenverwaltung erforderlich. Dies bezieht sich sowohl auf das interne Datenmanagement als auch auf die Ergebnisverwaltung an sich. Das interne Datenmanagement wird in Form eine Minidatenbank realisiert. Diese Datenbank enthält folgende Datengruppen: Parametrierungsdaten, Informationen zu den angewendeten Methoden, Zwischenergebnisse, Fehlermeldungen, Benutzereingriffe.

Diese Informationen werden teilweise zu Beginn der Diagnose und teilweise online in die Datenbank geschrieben. Am Ende eines jeden Diagnosedurchgangs greifen dann die Fehlerisolation und die Fehlerklassifikation auf die Daten zu und produzieren online das Diagnoseergebnis. Das Diagnoseergebnis wird am Ende der Diagnose zusammen mit dokumentierten Benutzereingriffen und der Parametrierung in speziellen Dateien abgespeichert, die in der Datenbank des Prüfstandssystems entsprechend referenziert sind.

Freigabebedingungen sind ein wichtiges Steuerelement der Messdatendiagnose um prozess- oder geräteabhängige Besonderheiten richtig zu interpretieren. Beispiele hierfür sind das Füllen der Kraftstoffwaage oder ein Betriebs- bzw. Variationspunktwechsel. Zusätzlich müssen auch methodenspezifische Anforderungen beachtet werden, da z.B. die meisten Methoden der Fehlererkennung nur für den stationären Betriebspunkt gelten. Dies gilt besonders für die Signalanalyse und die Plausibilität. Die Begründungen zu den einzelnen Freigabebedingungen werden ebenfalls weiter unten für die einzelnen Methoden erläutert. Die wesentlichen Freigabebedingungen bei der Messdatendiagnose beziehen sich jedoch auf die Beharrungserkennung, die Gerätefreigabe und auf Sonderfreigaben wie z.B. die Niederlast- oder Sprungerkennung.

Unter Berücksichtigung der obigen Fakten ergibt sich der in Fig. 16 dargestellte Gesamtablauf der Diagnose.

Auf der Echtzeitebene des Prüfstandssystems werden die Rohdaten in Ringpuffer geschrieben um die Daten verlustfrei aus der Echtzeitebene in die Nicht-Echtzeit-Ebene zu transferieren. Die Größe der Ringbuffer ist von der eingestellten Erfassungsfrequenz für den entsprechenden Kanal abhängig. Diese Parametrierung erfolgt im Prüfstandssystem und ist nicht Bestandteil der Messdatenparametrierung. Die Information steht jedoch über entsprechende Schnittstelle für die Diagnose zur Verfügung.

Die Ringpuffer werden mit einer parametrierbaren Arbeitsfrequenz (z.B. fArbeit = 1Hz) ausgelesen und bilden Datenpakete mit n Elementen, die als Rohdaten für den Diagnoseprozess dienen. Wird z.B. die Drehzahl mit einer Abtastfrequenz von fAbtast = 1kHz erfasst, so besteht das Datenpaket aus n = 1000 Werten.

Aus Gründen der Systemleistung wurden diese Pakete bisher in der Regel ohne weitere Analyse einer Datenreduktion durch Filterung oder Mittelwertbildung zugeführt, wodurch bereits wichtige Informationen zur Signalqualität ungenutzt verloren gingen. Durch die vorliegende Arbeit werden diese Daten zukünftig durch die Hochfrequenz-Signalanalyse (HFA) analysiert. Außerdem besteht durch die HFA die Option zur Anwendung von Methoden für den Frequenzbereich. Am Ende der HFA wird das kanalspezifische Ergebnis an das interne Datenmanagement übergeben.

Die unmanipulierten Rohdatenpakete werden jetzt der Datenreduktion des Prüfstandssystems zugeführt. Diese reduziert die Datenpakete auf jeweils einen Messwert und legt diesen in einem dynamischen Speicherelement mit parametrierbarer Länge ab. Dieses Speicherelement wird im weiteren Verlauf der Arbeit als Datenbasis bezeichnet.

Die Datenbasis funktioniert wie ein Rollspeicher oder Schieberegister. Dabei wird ein Fenster mit festgelegter Länge über eine Zeitreihe verschoben, wie in Fig. 17 zu sehen ist. Sind alle Elemente des Rollspeichers belegt, wird beim nächsten Arbeitsschritt der gesamte Inhalt des Ringspeichers um ein Element verschoben. Hierdurch fällt der erste (älteste Wert) aus dem Speicher, so dass am Ende der aktuelle Mittelwert aus der Datenkomprimierung in den Rollspeicher geschrieben werden kann.

Bei einer Arbeitsfrequenz fArbeit = 1Hz steht eine Speicherlänge von z.B. 30 Werten gleichzeitig für einen Betrachtungszeitraum von 30 Sekunden. Der Inhalt der Datenbasis ist die Datengrundlage für nachfolgende Funktionen wie die Betriebspunktwechselerkennung, die Beharrungserkennung oder die Niederfrequenz-Signalanalyse (NFA).

Da für einige Fehlererkennungsfunktionen der genaue Zeitpunkt einer Veränderung im Prozessverhalten wichtig ist, wurde für sog. Führungs- oder Stellgrößen (z.B. Drehzahl, Moment oder Zündzeitpunkt) eine Betriebspunktwechselerkennung entwickelt. Begründet wird dies dadurch, dass eine sprunghafte Veränderung einer Führungsgröße in der Regel zu einem mathematisch beschreibbaren Antwortverhalten (z.B. PT1-Verhalten) in den Ausgangsgrößen führt. Durch die Eliminierung des Zeitverhaltens kann z.B. bei Temperatursignalen bereits vor Erreichen der Beharrung mit der Signalanalyse begonnen werden. Hierzu kann ein modellierter Funktionsverlauf mit Hilfe der ilfe der nichtlinearen Regression bestimmt werden. Da es sich hierbei um ein iteratives Verfahren handelt, muss der Startpunkt so genau wie möglich bestimmt werden.

Die Bestimmung des Beharrungszustands jedes einzelnen Kanals ist notwendig, weil viele der angewendeten Fehlererkennungsfunktionen nur für den stationären Betrieb eingesetzt werden dürfen, da Normalverteilung und Unabhängigkeit vorausgesetzt werden.

Wenn ein stationärer Zustand für den einzelnen Kanal erreicht ist, wird die Datenbasis auch gleichzeitig für die NFA verwendet, wie beispielsweise in Fig. 18 für die Drehzahl-Rohdaten dargestellt. Die Ergebnisse der Betriebspunktwechselerkennung, der Beharrungserkennung und der Niederfrequenzanalyse werden wie die HFA-Ergebnisse ebenfalls an das interne Datenmanagement übergeben.

Nach der Beharrungserkennung werden die aktuellen Messwerte der zu überwachenden Kanäle einer Plausibilitätsprüfung durch physikalische, logische und empirische Fehlererkennungsfunktionen zugeführt. Der Umfang der Prüfung hängt von den zur Verfügung stehenden Informationen und Messgrößen ab. Über die Parametrierung können alle Einzelfunktionen aus dem Funktionspool ausgewählt werden, die mit den verfügbaren Informationen berechnet werden können. Auch hier werden am Ende die Einzelergebnisse wieder an das interne Datenmanagement übertragen.

Die Bewertung der Teilergebnisse erfolgt in den Hauptkomponenten Fehlerisolation und Fehleridentifikation. Hier werden die Teilergebnisse miteinander verknüpft und über verschiedene Logikblöcke auf die zu überwachenden Messkanäle zurückgeführt. In einem weiteren Logikblock erfolgt die Bewertung der Fehlersignifikanz. D.h. es wird bestimmt, wie lange und wie ausgeprägt ein fehlerhafter oder unplausibler Zustand vorlag und ob dieser Zustand definierte Zeit- und Betragsgrenzwerte überschritten hat. Das Ergebnis der Auswertung, die Fehlerklassifikation, wird parallel visualisiert und dokumentiert.

Bei der Dokumentation ist besonders darauf zu achten, dass neben dem Diagnoseergebnis auch alle Einstellungen aus der Parametrierung und alle Anwenderreaktionen mit den Messdaten protokolliert und abgespeichert werden. Hierdurch kann das Diagnoseergebnis jederzeit reproduziert werden.

Nachfolgend sollen beispielhaft jene Einzelfunktionen beschrieben und erläutert werden, die für die Umsetzung der integrierten Messdatendiagnose untersucht und implementiert wurden. Besonderes Augenmerk liegt dabei auf Aspekten wie Detektionsschärfe, Trennschärfe, freie Parameter und Randbedingungen für die Anwendung gelegt.

Der Gerätecheck gehört zu den Methoden mit der höchsten Trennschärfe, da mit dieser Methode immer eine exakte (100%) Identifikation eines fehlerhaften Kanals oder Messgerätes erfolgt. Die Prüfung kann dabei entweder direkt oder indirekt oder durch beide Pfade erfolgen.

Beim direkten Gerätecheck wird der sog. Statuskanal verwendet, den jedes Messgerät als Rückgabewert liefern sollte. Nach VDI/VDE 2650 Blatt 1 enthalten geräteeigene Statussignale Informationen über den Zustand eines Gerätes. Dabei stehen Informationen zu Ausfall, Wartungsbedarf, Funktionskontrolle oder ein Betrieb außerhalb der Spezifikation zur Verfügung. Im Prüfstandssystem können ebenfalls spezielle Kanäle abgefragt werden, die entsprechende Informationen zu Sondermessgeräten bereitstellen. Diese Fehlerkanäle (Meldungskanäle) werden, genau wie Messwerte, in parametrierbaren Intervallen abgefragt und stellen folgende Information bereit:

| Wert | Fehlerart |
|------|-----------|
| 0 | No error |
| -1 | Communication Timeout |
| -2 | Port Error |
| -3 | Parsing Error |
| -4 | Overrun |

Für die Schnittstellenverbindung kann der Anfragestatus für die Synchronisation mit Puma abgefragt werden (0 = Busy / <> 0... Not Busy).

Betrachtet man z.B. eine Kraftstoffwaage, so kann der Kraftstoffmassenstrom nur dann für die Diagnose verwendet werden, wenn die Kraftstoffwaage im Messbetrieb ist und keine Fehler aufweist. Wenn sich die Waage im Füllmodus befindet, sollte keine Fehlererkennung erfolgen, da in diesem Modus keine Beurteilung möglich ist. Die entsprechende Steuerung erfolgt ebenfalls über den Gerätestatus und über Freigabebedingungen.

Der indirekte Gerätecheck berücksichtigt, dass nur Messsignale, ohne weitere Informationen zum entsprechenden Messgerät verfügbar sind. Für diesen Fall werden eine Anti-Freeze-Funktion und ein sogenannter NaN-Ceck eingeführt. Beide Methoden beziehen sich auf bestimmte Dateneigenschaften im Fehlerfall.

Die Anti-Freeze-Funktion kann sowohl für die HFA als auch für die NFA angewendet werden. Die Wahrscheinlichkeit dafür, dass bei intakter Kommunikation über eine Schnittstelle mehrere aufeinander folgende Werte genau gleich sind, ist sehr gering. Diese Tatsache bildet den Hintergrund der Anti-Freeze-Funktion. Mathematisch lässt sich dieser Sachverhalt über die Standardabweichung prüfen, da technische Prozesse in der Regel mit einem natürlichen Rauschen behaftet sind und somit $s \neq 0$ gelten muss. Im Umkehrschluss ist der Fall $s = 0$ unwahrscheinlich, solange das Prozessrauschen nicht durch die digitale Auflösung verdeckt wird. In Fig. 19 ist hierzu das Beispiel einer defekten Lambdasonde dargestellt, die mit der Anti-Freeze-Funktion erkannt wurde. Bei diesem Beispiel handelt es sich um eine externe Lambdasonde an einem TDI-Motor. Die OBD des Motors kann diesen Fehler also nicht erkennen. Auch die physikalischen Methoden scheitern an diesem Beispiel, da immer noch "plausible" Messwerte vorhanden sind. Dieser Fehler kann also nur über die Anti-Freeze-Funktion oder über spezielle statistische Ansätze erkannt werden.

Bei der Anti-Freeze-Funktion wird eine parametrierbare Anzahl von äquidistanten erfassten Werten auf Gleichheit bzw. auf die Bedingung $s \neq 0$ geprüft. Für den Fall $s = 0$ gilt die Schnittstelle zum entsprechenden Gerät als eingefroren und es wird ein Fehler der höchsten Prioritätsstufe (Geräteausfall / Sensorausfall) ausgegeben.

Im Gegensatz zur Anti-Freeze-Funktion nutzt die NaN-Funktion die Tatsache, dass Gerätefehler häufig "definierte Fehlermesswerte" wie *****, 1EXP10 oder ##### zurückgeben. Hierbei handelt es oft um nicht numerische Werte, die der Methode den Namen gegeben haben (NaN = not a number). Fig. 20 zeigt dies am Beispiel der Indizierung. Hier konnte während der Messung immer wieder ein Ausfall der Datenübertragung festgestellt werden.

Die NaN-Funktion geprüft, ob eine parametrierbare Anzahl kritischer Werte in der Datenbasis überschritten wird. Bei Überschreitung erfolgt wie bei der Anti-Freeze-Funktion ebenfalls ein Geräte- oder Sensorfehler mit höchster Priorität. Die einfache Funktion und der geringe Rechenaufwand erlauben ebenfalls, dass die Methode sowohl zur HFA als auch zur NFA verwendet werden kann. Bei der HFA-Variante wird dann aber der Echtzeit-Ringpuffer als Datenbasis herangezogen. In der Parametrierung muss lediglich eine Angabe für die maximale zulässige Anzahl von NaN-Werten bzw. die maximal zulässige Anzahl gleicher Werte erfolgen.

Der Limitcheck wird im Rahmen der HAF eingesetzt und entspricht einer klassischen Grenzwertüberwachung. In der Parametrierung werden hierzu kanalspezifische Grenzwerte angegeben (z.B. HC > 0). Mit dieser einfachen Funktion können einzelne Kanäle bewertet werden, für die entweder keine expliziten Fehlererkennungsmethoden existieren oder für die bestimmte Grenzen von vorneherein bekannt sind.

So gilt z.B., dass alle Abgasrohemissionen > 0 sein müssen. Genauso kann der Wirkungsgrad durch $\eta e <$ 40% oder der spezifische Verbrauch versuchsspezifisch auf be,min > 160 g/kWh limitiert werden.

Damit hat der Limitcheck dieselbe Trennschärfe wie der Geräteckeck, da auch hier eine direkte Zuweisung von Fehler und Messkanal erfolgt. Dementsprechend wird bei einer Limitverletzung auch ein Fehler der höchsten Prioritätsstufe mit p = 1 ausgegeben. Parameter sind die kanalspezifischen Minima und Maxima.

Die Bewertung der Signalqualität bedeutet für Prüfstandsdaten dass die sie frei von Ausreißern, unzulässigem Rauschen, Drift oder anderen Störungen sein sollen, die zu Fehlinterpretationen und zu falschen Schlussfolgerungen führen. Die Bewertung der Signalqualität ist genau auf die genannten datenbezogenen Unregelmäßigkeiten fokussiert. Ziel ist es, ohne physikalische Systeminformationen Auffälligkeiten in beliebigen Signalen zu detektieren.

Die Bewertung der Signalqualität wird dabei in die drei Bereiche Signalformanalyse, Hochfrequenz-Signalanalyse (HFA) und Niederfrequenz-Signalanalyse (NFA) unterteilt. Sie hat die Aufgabe spezielle Funktionsverläufe in den Messdaten detektieren. Diese lassen wiederum Schlüsse auf das aktuelle Systemverhalten zu.

Im Rahmen der HFA werden klassische Methoden der Signalverarbeitung (z.B. FFT) auf hochfrequent abgetastete Messdaten angewendet. Ziel ist die Extrahierung von Informationen über den zu überwachenden Prozess und über die Qualität der ihn beschreibenden Signale. Der Fokus liegt dabei auf der digitalen (diskreten) Signalanalyse.

Die NFA dient zur Analyse der gefilterten Messdaten. Hierunter sind jene Daten zu verstehen, die klassischerweise an einem Prüfstandsystem aufgezeichnet und visualisiert werden. Hierbei handelt es sich also um Daten mit einer Frequenz von 1 bis 10Hz.

Die Analyse des Signalverlaufs hat die Aufgabe charakteristische Funktionsverläufe zu erkennen um dadurch grundsätzliche Aussagen über den beobachteten Prozess zu treffen. Als Grundlage dient auch hier wieder die Datenbasis.

Im Rahmen der Messdatendiagnose werden folgende, für Prüfstände und Messdaten typische Signalverläufe betrachtet wie etwa permanent (Sprung), Sättigung / Abklingen, driftförmig, Schwebung / Schwingung, intermittierend, regellos oder ausreißerbehaftet. Eine explizite Diskussion des Signalverlaufs erfolgt jedoch nur für die ersten vier Signalverläufe. Intermetierende, regellose oder ausreißerbehaftete Signale werden im Rahmen der Bewertung der Signalqualität berücksichtigt.

Ein sprungförmiges Ereignis tritt in der Regel nur bei sogenannten Soll- oder Führungsgrößen auf. Bei DoE-Anwendungen werden solche Größen auch als Faktoren bezeichnet. Beispiele hierfür sind Betriebspunkt- oder Variationspunktwechsel. Die Veränderung des Zündzeitpunkts bei gleichem Betriebspunkt wird z.B. als Variationspunktwechsel bezeichnet.

Mathematisch ist der Sprung ein unstetiges Ereignis. Die Beschreibung ist schwierig, da klassische Identifikationsverfahren wie die lineare Regression ausscheiden. Eine einfache Sprung- oder Betriebspunktwechselerkennung wird weiter unten vorgestellt.

Für die statistische Signalanalyse ist die Sprungerkennung besonders wichtig, da hierdurch ein instationäres Betriebsverhalten ausgelöst wird. Außerdem kann mit der Sprungerkennung der genaue Zeitpunkt eines Betriebspunktwechsels ermittelt werden. Diese Information wird bei iterativen Anfangswertverfahren als Startzeitpunkt benötigt.

Neben den Sollgrößen gibt es auch sogenannte Responses oder Antwortgrößen. Sie beschreiben die Systemantwort auf eine sprunghafte Veränderung der Führungsgrößen. Dieses Verhalten wird in der Regelungstechnik z.B. als PT1-Verhalten bezeichnet und durch die Differentialgleichung

$$T \cdot \dot{y}(t) + y(t) = K \cdot u(t) \qquad\qquad \text{[Gln.5.1]}$$

beschrieben. Die Sprungantwort im Zeitbereich ergibt sich aus der Lösung von Gln. 5.1.

$$y(t) = K\left(1 - e^{-\lambda t}\right) + b \quad\text{mit}\quad \lambda = \frac{1}{T} \qquad\qquad \text{[Gln.5.2]}$$

Im Umkehrschluss kann man sich dieses Wissen zu nutze machen und aus der Datenbasis die Parameter der Sprungantwort schätzen. Hierbei handelt es sich um ein nichtlineares Anfangswertproblem.

Die Berechnung der Parameter kann z.B. über das Gauss-Newton-Verfahren erfolgen. Die notwendigen partiellen ersten Ableitungen zum Aufstellen der Jacobi-Matrix, ergeben sich zu:

$$\frac{\partial y(t)}{\partial K} = 1 - e^{-\lambda t} \qquad\qquad \text{[Gln.5.3a]}$$

$$\frac{\partial y(t)}{\partial b} = 1 \qquad\qquad\qquad\qquad \text{[Gln.5.3b]}$$

$$\frac{\partial y(t)}{\partial \lambda} = t \cdot K \cdot e^{-\lambda t} \qquad\qquad\qquad\qquad \text{[Gln.5.3c]}$$

Grundlage ist die Methode der kleinsten Fehlerquadrate. Wie bei der linearen Regression wird auch hier eine Residuumsgleichung vom Typ

$$F(x) = \frac{1}{2}\sum_{i=1}^{m}(f_i(x))^2 = \frac{1}{2}\|f(x)\|^2 = \frac{1}{2}f(x)^T f(x) \qquad\qquad \text{[Gln. 5.4]}$$

angesetzt. Für ein PT1-Verhalten wird Gln. 5.2 als Ansatz verwendet.

Zur Lösung muss $\|f(x)\|$ minimiert werden. Aus der einschlägigen Fachliteratur kann man entnehmen, dass die Lösung von

$$(J^T J)h_{gn} = -J^T f \ \ \text{mit} \ \ f = \begin{pmatrix} f_1(x) \\ \vdots \\ f_m(x) \end{pmatrix} \qquad\qquad \text{[Gln. 5.5]}$$

zu einem eindeutigen Minimierer führt. Hierzu wird zunächst die Jakobi-Matrix J berechnet. Sie wird auch als Funktionalmatrix einer differenzierbaren Funktion bezeichnet und ist die m x n - Matrix sämtlicher erster partieller Ableitungen (Gln. 5.3a bis 5.3c). Durch Umstellen erhält man Gln. 5.6 und damit auch die Iterationsgleichung 5.7.

$$h_{gn} = -J^T f (J^T J)^{-1} \qquad\qquad\qquad\qquad \text{[Gln. 5.6]}$$

$$x := x + \alpha h_{gn} \qquad\qquad\qquad\qquad \text{[Gln. 5.7]}$$

Das klassische Gauss-Newton-Verfahren verwendet $\alpha = 1$.

Da für jeden Iterationsschritt die Jacobi-Matrix und der Vektor f mit dem Ergebnis für x neu berechnet werden müssen, wird die Iteration nach max. 10 Schritten abgebrochen.

Neben dem richtigen Startpunkt ist auch die Wahl der Startwerte wichtig, was zur Entwicklung einer entsprechenden Startwertsuche führte. Für den PT1-Ansatz werden die Startwerte wie folgt bestimmt:

K = max(Datenbasis) - min(Datenbasis);
$\lambda$ = 0.05;
b = Datenbasis(1)

Als Qualitätskriterium für die Schätzung wird das Bestimmtheitsmaß $R^2$ herangezogen. Bei $R^2 > 0{,}8$ spricht man von einer guten Schätzung.

Fig. 21 zeigt die Anwendung des PT1-Ansatzes zur Modellierung der Abgastemperatur am Beispiel eines Lastsprungs am 2.21 DI-Ottomotor bei 2000min-1. Nach dem Lastsprung wurde hierzu mit der Arbeitsfrequenz fArbeit = 1Hz jeweils das Gauss-Newton-Verfahren mit 10 Iterationen angewendet. Die berechneten Parameter und das dazugehörige Bestimmtheitsmaß sind in Tabelle T5.1 zusammengefasst.

Tabelle T5.1 Ergebnis der Nichtlinearen Regression

| Anzahl der Werte | Parameter K | Parameter λ | Parameter b | $R^2$ |
|---|---|---|---|---|
| 5 | 305,0495 | 0,1993 | 324,8798 | 0,9573 |
| 10 | 207,5942 | 0,4026 | 319,3854 | 0,9626 |
| 25 | 206,8475 | 0,4007 | 319,8225 | 0,9706 |
| 50 | 210,3767 | 0,3574 | 323,1316 | 0,9604 |

Die Angaben zu $R^2$ beziehen sich jeweils nur auf das Berechnungsintervall.

Inwieweit mit dieser Methode der Beharrungszustand vorherberechnet werden kann, ist aus den Fig. 21 und 22 zu erkennen. Diese zeigen das mit den Parametern aus T5.1 entsprechend extrapolierte Signalverhalten und weisen nach, dass sich das PT1-Modell unter Verwendung entsprechender Startwerte sehr gut zur Beschreibung eines diskreten Intervalls eignet. Damit eignet sich der Ansatz z.B. zur Kompensation des Zeitverhaltens bei Temperaturkanälen. Eine Extrapolation kann jedoch nicht empfohlen werden, da weder der Endwert noch der Übergang in die Asymptote von keinem der gezeigten Verläufe richtig dargestellt wird.

Unter dem Begriff Drift versteht man im Allgemeinen eine verhältnismäßig langsame Änderung eines Wertes oder einer Systemeigenschaft. Mathematisch kann die Drift durch eine einfache Gerade nach Gln. 5.8 beschrieben werden.

$$y(t) = a_1 + a_2 \cdot t \qquad\qquad \text{[Gln. 5.8]}$$

Das adäquate Verfahren zur Schätzung der Parameter wird als lineare Regression bezeichnet. Die Parameter a1 und a2 werden nach Gln. 5.9 und Gln. 5.10 aus den Messdaten berechnet.

$$a_2 = \frac{n \cdot \sum_{i=1}^{n} t_i y_i - \left(\sum_{i=1}^{n} t_i\right)\left(\sum_{i=1}^{n} y_i\right)}{n \cdot \sum_{i=1}^{n} t_i^2 - \left(\sum_{i=1}^{n} t_i\right)^2} = \frac{\sum_{i=1}^{n} t_i y_i - n \bar{t}\bar{y}}{\sum_{i=1}^{n} t_i^2 - n \bar{t}^2} = \frac{\sum_{i=1}^{n} (t_i - \bar{t})(y_i - \bar{y})}{\sum_{i=1}^{n} (t_i - \bar{t})^2} \qquad \text{[Gln. 5.9]}$$

$$a_1 = \frac{\left(\sum_{i=1}^{n} t_i^2\right)\left(\sum_{i=1}^{n} y_i\right) - \left(\sum_{i=1}^{n} t_i\right)\left(\sum_{i=1}^{n} t_i y_i\right)}{n \cdot \sum_{i=1}^{n} t_{i_i}^2 - \left(\sum_{i=1}^{n} t_i\right)^2} = \bar{y} - a_2 t \qquad \text{[Gln. 5.10]}$$

Da die Berechnung der Regressionsgeraden schnell und einfach erfolgt eignet sich dieses Verfahren hervorragend zur einfachen Bewertung der Beharrung. Dieser Ansatz ist daher auch Teil der später beschriebenen Beharrungserkennung.

Um aus der Datenbasis die freien Parameter einer Schwingung oder Schwebung zu berechnet kann ebenfalls die Methode der nichtlinearen Regression angewendet werden. Als Ansatz wird entweder die harmonische Schwingung nach Gln. 5.11

$$y(t) = \hat{y} \cdot \sin\left(2\pi f \cdot t + \varphi\right) \qquad \text{[Gln. 5.11]}$$

oder eine Schwebung nach Gln. 5.12 angesetzt.

$$y(t) = 2\hat{y}\sin\left(2\pi\,\frac{f_1 + f_2}{2}\,t\right) \cdot \cos\left(2\pi\,\frac{f_1 - f_2}{2}\,t\right) \qquad \text{[Gln. 5.12]}$$

Die harmonische Schwingung ist durch die Parameter Amplitude $\hat{y}$, die Frequenz f und die Phasenverschiebung φ gekennzeichnet. Im Gegensatz zur harmonischen Schwingung wird eine Schwebung als die Superposition zweier Schwingungen mit ähnlicher Frequenz verstanden. Neben der Amplitude sind die Frequenzen f1 und f2 zu bestimmen. Dabei wird vereinfachend angenommen, dass es sich um eine reine Schwebung handelt, d.h. dass die Amplitude des Sinus-Glieds die gleiche ist wie die des Kosinus-Glieds. Häufig konnte aber ein Versagen des Gauss-Newton-Verfahrens bei der Regression von Schwingungsmodellen erkannt werden, da bereits bei der ersten Iterationsschleife det(J'*J) = 0 auftrat.

Die Bewertung der Signalqualität ist eine der zentralen Aufgaben der integrierten Messdatendiagnose. Bei der hierzu notwendigen Signalanalyse wird sowohl das zeitliche Verhalten, als auch das Verhältnis vom Nutzsignal zu möglichen Störungen und Rauschsignalen untersucht. Die Device-Architektur erlaubt erstmals eine Rohdatenanalyse der Echtzeitdaten vor einer Datenmanipulation durch Mittelwertbildung oder Filterung. Durch den Zugriff auf die Rohmessdaten teilt sich die Bewertung der Signalqualität nach Fig. 23 in eine Hochfrequenz-Signalanalyse und eine Niederfrequenz-Signalanalyse auf.

In der Messtechnik ist es üblich, dass sich die Erfassungsfrequenz von der Arbeitsfrequenz unterscheidet. Dies begründet sich durch das Abtasttheorem nach Shannon. Das Abtasttheorem besagt, dass ein kontinuierliches Signal mit einer Erfassungsfrequenz fErfassung ≥ 2 * fArbeit,max abgetastet werden muss, damit man aus dem so erhaltenen zeitdiskreten Signal das Ursprungssignal ohne Informationsverlust rekonstruieren kann. Wird das Theorem nicht beachtet, können sog. Aliasing-Effekte auftreten.

Die kanalspezifische Erfassungs- und Arbeitsfrequenz kann am Prüfstandssystem durch den Anwender angeben werden. Der Anwender kann hier z.B. angeben, dass ein Drehzahlsignal mit fErfassung = 1000Hz abgetastet, im System aber nur mit fArbeit = 10Hz angezeigt wird. Hierdurch wird im Systemkanal ein entsprechender Ringbuffer angelegt. Dieser Ringbuffer ist die Datenquelle der Hochfrequenz-Signalanalyse (HFA). Durch die Integration der Messdatendiagnose als Device ist der Zugang zu diesen Daten möglich geworden. Hochfrequent bezeichnet dabei Daten, die mit einer Erfassungsfrequenz > 10Hz gemessen wurden. Damit eröffnen sich neue Möglichkeiten für die integrierte Messdatendiagnose im Zeit- und Frequenzbereich, die unter dem Kapitel Hochfrequenz-Signalanalyse (HFA) zusammengefasst werden. Grundsätzlich können die, in diesem Kapitel vorgestellten Methoden natürlich auch für die Niederfrequenz-Signalanalyse (NFA) angewendet werden.

HFA und NFA unterscheiden sich im Wesentlichen also durch die zu untersuchende Datenbasis. Bei der HFA sind es eben die Rohmessdaten, aus denn später durch Filterung oder Mittelwertbildung die am Prüfstandssystem angezeigten Messdaten entstehen. Neu ist dabei, dass durch die HFA die Qualität dieser Messdaten beurteilt werden kann.

Für den Frequenzbereich können beispielsweise folgende Kennwerte und Kennfunktionen herangezogen werden: die diskrete Fouriertransformation (FFT) y(n), die Leistungsdiche *Syy(iω)* bzw. die Autokorrelationsfunktion *Ryy(τ)*.

Die Autokorrelationsfunktion ist dabei die wichtigste Kennfunktion, da sie die Korrelation eines Signals mit sich selbst bei unterschiedlichen Zeitverschiebungen t beschreibt. Für das Zeitsignal x(t) errechnet sich *Ryy(τ)* im Zeitfenster TF nach Gln. 5.13.

$$R_{YY}(\tau) = \lim_{\tau \to \infty} \frac{1}{T_F} \int x(t) \cdot x(t + \tau)\,dt \qquad \text{[Gln. 5.13]}$$

$R_{yy}$ zeichnet sich dabei durch Spitzen bei $\tau = 0$ aus, da sie dort einen Wert proportional zur mittleren Leistung der Funktion annimmt. In der digitalen Signalanalyse wird die Autokorrelationsfunktion in der Regel über die inverse Fouriertransformation (iFFT) des Leistungsspektrums Syy (Gln. 5.14) berechnet.

$$R_{YY}(\tau) = \int S_{YY}(f) \cdot e^{i2\pi f \tau}\, df \qquad \text{[Gln. 5.14]}$$

Mit der $R_{yy}$ können z.B. Periodizitäten in stark verrauschten Signalen identifiziert werden. Zu diesem Zweck wird allerdings nur die Autokorrelationsfunktion für große Werte von betrachtet und der Bereich um $\tau = 0$ vernachlässigt, da hier vor allem Informationen über die Stärke des Rauschsignals enthalten sind.

Genau die gegenteilige Auswertung der Autokorrelationsfunktion erfolg bei der Berechnung des Signal-Rausch-Verhältnisses (SNR). Bei $\tau = 0$ repräsentiert die Autokorrelationsfunktion für Leistungssignalen den quadratischen Mittelwert bzw. die Signalenergie bei Energiesignalen. Diese Eigenschaft wird zur Berechnung des SNR ausgenutzt (Gln. 5.15).

$$SNR = 10 \cdot \log_{10}\left(\frac{S_X}{N_X}\right) \qquad \text{[Gln. 5.15]}$$

SX beschreibt dabei die Autokorrelationsfunktion ohne Rauschen an der Stelle 0 (Nutzsignal) und NX beschreibt die Höhe der Rauschspitze. Praktisch bedeutet dies, dass aus dem Zeitsignal x(t) zunächst die Fouriertransformierte y (n) und nach Gln. 5.16 das Leistungsspektrum Syy berechnet wird.

$$S_{YY}(f) = X^*(f) \cdot X(f) = \left| X(f)^2 \right| \qquad \text{[Gln. 5.16]}$$

Über die inverse Fourier-Transformation (iFFT) des Leistungsspektrums gelangt man zur Autokorrelationsfunktion. Aus dieser kann nun nach Gln. 5.17 das SNR berechnet werden.

$$SNR = 10 \cdot \log_{10}\left(\frac{\frac{1}{N}\sum_{i=2}^{N} AKF(i)}{AKF(1) - \frac{1}{N}\sum_{i=2}^{N} AKF(i)}\right) \qquad \text{[Gln. 5.17]}$$

Da die Signalleistung in der Regel um mehrere Größenordnungen größer als die Rausch- oder Störleistung ist, wird das SNR in Dezibel (dB) angegeben. Inn welchen Bereichen das SNR liegen muss, damit von einem guten Signal ausgegangen werden kann, konnte für Messdaten in der einschlägigen Fachliteratur (Signalverarbeitung und Nachrichtentechnik) nicht ermittelt werden. Um Sprache für den Menschen verständlich zu übertragen ist z.B. ein SNR von ca. 6dB erforderlich. In der Videotechnik wird ein Signal als gut bezeichnet, wenn SNR > 60 vorliegt. Dies entspricht einem Verhältnis 1000000 / 1 von Nutzsignal zu Rauschsignal. In Fig. 24 ist exemplarisch das Resultat für eine 1 Hz-Stationärstufenmessung dargestellt, die entsprechenden Werte für SNR sind in Tabelle T5.2 zusammengefasst.

| Zeit<br>Kanal | 0-200s | 250-<br>400s | 550-650s | 700-<br>900s | 950-1150s |
|---|---|---|---|---|---|
| Drehzahl | 70,5 | 70,0 | 63,8 | 70,4 | 70,9 |
| Drehmoment | 27,8 | 47,0 | 52,8 | 46,8 | 27,9 |
| Kühlmitteltemperatur | 42,7 | 45,7 | 46,6 | 46,6 | 45,7 |
| Öltemperatur | 43,0 | 52,6 | 43,5 | 59,6 | 42,0 |
| Abgastemperatur | 40,2 | 41,5 | 59,9 | 41,1 | 40,7 |
| Luftmassenstrom | 29,1 | 36,9 | 44,6 | 36,1 | 28,9 |
| eff. Mitteldruck | 27,7 | 46,6 | 53,9 | 46,8 | 27,9 |
| Saugrohrdruck | 73,3 | 72,7 | 73,5 | 72,9 | 72,8 |
| Lambda | 28,9 | 36,3 | 43,0 | 35,5 | 28,3 |
| spez. Kraftstoff-<br>verbrauch | 27,4 | 41,4 | 46,2 | 42,8 | 28,0 |

Tabelle T5.2 Signal-Rausch-Verhältnisse in dB zu Fig. 24

Tabelle T5.2 gibt das Ergebnis der Untersuchung sehr gut wieder. SNR > 50 sind bei den meisten Prüfstandsdaten nur selten anzutreffen. Deutlich häufiger sind Werte im Bereich 30dB < SNR < 50dB. Aus diesem Grund erfolgte eine detaillierte Untersuchung zufällig ausgewählter Stichproben um festzustellen, ob die Qualität des betrachteten Signals bei einer ingenieurmäßigen Analyse als gut oder als schlecht eingestuft würde. Anschließend erfolgte ein Abgleich zwischen dem Untersuchungsergebnis und dem genannten SNR-Bereich. Das Vorgehen wird am Beispiel des effektiven Mitteldruckes aus Fig. 24 dargestellt.

| SNR<br>[dB] | Mittelwert<br>[bar] | Min<br>[bar] | Max<br>[bar] | σ | σ in [%] | Zeitbereich<br>[s] |
|---|---|---|---|---|---|---|
| 27,7 | 2,07 | 1,89 | 2,27 | 0,08 | 4,10 | 0-200 |
| 46,6 | 9,69 | 9,56 | 9,80 | 0,05 | 0,47 | 250-400 |
| 53,9 | 19,16 | 19,06 | 19,28 | 0,04 | 0,20 | 550-650 |
| 46,8 | 9,72 | 9,57 | 9,85 | 0,05 | 0,46 | 700-900 |
| 27,9 | 2,05 | 1,90 | 2,23 | 0,08 | 4,03 | 950-1150 |

Tabelle T5.3 Die ingenieuermäßige Signalanalyse im Vergleich um SNR

Bei Punkten niedriger Last (pme = 2bar) fällt sofort auf, dass das SNR deutlich schlechter ist als in den höheren Lastpunkten. Eine Schwankung von 4 % im Mitteldruck würde ein erfahrener Ingenieur ebenfalls als ungenügend bezeichnen. Diese Aussage deckt sich gleichzeitig mit einem relativ kleinen SNR von 27,7dB. Im Bestpunk kann dagegen mit SNR = 53,9dB ein etwa doppelt so gutes SNR realisiert werden. Aus den Untersuchungen zum SNR werden für die Messdatendiagnose folgende Grenzwerte festgelegt:

Tabelle T5.4 Kritische Werte für das Signal-Rausch-Verhältnis

| Prüfungen | Detektionsschärfe | Toleranz |
|---|---|---|
| SNR | Hoch | 40dB |
| | Mittel | 30dB |
| | Niedrig | 20dB |

Eine weitere Möglichkeit zur Bewertung der Signalqualität im Zeitbereich ist die Median-Deviation. Die Analyse erfolgt über den Vergleich der Median-Deviation mit einem definierten Grenzwert r (Tabelle T5.5).

Tabelle T5.5 Kritische Werte für das Signal-Rausch-Verhältnis

| Prüfungen | Detektionsschärfe | Toleranz |
|---|---|---|
| **Median-Deviation** | Hoch | r = 3 |
| | Mittel | r = 3,5 |
| | Niedrig | r = 4 |

Die Median-Deviation ist ein äußerst robustes Streumaß dass sich im betrachteten Fall aus den Einzelwerten $x_i$ und dem Median der Ringpufifer $\tilde{x}$ nach Gln. 5.18 berechnet.

$$\tilde{D} = Median\{|x_i - \tilde{x}|\} \qquad \text{[Gln. 5.18]}$$

Die Prüfgröße F ergibt sich unter Berücksichtigung von Gln. 5.18 zu

$$F = \frac{\tilde{D}}{median(x_i)} \ , \qquad \text{[Gln. 5.19]}$$

die anschließend gegen den parametrierten Grenzwert r geprüft wird. Für die Berechnung der Prüfgröße werden dabei mindestens 10 Messwerte aus der Echtzeitebene vorausgesetzt. Bei Abtastfrequenzen fabtast < 10 Hz wird automatisch eine Speicherprozedur gestartet, die in Abhängigkeit der entsprechenden Abtastfrequenz eine definierte Anzahl von n Datenpaketen temporär speichert. Hierdurch kann der Dateninhalt des aktuellen Echtzeitrollspeichers mit Daten aus vorangegangenen Datenpaketen aufgefüllt werden, so dass immer genug Echtzeitstichprobenwerte zur Berechnung der Prüfgröße zur Verfügung stehen. In Abhängigkeit der Bedingung

$$F > r \qquad \text{[Gln. 5.20]}$$

erfolgt ein entsprechender, binärer Fehlereintrag. Um einfach zu einem binären Ergebnis der HFA zu gelangen, sollte nur eines der beiden vorgestellten Verfahren aktiviert werden. Im Rahmen der vorliegenden Arbeit wird das Vorgehen nach Gln. 5.17 bevorzugt. Damit hat die HFA eine Trennschärfe von p = 1, da das entsprechende Signal zu Zeitpunkt t die Prüfung F > r bzw. SNR > SNRkrit entweder erfüllt oder nicht.

Im Gegensatz zur HFA besteht bei der NFA die Möglichkeit zwischen einem anwenderbasierten und einem automatischen Ansatz zu wählen.

Beim später erläuterten anwenderspezifischen Ansatz erfolgt die Angabe der entsprechenden relativen oder absoluten Grenzen durch den Anwender im Rahmen der Parametrierung. Die Methoden des ebenfalls später erläuterten automatischen Ansatzes dienen dagegen in erster Linie zur Berechnung von Grenzen, innerhalb derer sich die Messdaten bewegen sollten, um statistisch unauffällig zu sein.

Die Bewertung erfolgt dabei im Prinzip durch eine Grenzwertüberwachung, bei der die entsprechenden Grenzwerte entweder anhand statistischer Methoden oder durch die Parametrierung bestimmt werden. Diese Art der Grenzwertüberwachung ist jedoch nicht mit dem zuvor erläuterten Limitcheck zu verwechseln. Im Unterschied dazu gelten die entsprechenden Grenzen bei der Signalanalyse immer nur für das parametrierbare Intervall [t-n,t].

Während der NFA werden aus der Datenbasis Kennwerte, Grenzwerte oder Prüfgrößen berechnet (siehe Fig. 25). Anschließend erfolgt ein Vergleich der Elemente der Datenbasis mit den berechneten Grenzwerten. Dabei wird ermittelt, ob und wie viele Elemente der Stichprobe außerhalb der zulässigen Grenzen liegen. Die Anzahl der auffälligen Werte und statistischen Grundannahmen lassen eine direkte Aussage zur Signalqualität zu. Weiterhin kann bestimmt werden, ob sich der Prozess bzw. das entsprechende Signal während des Überwachungsintervalls im Zustand der statistischen Kontrolle befunden hat.

An dieser Stelle erfolgt nochmals der ausdrücklich Hinweis darauf, dass die statistische Signalanalyse nur mathematisch begründete Rückschlüsse liefert, die niemals Auskunft über die physikalische Plausibilität geben. Sie liefert lediglich Informationen, die auf statistisch begründete Auffälligkeiten hindeuten. Durch benutzerdefinierte Grenzwerte (absolut oder relativ) kann jedoch einer Berücksichtigung des Messprinzips und des physikalischen Verhaltens der entsprechenden Messstelle erfolgen. Hierzu muss neben einer entsprechenden Parametrierung ein Vergleich zwischen den Stichprobenwerten xi und den Grenzwerten eingebaut werden.

Für die automatische Signalanalyse werden statistische Ansätze bevorzugt. Diesbezüglich gibt es eine Vielzahl von statistischen Tests und Methoden zur Bestimmung von Stichprobenkennwerten, Lagemaßen, Ausreißern oder anderen charakteristischen Größen. Dabei ist zu beachten, dass statistische Grenzen manchmal so eng berechnet sein können, dass diese Grenzen physikalisch oder aus messtechnischer Sicht nicht realisierbar sind. Deutlich zu enge oder zu weit berechnete Grenzen sind in der Regel aber ein Indiz für die Verletzung der bereits genannten Randbedingungen oder das Ergebnis von Signalausfällen oder von Schnittstellenproblemen. Dies begründet sich in den meisten Fällen durch eine sehr große oder sehr kleine Standardabweichung des entsprechenden Signals.

Die Berechnung der absoluten und relativen Grenzwerte erfolgt anhand des Median und einer parametrierten Schwelle, die zur Überprüfung herangezogen wird.

Die Berechnung der relativen Abweichung R für den letzten Messdatenpunkt xi erfolgt nach Gln. 5.21.

$$R_{\min} < R = \left| \frac{x_i - \tilde{x}}{\tilde{x}} \right| < R_{\max} \qquad \text{[Gln. 5.21]}$$

Die Prüfgröße R wird gegen die benutzerdefinierten, relativen Grenzen Rmin und Rmax (z.B. +/- 5%) um den Median $\tilde{x}$ geprüft. Liegt der Wert über der Grenze so wird der Messdatenpunkt als Ausreißer markiert.

Die Berechnung der absoluten Abweichung A erfolgt für den letzten Messdatenpunkt xi, nach Gleichung 5.22.

$$A_{\min} < A = \left| x_i - \tilde{x} \right| < A_{\max} \qquad \text{[Gln. 5.22]}$$

Der A-Wert wird hierbei durch eine benutzerdefinierte, absolute Grenze (z.B. +/- 5 min-1) um den Median $\tilde{x}$ geprüft. Liegt der Wert über der Grenze, so wird auch hier der Messdatenpunkt als Ausreißer markiert.

Für den automatischen Ansatz kommen verschiedene verteilungsabhängige Methoden für die Berechnung von Kenngrößen oder Grenzwerten in Frage. Gerade für verteilungsabhängige Methoden muss im Vorfeld jedoch geprüft werden, ob die entsprechende Verteilung zumindest ansatzweise besteht. Dies führte zur Unterteilung der Signalanalyse in die Blöcke Randbedingungen, Kenngrößen und Grenzwerte.

Im Block Randbedingungen wird analysiert, ob die aktuellen Daten aus der Datenbasis sprung- und driftfrei sind und ob die Forderungen nach Normalverteilung und statistischer Unabhängigkeit erfüllen sind.

Die Berechnung charakteristischer Kenngrößen erfolgt im Block Kenngrößen. Diese Größen werden als Maß für das statistische Signal-Rausch-Verhältnis der Datenbasis herangezogen, wodurch eine Aussage über die grundsätzliche Qualität des betrachteten Datenpakets erfolgen kann.

Der Block Grenzwerte dient zur Ausreißererkennung.

Aus den vielen statistischen Methoden, Tests und Kenngrößen zu den oben genannten Blöcken wurden für jeden Bereich einige Verfahren ausgewählt und deren deren Eignung für die integrierte Messdatendiagnose analysiert.

Zur Prüfung der Normalverteilung wurden der Jarque-Bera- und der Kolmogoroff-Smirnoff-Test mit Lilliefors-Modifikation (Lillifors-Test) untersucht. Die Prüfung der statistischen Unabhängigkeit erfolgt über die Betrachtung des Autokorrelationskoeffizienten bzw. über den Hypothesentest auf Korrelation nach R.A. Fischer und über die sukzessive Differenzenstreuung. Im Bereich Kenngrößen wurden der Variationskoeffizient, die mittlere quadrartische Abweichung, der Standardfehler und die Median-Deviation als Kenngrößen für das Signal-Rausch-Verhalten untersucht. Für die Ausreißerkontrolle durch Grenzwerte wurden der Z-Score-Test, der Ausreißertest nach Grubbs, der Ausreißertest nach Nalimov und die Methode der Qualitätsregelkarten betrachtet. Die Auswahl der genannten Methoden erfolgte im Wesentlichen nach dem Rechenaufwand und der Robustheit.

Der Rechenaufwand definiert sich dadurch, wie viele neue Größen und Berechnungen für eine Prüfung notwendig sind. Verwendet ein Verfahren Größen wie die Standardabweichung oder Median und Mittelwerte ist dieses zu bevorzugen, da diese Größen immer standardmäßig berechnet werden.

Die Robustheit beschreibt dagegen, wie gut eine Methode mit gestörten Daten zurechtkommt. Kann z.B.

zwischen dem Mittelwert und dem Median gewählt werden, wird an dieser Stelle immer der Median verwendet, da dieser weniger anfällig gegen Extremwerte ist. D.h. der Median ist robust gegen Extremwerte. Gleiches gilt z.B. für die mittlere quadratische Abweichung. Im Vergleich zur Standardabweichung ist sie ebenfalls robust gegen Extremwerte.

Um die Eignung der einzelnen Methoden für die Messdatendiagnose objektiv bewerten zu können, wurden über 200 zufällig ausgewählte Messdateien als Bewertungsgrundlage herangezogen. Diese Daten wurden kanalselektiv in Einzelstichproben mit je 30 Werten untersucht. Aus Speicher- und Umfangsgründen wurde der Rollspeicher nicht kontinuierlich, sondern nach der Füll- und Entleer-Methode befüllt.

Die Prüfung der Normalverteilung kann mit verschiedenen statistischen Tests erfolgen. Im Rahmen dieser Arbeit wurden der Jarque-Bera und der Kolmogoroff-Smirnoff-Test mit Lilliefors-Modifikation (Lillifors-Test) untersucht und deren Eignung zur Bewertung der Normalverteilung im Rahmen der Messdatendiagnose analysiert.

Der einschlägigen Fachliteratur ist zu entnehmen, dass der Lillifors-Test besonders bei kleinen Stichprobenumfängen eher Abweichungen von der Normalverteilung erkennt als andere Tests. Weiterhin gilt er als sehr robust aber auch als nicht sehr genau. Im Gegensatz zum Lillifors-Test handelt es sich beim Jarque-Bera-Test um einen asymptotischen Test, der die Form einer Verteilung anhand charakteristischer Werte für Schiefe und Wölbung bewertet. Für den Vergleich der beiden Tests ist zu berücksichtigen, dass in Bezug auf die statistische Fachliteratur die Forderung nach Normalverteilung in der Regel bereits als erfüllt gilt, wenn die zu untersuchenden Daten "angenähert normalverteilt" sind.

Die Analyse von bis zu 20.000 kanalselektiven Einzelstichproben hat gezeigt, dass sich die Teststatistik des Jarque-Bera-Tests bei nicht normalverteilten Daten wesentlich stärker von der Prüfgröße unterscheidet als dies beim Lillifors-Test der Fall ist. Damit wird die Nullhypothese deutlich "stärker" abgelehnt (starke Entscheidung), was auch eine annähernde Normalverteilung ausschließt. Dabei wurde erkannt, dass der Jarque-Bera-Test im direkten Vergleich beider Tests deutlich konservativer als der Lillifors-Test entscheidet, was für die Messdatendiagnose wegen der Formulierung "angenähert normalverteilt" vollkommen ausreichend ist. Aus diesen Gründen und wegen des etwas geringeren Berechnungsaufwands wurde der Jarque-Bera-Test zur Bewertung der Normalverteilung ausgewählt.

Für die Bewertung der statistischen Unabhängigkeit wurden insgesamt drei verschiedene Verfahren untersucht. Im Gegensatz zur Berechnung des Autokorrelationskoeffizienten (AKK) handelt es sich bei der sukzessiven Differenzenstreuung und beim Korrelationstest nach R.A. Fischer um Hypothesentests.

Die Prüfung der statistischen Unabhängigkeit über den AKK erfolgt über die sog. Lag-1-Reihe der Datenbasis. Unter einem Lag versteht man in diesem Zusammenhang eine Wertereihe, deren Werte um i Positionen verschoben sind (die Autokorrelationsfunktion oder sog. Lag-i-Reihe). Aus der Verschiebung entstehen zwei Datenreihen, für die der Korrelationskoeffizient bestimmt wird. Da es sich um eine Korrelation der Datenreihe mit sich selbst handelt, spricht man in diesem Fall vom AKK. Der AKK kann auch durch Normierung aus der Autokorrelationsfunktion nach Gln. 5.23 berechnet werden.

$$\rho_{xy}(\tau) = \frac{R_{XX}(\tau)}{R_{XX}(0)} \qquad\qquad \text{[Gln. 5.23]}$$

Aus der einschlägigen Fachliteratur kann kein expliziter Wert benannt werden, der als exaktes Maß für die Unabhängigkeit festgelegt wird. In "Statistical Methods for Quality Improvement", von Thomas P. Ryan, Second Edition, Wiley & Son Inc; 2000, ISBN 0-471-19775-0, sind jedoch Betrachtungen mit einem Autokorrelationskoeffizienten von AKK = |0.5| beschrieben. Darüber hinaus hat sich folgende Begriffbildung durchgesetzt:

Ist $\rho_{x,y} = 0$, so heißen $X$ und $Y$ unkorreliert.
Ist $\rho_{x,y} \neq 0$ und $|\rho_{x,y}| \leq 0{,}5$, so heißen $X$ und $Y$ schwach korreliert,
Ist $0{,}5 < |\rho_{x,y}| \leq 0{,}8$, so heißen $X$ und $Y$ korreliert,
Ist $0{,}8 < |\rho_{x,y}| \leq 1$, so heißen $X$ und $Y$ hoch korreliert.

Für die Signalanalyse im Rahmen der Messdatendiagnose wird per Definition festgelegt, dass für Unabhängigkeit AKK $\leq |0{,}5|$ erfüllt werden muss. Im Gegensatz zu den Hypothesentests, die nur ein binäres Ergebnis liefern, kann bei der Betrachtung des AKK theoretisch sogar eine beliebige Schwelle eingegeben werden. Dadurch bekommt der Anwender eine bessere Information über den Grad der Korrelation. Der AKK liefert damit eine quantifizierbare Entscheidung zur Unabhängigkeit, die für den Anwender leicht zu verstehen und zu parametrieren ist. Weitere Gründe, die für die Anwendung des AKK sprechen sind, dass keine Tabellenwerte für die Berechnung der Prüfgröße mitgeführt werden müssen und dass der AKK auch gleichzeitig für die Korrektur der, in diesem Kapitel beschriebenen, $\overline{X}$-Qualitäts-Regelkarte verwendet wird.

Aus diesen Gründen wird die Bewertung der statistischen Unabhängigkeit mit der Berechnung des Autokorrelationskoeffizienten gegen die Grenze AKK < |0,5| durchgeführt.

Ein wesentliches Werkzeug der Statistik ist die Analyse von Streumaßen. Dabei handelt es sich um Kenngrößen, die die Variabilität einer Stichprobe oder Verteilung kennzeichnen. Für die NFA wurden der Standardfehler, die mittlere quadratische Abweichung sowie der Variationskoeffizient und die Median-Deviation untersucht.

Dem Variationskoeffizient wurde dabei besondere Beachtung geschenkt, da die Definition des Variationskoeffizienten der reziproken Definition des statistisch formulierten Signal-Rausch-Verhältnisses (SNRStatistik) entspricht. Das statistisch definierte SNRStatistik ist definiert als das Verhältnis von Mittelwert zur Standardabweichung des gemessenen Signals und berechnet sich nach Gln. 5.24.

$$SNR_{Statistik} = \frac{\overline{x}}{s} \qquad\qquad \text{[Gln. 5.24]}$$

Wird SNRStatistik in Dezibel angegeben, so ergibt sich der gleiche Wert wie aus Gln. 5.17. Dies gilt streng genommen allerdings nur für den stationären Betriebspunkt.

$$SNR_{Statistik} = 20 \cdot \log_{10}\left(\frac{\overline{x}}{s}\right) \qquad\qquad \text{[Gln. 5.25]}$$

D.h., dass im Rahmen der NFA und unter der Voraussetzung eines stationären Zustandes das SNR nach Gln. 5.25 berechnet werden kann. Da der Mittelwert und die Standardabweichung sowieso standardmäßig berechnet werden, entsteht so nur ein sehr geringer Zusatzaufwand. Neben dem SNRStatistik wurden auch die anderen genannten Kennwerte mit den gleichen Datensätzen untersucht. Dabei erfolgte die Bewertung der Signalqualität durch Kenngrößen nach Gln 5.25 mit dem SNRStatistik.

$$SNR_{Statistik,bin} \begin{cases} 0 \text{ für } SNR < SNR_{Statistik,krit} \\ 1 \text{ für } SNR < SNR_{Statistik,krit} \end{cases}$$

Es werden die gleichen Grenzwerte wie bei der HFA angewendet

| Prüfungen | Detektionsschärfe | Toleranz |
|---|---|---|
| **SNRstatistik,krit** | Hoch | 50dB |
| | Mittel | 30dB |
| | Niedrig | 20dB |

Die Entscheidung begründet sich dadurch, dass für die Berechnung von SNRStatistik die gleiche Funktion verwendet werden kann wie bei der HFA. Damit wird automatisch auch der Parametrierungsaufwand minimal gehalten. Gleichzeitig würde mit mehreren Kenngrößen auch der Rechenaufwand ansteigen.

Für den Block Grenzwerte wurden der Nalimov-Test und der Grubbs-Test als typische Ausreißertests untersucht. Neu ist dagegen die Anwendung von Verfahren aus der Prozess- und Produktüberwachung zur Bewertung der Signalqualität. Besonderes Augenmerk wurde dabei auf die Methode der Qualitätsregelkarten und auf die Qualitätsregeln von Western Electric, den sog. WECO-Regeln gelegt.

Qualitätsregelkarten (QRK) sind Werkzeuge der statistischen Prozesskontrolle. Mit ihrer Hilfe versucht man, zwischen der unvermeidbaren zufälligen Streuung und der auf Prozessesstörung beruhenden systematischen Abweichung zu unterscheiden.

Qualitätsregelkarten führen eine Prozessanalyse durch, an deren Anschluss die Frage beantwortet werden kann, ob der betrachtete Prozess bezüglich eines definierten Qualitätsmerkmales (z.B. der Mittelwert) beherrscht ist oder nicht. Die QRK hat dabei die Aufgabe anzuzeigen, wenn sich der Mittelwert $\mu$ oder die Standardabweichung $\sigma$ durch einen unerwünschten Einfluss verändert hat. Man spricht in diesem Fall auch von einem stabilen oder ungestörten Prozess und sagt, dass der Prozess unter "statistischer Kontrolle" ist. Die Betrachtung beschränkt sich im Rahmen dieser Arbeit auf zwei QRK, nämlich die klassische Shewhart-QRK oder $\overline{X}$-Karte und auf die CUSUM-QRK.

Eine der Standardannahmen in der statistischen Prozesskontrolle ist die bereits erläuterte Forderung nach unabhängigen und normalverteilten Daten. Dabei ist die Unabhängigkeit deutlich empfindlicher als die Normalverteilung.

Der Einfluss korrelierter Daten auf die Funktionsweise der QRK wird ausführlich in "Neue Entwicklungen der statistischen Prozesskontrolle bei korrelierten Daten" von Schöne, Dissertation 1997, Universität Ulm, diskutiert. In der Einleitung kann hier auch eine umfangreiche Liste an Veröffentlichungen zu diesem Thema nachgeschlagen werden. An dieser Stelle soll nur auf die Arbeiten "The effect of serial correlation on the performance of CUSUM tests", von R. Johnson und M. Bagshaw, Technometrics, oder "The use of stochastic models in the interpretation of historical data from sewage treatment plants", von P. Berthouex, W. Hunter, L. Pallesenu und C. Shih, Water Research 10, 1976, oder "Modification of control chart limits in the presence of data correlation", Journal of Quality Technology, 1978, oder "Monitoring sewage treatment plants: Some quality aspects" von P. Berthouex, W. Hunter, L. Pallesenu, Journal of Quality Technology 10 (4), 1978, hingewiesen werden, die sich alle vorwiegend mit Shewhart-Karten beschäftigen. Einen umfassenden Überblick über die Problematik und Auswirkungen korrelierter Daten in der statistischen Prozesskontrolle verschaffen die Arbeiten "Time series modelling for statistical process control" von L. Alwan und H. Roberts, Journal of Business and Economic Statistics 6, 1988, oder "A multivariate and stochastic framework for statistical process control", von N. F. Hubele bzw. J.B Keats und N. F. Hubele (Herausgeber), Statistical Process Control in Automated Manufacturing, Marcel Dekker, Inc., New York, NY, 1998, oder "Statistical process control procedures for correlated observations" von T. Harris und W. Ross, Canadian Journal of Chemical Engineering, 1991, oder "Introduction to Statistical Quality Control" von D. Montgomery, John Wiley & Sons, New York, NY, 1991, oder "Some statistical process control methods for autocorrelated data", von D. Montgomery und C. Mastrangelo, Journal of Quality Technology, 1991, bzw. "Autocorrelated data and SPC" von W. Woodall und F. Faltin, ASQC Statistical Division Newsletter, 1994.

Bei der Anwendung von Qualitätsregelkarten ist zu klären, wie oft ein Fehlalarm während der Beobachtung zu erwarten ist und wie schnell ein systematischer Fehler, z.B. ein Mittelwertdrift, erkannt werden kann.

Ein Maß für eine erwartete Fehlermeldung ist die durchschnittliche Lauflänge, die üblicherweise als ARL (Average Run Length) bezeichnet wird. Die ARL gibt Auskunft darüber, wie lange man im Durchschnitt kontinuierliche Datenpunkte des ungestörten Prozesses in einer QRK auftragen muss bevor ein Punkt außerhalb der Kontrollgrenzen erkannt wird. Für einen Prozess, der sich unter statistischer Kontrolle befindet, möchte man also eine möglichst hohe ARL haben. Ist der Prozess nicht unter statistischer Kontrolle, möchte man dagegen eine möglichst kleine ARL haben, weil dadurch eine Änderung im überwachten Qualitätsmerkmal entsprechend schnell erkannt wird. In NIST/SEMATECH, e-Handbook of Statistical Methods werden berechnete Angaben zur ARL von Shewhart-QRK und CUSUM-QRK unter Verwendung der standardisierten Kenngrößen h und k gemacht.

Tabelle T5.7 Angaben zur ARL bei CUSUM- und Shewhart-QRK

| Mittelwertänderung (k=0,5) | $h\sqrt{n}/\sigma$ | | Shewhart $\overline{X}$ |
|---|---|---|---|
| | 4 | 5 | |
| 0 | 336 | 930 | 371 |
| 0,25 | 74,2 | 140 | 281,14 |
| 0,5 | 26,6 | 30 | 155,22 |
| 0,75 | 13,3 | 17 | 81,22 |
| 1 | 8,38 | 10,4 | 44 |
| 1,5 | 4,75 | 5,75 | 14,97 |
| 2 | 3,34 | 4,01 | 6,3 |
| 2,5 | 2,62 | 3,11 | 3,24 |
| 3 | 2,19 | 2,57 | 2 |
| 4 | 1,71 | 2,01 | 1,19 |

*Wenn k = 0,5* festgelegt ist, dann wird die Änderung des Mittelwerts dadurch bestimmt, dass man zu der ersten Spalte von Tabelle T5.7 0,5 hinzuaddiert. Um z.B. eine Änderung des Mittelwerts um *1σ* bei *h = 4* zu erkennen, beträgt die *ARL* der CUSUM-QRT $ART_{CUSUM}$ = 8,38.

Die letzte Spalte von Tabelle T5.7 beinhaltet für die gleiche Mittelwertabweichung die entsprechende ARL für eine Shewhart-QRK. Diese liegt bei $ARL_{Shewar}$ = *1/p,* wobei p die Wahrscheinlichkeit ist, mit der ein Punkt außerhalb der Kontrollgrenzen fällt. Daraus wird ersichtlich, dass für 3σ-Grenzen und angenommene Normalverteilung die Wahrscheinlichkeit zum überschreiten der oberen Grenze *(UCL)* bei *p = 0,00135* liegt und die für das unterschreiten der unteren Grenze *(LCL)* ebenfalls bei *p = 0,00135* liegt. Damit errechnet sich die *ARL* für das Über- oder Unterschreiten der Kontrollgrenzen einer Shewart-QRK zu $ARL_{Shewart}$ = *1/,0027 = 370,37.* Hieraus folgt, dass bei einem kontrollierten Prozess alle 371 Werte mit einer Fehlermeldung zu rechnen ist. Wenn sich der Mittelwert jedoch um *1σ* nach oben verändert, dann ist die Differenz zwischen der oberen Kontrollgrenze und dem versetzten Mittelwert nur noch *2σ* (statt *3σ*). Aus den statistischen Grundlagen betreffend die Flächenanteile der Standardnormalverteilung folgt, dass für z = 2 die Wahrscheinlichkeit zum Überschreiten dieser Grenze bei *p = 0,02275* liegt. Die Differenz zwischen dem versetzten Mittel und der unteren Grenze ist jetzt *4σ* und die Wahrscheinlichkeit von $\overline{X}$ < -4 ist mit *p = 0,000032* so klein, dass sie vernachlässigt werden kann. Damit berechnet sich die ARL für den beschriebenen Fall zu $ARL_{shewart}$ = 1/,02275 = 43,96. Hieraus ergibt sich als wichtige Schlussfolgerung, dass die Shewhart-QRK für das Wahrnehmen von großen Änderungen und die CUSUM-QRK besser zum Erkennen kleiner Änderungen geeignet ist. Tabelle T5.7 zeigt dabei auch, dass der Breakeeven-point für diese Aussage eine Funktion von *h* ist.

Die CUSUM-QRK ist eine Regelkarte, die vergangene Messwerte für die Berechnung der aktuellen Prüfgrößen $S_{Hi}$ und $S_{Lo}$ mit einbezieht. Dabei wird die Abweichung der Stichprobenwerte vom Sollwert über der Zeit kumuliert, wodurch bereits kleine systematische Prozessveränderungen sehr früh und empfindlich erkannt werden können. Die Grenzen der CUSUM-QRK werden über die Steigung der Kumulierung in Abhängigkeit der Zeit bestimmt, wodurch eine Verschiebung des Erwartungswertes nach oben oder unten verhindert werden soll. Hierzu wird von jedem Messwert ein Referenzwert abgezogen, so dass der Mittelwert um Null schwankt. Als Referenz wird im Rahmen der Messdatendiagnose der Mittelwert der Datenbasis herangezogen. Die kumulierten Kenngrößen der CUSUM-QRK berechnen sich nach Gln. 5.26.

$$S_{hi} = \max\left(0, S_{hi}(i-1) + x_i - \overline{x}_{Datenbasis} - k\right)$$
$$S_{lo} = \max\left(0, S_{lo}(i-1) + \overline{x}_{Datenbasis} - k - x_i\right) \qquad \text{[Gln. 5.26]}$$

Dabei gelten $S_{Hi}(0)$ = 0 und $S_{Lo}(0)$ = 0.

Ist das Ergebnis von $S_{Hi}(i-1)+x_i$ - $\overline{x}_{Datenbasis}$ -*k* < 0, so wird der aktuelle CUSUM-Wert für $S_{Hi}$ auf Null gesetzt. Ist dieser Wert jedoch größer als Null, so wird $S_{Hi}$ aufsummiert. Für $S_{Lo}$ bedeutet dies, dass bei $S_{Lo}$ < 0 aufsummiert wird und bei $S_{Lo}$ > 0 auf Null zurückgesetzt wird. Überschreitet $S_{Hi}$ die kritische Grenze *h,* so gilt der Prozess ab dann als *nicht unter statistischer Kontrolle.* In "Statistical Methods for Quality Improvement", Thomas P. Ryan, Second Edition, Wiley & Son Inc; 2000, ISBN 0-471-19775-0, werden *h*=5 und *k = 0,5* als Richtwerte angegeben. Tabelle T5.9 gibt hierzu ein Beispiel.

| Nr. | Messwert | $S_{HI}$ | $S_{LI}$ | Cusum | Nr. | Messwert | $S_{HI}$ | $S_{LI}$ | Cusum |
|---|---|---|---|---|---|---|---|---|---|
| 1 | 324,93 | 0 | 0 | -0,07 | 11 | 324,63 | 0,13 | 0 | -0,61 |
| 2 | 324,68 | 0 | 0 | -0,39 | 12 | 325,15 | 0 | 0 | -0,46 |
| 3 | 324,73 | 0 | 0 | -0,66 | 13 | 328,33 | 2,83 | 0 | 2,87 |
| 4 | 324,35 | 0 | 0,15 | -1,31 | 14 | 327,25 | 4,58 | 0 | 5,12 |
| 5 | 325,35 | 0 | 0 | -0,96 | 15 | 327,83 | 6,91 | 0 | 7,95 |
| 6 | 325,23 | 0 | 0 | -0,73 | 16 | 328,5 | 9,91 | 0 | 11,45 |
| 7 | 324,13 | 0 | 0,37 | -1,6 | 17 | 326,68 | 11,09 | 0 | 13,13 |
| 8 | 324,53 | 0,03 | 0 | -1,07 | 18 | 327,78 | 13,37 | 0 | 15,91 |
| 9 | 325,23 | 0 | 0 | -0,84 | 19 | 326,88 | 14,75 | 0 | 17,79 |
| 10 | 324,6 | 0 | 0 | -1,24 | 20 | 328,35 | 17,6 | 0 | 21,14 |

Tabelle T5.8 Beispiel zur CUSUM-QRK

Die Shewhart-QRK ist die am häufigsten verwendete Regelkarte. Sie kann einzeln oder in Kombination mit anderen Regelkarten angewendet werden. Die in der Karte analysierten Stichproben können dabei entweder Einzelwerte oder das Ergebnis einer Stichprobenziehung vom Umfang $n$, die sog. Subgroups, sein. Im ersten Fall spricht man dann von X-Karten und im zweiten Fall von $\overline{X}$ -Karten. Die Betrachtung von Subgroups hat einen gewissen Dämpfungseffekt und führt dazu, dass die Karte weniger empfindlich auf einzelne Extremwerte ist. Wenn im weiteren Verlauf der Arbeit von Shewhart-QRK gesprochen wird, bezieht sich dies immer auf $\overline{X}$-Karten.

Da in der Regel weder die Standardabweichung noch der Mittelwert der betrachteten Grundgesamtheit aus dem laufenden Prozess bekannt sind, müssen diese mit entsprechenden Schätzern berechnet werden. Hierzu entnimmt man dem laufenden Prozess eine größere Zahl von Stichproben vom Umfang n. Aus "Statistical Methods for Quality Improvement", von Thomas P. Ryan, Second Edition, Wiley & Son Inc; 2000, ISBN 0-471-19775-0, ist zu entnehmen, dass für Shewhart-QRK mindestens 20 Subgroups mit $n$ = 4 *bis 5* Elementen pro Subgroup zu empfehlen sind.

Üblicherweise trifft man die $\overline{X}$-Karte in Kombination mit einer s-Karte an. Mit der s-Karte wird dabei zunächst geprüft, ob die Verteilung des Qualitätsmerkmals (im Rahmen dieser Arbeit ist das der Mittelwert) als stationär betrachtet werden kann. Hierzu wird zunächst für jede Subgroup $i$ die Standardabweichung $s_i$ und der Mittelwert $\overline{x}_i$ berechnet. Mit der Anzahl der Subgroups m kann nun die durchschnittliche Standardabweichung der Subgroups $\overline{s}$ nach Gln. 5.27 berechnet werden.

$$\overline{s} = \frac{1}{m}\sum_{i=1}^{m} s_i \qquad\qquad \text{[Gln. 5.27]}$$

Zur Berechnung der Kontrollgrenzen der s-Karte wird noch ein weiterer Wert, die sog. $\overline{s}/c_4$ -Statistik benötigt. $\overline{s}/c_4$ ist ein erwartungstreuer Schätzer für die Standardabweichung der unbekannten Grundgesamtheit σ. Der Faktor $c_4$ kann dabei entweder unter Berücksichtigung des Stichprobenumfangs $n$ nach Gln. 5.28

$$c_4 = \sqrt{\frac{2}{n-1} \cdot \frac{\left(\frac{n}{2}-1\right)}{\left(\frac{n-1}{2}-1\right)}} \qquad\qquad \text{[Gln. 5.28]}$$

berechnet oder aus einer Tabelle der Fachliteratur entnommen werden.

Mit $\overline{s}$ und $c_4$ berechnen sich die Kontrollgrenzen der s-Karte nach Gln. 5.29a und Gln. 5.29b.

$$UCL = \overline{s} + 3\frac{\overline{s}}{c_4}\sqrt{1-c_4^2} = B_4\overline{s} \qquad\qquad \text{[Gln. 5.29a]}$$

$$LCL = \overline{s} - 3\frac{\overline{s}}{c_4}\sqrt{1-c_4^2} = B_3\overline{s} \qquad\qquad \text{[Gln. 5.29b]}$$

Die Parameter $B_3$ und $B_4$ können ebenfalls der Fachliteratur entnommen werden. Die Kontrollgrenzen der $\overline{X}$-Karte berechnen sich auf gleiche Weise. Mit Gln. 5.30 wird zunächst der Gesamtmittelwert $\overline{\overline{x}}$ berechnet.

$$\overline{\overline{x}} = \frac{1}{m}\sum_{i=1}^{m} \overline{x}_i \qquad\qquad \text{[Gln. 5.30]}$$

Die Grenzen berechnen sich damit nach Gln. 5.31 a und Gln. 5.31 b zu:

$$UCL = \overline{\overline{x}} + 3\frac{\overline{s}}{c_4\sqrt{n}} = \overline{\overline{x}} + A_3\overline{s} \qquad \text{[Gln. 5.31a]}$$

$$LCL = \overline{\overline{x}} - 3\frac{\overline{s}}{c_4\sqrt{n}} = \overline{\overline{x}} - A_3\overline{s} \qquad \text{[Gln. 5.31b]}$$

Die Parameter $A_3$ ist ebenfalls aus der Fachliteratur zu entnehmen.

Wenn die Annahmen zur Unabhängigkeit und Normalverteilung grob verletzt werden, führt dies besonders bei korrelierten Daten zu einer falschen Berechnung der Kontrollgrenzen. Aus "Statistical Methods for Quality Improvement", von Thomas P. Ryan, Second Edition, Wiley & Son Inc; 2000, ISBN 0-471-19775-0, ist zu entnehmen, dass bei korrelierten Daten die Grenzen für s- und $\overline{X}$-Karten in der Regel zu klein bestimmt werden. In "Modification of control chart limits in the presence of data correlation", von A. Vasilopoulos und A. Stamboulis, Journal of Quality Technology, 1978, wurde der Einfluss korrelierter Daten auf die Funktionsweise der Shewhart-QRK ausführlich untersucht und wurden Lösungsansätze für dieses Problem veröffentlicht. Für die zentralisierte Messdatendiagnose sind diese Ansätze jedoch viel zu aufwändig, da verschiedene Diagramme mit Korrekturwerten benötigt werden. Um dem Effekt korrelierte Daten trotzdem entgegen zu wirken, wurde im Rahmen der vorliegenden Arbeit ein empirischer Korrekturfaktor eingeführt, der in Abhängigkeit des Autokorrelationskoeffizienten AKK eine Aufweitung der Kontrollgrenzen für die $\overline{X}$-Karte bewirkt. Die korrigierten Grenzen berechnen sich nach Gln. 5.32a und Gln. 5.32b wie folgt:

$$UCL = \overline{\overline{x}} + 3\frac{\overline{s}}{c_4\sqrt{n}} + \frac{1}{1-AKK} \qquad \text{[Gln. 5.32a]}$$

$$LCL = \overline{\overline{x}} - 3\frac{\overline{s}}{c_4\sqrt{n}} - \frac{1}{1-AKK} \qquad \text{[Gln. 5.32b]}$$

Die Korrektur wird im Bereich AKK > 0,5 durchgeführt. Damit die Grenzen nicht zu weit aufgezogen werden, wird AKK = $AKK_{max}$ auf 0,9 begrenzt.

Die WECO-Regeln wurden bei Western Electric für die Überwachung von Fertigungsprozessen entwickelt. Diese Regeln basieren auf der Stichprobenstandardabweichung *s* und den Signifikanzgrenzen für *1s, 2s* und *3s.* Hintergrund der Regeln ist, dass die Wahrscheinlichkeit für das Eintreten eines der beschriebenen Fälle mit *p* = 0,0027 nicht als zufällig, sondern als Fehler zu bewerten ist, da bei normalverteilten Daten 99,73% der betrachteten Daten innerhalb $\pm$3s liegen.

Die Regeln sind wie folgt definiert:

1. Mindestens ein Wert überschreitet die 3s - Grenze (Zone A)
2. Zwei von drei aufeinander folgende Werte überschreiten die 2s-Grenze (Zone B)
3. Vier von fünf aufeinander folgende Werte überschreiten die 1 s-Grenze (Zone C).
4. Acht aufeinander folgende Werte liegen auf einer Seite der Mittellinie.
5. Die Trendregel besagt, dass sechs aufeinander folgende auf- oder absteigende Werte ein Trendverhalten zeigen.

Bei Gegenüberstellung der einzelnen Methoden ergibt sich, dass lediglich der Grubbs-Test und der Z-Score-Test gleiche Ergebnisse liefern und das beiden Verfahren im Vergleich deutlich konservativer abschneiden. D.h. es werden weniger Ausreißer erkannt. Beim Vergleich zwischen der $\overline{X}$-QRK und den WECO-Regeln fällt dagegen auf, dass die WECO-Regeln deutlich häufiger anschlagen als die $\overline{X}$-QRK. Dies begründet sich durch die Gruppenbildung. Bei den WECO-Regeln geht jeder Wert ungedämpft in die Beurteilung ein. Bei der $\overline{X}$-QRK werden Extremwerte durch die Gruppenbildung abgeschwächt. Allerdings spielt bei den WECO-Regeln die Punktefolge ebenfalls eine wichtige Rolle. Somit kann also für den Grenzwertblock keine einzelne optimale Methode genannt werden. Hierbei ist zu berücksichtigen, dass alle angeführten Methoden mehr oder weniger stark verteilungsabhängig sind und dass mit dem Jarque-Bera-Test eine ebenso mehr oder weniger stark ausgeprägte Normalverteilung erkannt wird. Aus diesem Grund werden für die Ausreißererkennung mehrere Methoden parallel verwendet. Die Kombination der folgenden Methoden hat sich als äußerst zielsicher und robust erwiesen:

Nalimov: Nalimov-Test auf dem 95%-Neveau mit zwei erkannten Ausreißern im Testintervall.
Grubbs: Ablehnung der Nullhypothese $H_0$ (keine Ausreißer) auf dem 95%-Niveau
QRK: Ein oder mehrere Gruppenwerte liegen außerhalb der QRK
Z-Score: Ein oder mehrere Stichprobenwerte liegen außerhalb des Intervalls -3,5 < z < 3,5

Für die spätere Fehlerisolation und Fehlererkennung muss aus den Einzelblöcken der NFA ein einzelnes, binäres Ergebnis erzeugt werden. Hierzu wurde eine spezielle Logik entwickelt, die schematisch in Fig. 26 dargestellt ist. Für die Logik der Signalqualität wurden zunächst die Gleichungen Gln. 5.33a bis Gln. 5.33c entwickelt, mit denen das Blockergebnis der binären Einzelergebnisse gebildet wird.

$$ERB = \frac{Beharrung + Sprung + JBT + AKK}{8} \qquad \text{[Gln. 5.33a]}$$

$$EKG = \frac{SNR_{Statistik,bin}}{3} \qquad \text{[Gln. 5.33b]}$$

$$EGW = \frac{N + Grubbs + QRK + Z}{8} \qquad \text{[Gln. 5.33c]}$$

Die Blockergebnisse werden erneut aufsummiert und gegen die Prüfgröße der Signalqualität *PGSQ* verglichen. Diese ist so abgestimmt, dass im Block Beharrung und im Block Grenzwerte je eine Einzelmethode nicht erfüllt sein kann, ohne einen Fehler im Bereich Signalqualität zu erzeugen.

Das Vorgehen soll an einem kurzen Beispiel verdeutlicht werden. Die Auswertung der Datenbasis für ein gemessenes Drehmoment liefert beispielsweise das in Tabelle T5.9 dargestellte Ergebnis:

| Randbedingungen | Kenngrößen | Grenzwerte |
|---|---|---|
| JBT = 0 | $SNR_{Statistik}$ = 39,34dB | Nalimov = 0 |
| AKK = 0 | $SNR_{Statistik} < SNR_{Statistik,krit}$ | Grubbs = 0 |
| Beharrung = 1 | $SNR_{Statistik,bin}$ = 0 | QRK = 0 |
| Sprung = 0 | | Z-Score = 0 |
| Blockergebnis = 0,125 | Blockergebnis = 0 | Blockergebnis = 0 |
| Gesamtergebnis = 0,125 + 0 + 0 = 0,125 < 0,5 $\Rightarrow$ Signalqualität = 0 | | |

Tabelle T5.9

Die zugehörige Qualitätsregelkarte ist in Fig. 27 und die dazu gehörige z-transformierte Verteilungsfunktion in Fig. 28 dargestellt. Dabei werden in Fig. 27 die 30 Stichprobenwerte $x_i$ als MD-Kurve und die Gruppenwerte der QRK als xbar-Punkte dargestellt. UCL und LCL steht für Upper und Lower Control Limit. Dieses Beispiel zeigt übrigens auch die dämpfende Wirkung der $\overline{X}$-QRK. Obwohl $x_9 < LCL$ und $x_{24} < LCL$ sind, wird dies durch die Gruppenbildung soweit gedämpft, dass keine Fehlermeldung erfolgt.

Wenn durch die Parametrierung zwei oder mehr Messgrößen der gleichen Art (z.B. 4 x Abgastemperatur T3) ausgewählt wurden, ist zu überlegen, ob man die Plausibilitätsfunktionen für jeden Kanal einzeln berechnet oder ob man die Berechnung nur für eine repräsentative Größe durchführt.

Mit dem Medianvergleich kann die Gleichheit der beteiligten Größen einfach dadurch untersuchen werden, dass man aus allen Größen den Median berechnet und um diesen ein parametrierbares Toleranzband legt. Für alle Größen, die innerhalb des Toleranzbandes liegen, ist es gleichgültig, welche der Größen für die folgende Plausibilitätsberechnung weiter verwendet wird. Dieses Vorgehen führt zu einer deutlichen Reduktion der Systembelastung bei gleicher Aussagekraft.

Der Medianvergleich ist aber auch gleichzeitig eine effiziente Fehlererkennungsmethode. Fig. 29 zeigt hierzu eine Messung der Abgastemperaturen Zyl. 1 bis Zyl. 4 an einem 2.21 Otto-DI. Durch einen defekten Hydrostößel wurde die Klopferkennung der ECU aktiviert, die für Zylinder 1 den Zündzeitpunkt in Richtung spät verstellte. Der resultierende Anstieg der Abgastemperatur und die Veränderung im Zündzeitpunkt bei Zylinder 1 führten daraufhin zur Fehlererkennung durch den Medianvergleich. Als Fehlermeldung wurde in diesem Fall Fehler bei T3_1 und ZZP1 ausgegeben. Die anschließende Fehleranalyse führte zur Fehlerursache "Hydrostößel defekt".

Im einfachsten Fall sollte das Prüfstandssystem genauen Aufschluss über Betriebspunkt- und Variationspunktwechsel geben. Damit diese Funktion aber auch unabhängig vom Prüfstandssystem und für beliebige Messsignale verwendet werden kann, wird die Betriebspunktwechselerkennung als eigene Funktion implementiert. Allgemein formuliert dient sie zur Identifikation von sprunghaften Veränderungen in einer definierten Messgröße und kann daher auch als Sprungerkennung bezeichnet werden.

Als Ansatz dient die Hypothese, dass sich die Medianwerte zweier Stichproben, die aus der gleichen Messreihe stammen, aber um $t+1$ verschoben sind, bei einem Betriebspunktwechsel deutlich voneinander unterscheiden. Das bedeutet aber auch, dass eine sprunghafte Veränderung einer Größe zu einer signifikanten Veränderung im Systemverhalten führen muss. Weiterhin wird angenommen, dass nur Soll- oder Führungsgrößen wirklich sprungfähig sind. Zu diesen Größen zählen z.B. Drehzahl, Drehmoment oder die Fahrpedalstellung, die auch als Betriebspunktgrößen bezeichnet werden. Größen wie der Zündzeitpunkt (ZZP), die AGR-Rate oder andere, durch die ECU verstellbare Größen werden als Faktoren oder Variationsgrößen bezeichnet.

Die Sprungerkennung arbeitet, wie in Fig. 30 schematisch skizziert, mit zwei Rollspeichern, die jeweils um einen Wert ($t+1$) gegeneinander verschoben sind. Aus beiden Rollspeichern wird der Median berechnet. Ein Betriebspunktwechsel wird genau dann erkannt, wenn Gln. 5.34a oder G!n. 5.34b erfüllt werden.

$$\widetilde{x}_2 > \widetilde{x}_1 + Tolernaz \quad \text{(positiver Sprung)} \qquad \text{[Gln. 5.34a]}$$

$$\widetilde{x}_2 < \widetilde{x}_1 - Tolernaz \quad \text{(negativer Sprung)} \qquad \text{[Gln. 5.34b]}$$

Neben dem Sprungzeitpunkt kann damit auch gleichzeitig die Richtung der Veränderung bestimmt werden.

Ein erkannter Sprung geht in der Regel auch mit dem Zustand "keine Beharrung" einher. Damit wird im zuvor beschriebenen Logikblock der Signalanalyse automatisch das Ergebnis Signalqualität = 1 ausgelöst. Formal ist diese Aussage vollkommen korrekt, da zu diesem Zeitpunkt die geforderte Signalqualität nicht bestand. Ist dies jedoch auf einen gezielten Betriebspunktwechsel zurückzuführen, sollte an dieser Stelle keine Fehlermeldung, sondern ein Aussetzen der Fehlererkennung erfolgen. Hierzu wird das Ergebnis der Betriebspunktwechselerkennung gleichzeitig in einer übergeordneten Logikschleife auch als Freigabebedingung verwendet.

Fig. 31 zeigt, wie sich eine sprunghafte Veränderung des Motordrehmoments bei konstanter Drehzahl auf verschiedene Antwortgrößen wie z.B. auf die Abgastemperatur oder auf die Öl- und Wassertemperatur auswirken. Neben der Detektion von Sprüngen in Führungsgrößen spielt die Betriebspunktwechselerkennung bei der Identifikation des Signalverlaufs eine entscheidende Rolle. Durch die exakte Bestimmung des Betriebspunktwechsels kann gleichzeitig auch der Startpunkt und die Startwerte für die nichtlineare Regression ermittelt werden.

Die Beharrungserkennung ist für alle Teilfunktionen relevant, die ein stationäres Systemverhalten voraussetzen. Dies gilt insbesondere für alle statistischen Funktionen zur Signalanalyse aber auch für viele Plausibilitätsmethoden und für die Stillstandsdiagnose.

Dabei wird für jeden ausgewählten Messkanal die Beharrung einzeln ermittelt. Dies ist z.B. ein wichtiges Freigabekriterium für die kanalspezifische Signalanalyse und für einige Plausibilitätsmethoden. Um den Rechenaufwand zu reduzieren kann man die Beharrungserkennung auch nur für einige wenige Größen oder sogar nur für eine Größe anwenden, die dann als Indikator für den gesamten Prozesszustand herangezogen wird. Abgas-, Öl- oder Wassertemperaturen sind solche Größen. Die Anwendung dieses Verfahren hängt von der jeweiligen Prüfstandssituation ab und ist deshalb parametrierbar gestaltet.

Aus methodischer Sicht ist die Beharrungserkennung ein Soll-/Ist-Vergleich für Gradienten. Hierfür muss in der Parametrierung für jeden Kanal ein Grenzgradient eingegeben werden. Der Gradient sollte dabei den quasi stationären Fall abdecken. Dies bedeutet, dass der Gradient bereits relativ "flach" aber noch nicht asymptotisch ist.

Da Messdaten in der Regel ein stochastisches Verhalten zeigen, muss für das entsprechende Messsignal ein entsprechendes Datenmodell erstellt werden. Hierzu eignen sich Regressionsmodelle besonders gut, insbesondere die drei Ansätze lineare Regression, nichtlineare Regression mit dem Gauss-Newton-Verfahren, und die multiple Regression.

Im Gegensatz zur linearen Regression wird für die Methoden der nichtlinearen und der multiplen Regression die zuvor beschriebene Betriebspunktwechselerkennung benötigt. Sie hat die Aufgabe den genauen Startpunkt für den Regressionsalgorithmus festzulegen, da der Modellverlauf sonst nicht korrekt berechnet werden kann und der anschließende Gradientenvergleich fehlerhaft ist.

Die Erprobung der beschriebenen Ansätze führte zu dem Ergebnis, dass die iterativen Verfahren sehr anfällig sind und stark von der Erkennung eines signifikanten Betriebspunktwechsels abhängen. Zusätzlich ist der Rechenaufwand zum Lösen der entsprechenden Matrizen nicht zu vernachlässigen. Als Mehraussage steht eine Modellgleichung zur Verfügung, die jedoch nur so gut ist wie der getroffene Ansatz.

In Bezug auf den gesuchten Gradienten ergibt sich im Vergleich zur linearen Regression jedoch kein Vorteil.

Damit steht der Aufwand in keinem Verhältnis zum Nutzen. Die lineare Regression besticht dagegen durch ein robustes Verhalten, einen geringen Rechenaufwand und durch eine ausreichende Genauigkeit bei der Berechnung des gesuchten Gradienten, wie auch in Fig. 32 zum Ausdruck kommt. Daher ist für die Gradientenberechung im Rahmen der integrierten Messdatendiagnose die lineare Regression besonders bevorzugt. Zur besseren Darstellung ist in Fig. 33 der Bereich von 0 bis 240s aus Fig. 32 in einem vergrößerten Ausschnitt dargestellt. Dabei ist gut zu erkennen, dass die lokalen, linearen Teilmodelle (LLM) dem Messdatenverlauf für eine Beharrungserkennung mit ausreichender Genauigkeit folgen.

Unabhängig von angewendeten Identifikationsverfahren wir der berechnete Gradient der LLM kanalspezifisch mit einem, in der Parametrierung definierten Grenzgradienten nach Gln. 5.35 verglichen.

$$\left. \frac{dy}{dt} \right|_{t=t_n} \leq Grenzgradient \Rightarrow Beharrung\ errreicht \qquad \text{[Gln. 5.35]}$$

Um ein ständiges Oszillieren zwischen den Zuständen *"Beharrung erreicht'* und *"Beharrung nicht erreicht'* zu vermeiden, wurde ein Beharrungszähler eingeführt. Dieser Zähler gibt an, für wie viele aufeinander folgende Iterationsschritte Gln. 5.35 erfüllt sein muss, bevor ein Kanal als *"in Beharrung"* bewertet wird. Für die Grundeinstellung wird hier ein Wert von 5 Sekunden vorgeschlagen. Das heißt, dass sich der entsprechende Kanal bei einer Arbeitsfrequenz von 1 Hz bereits 5s in Beharrung befunden haben muss, bevor dies angezeigt wird. Die hieraus resultierende Verzögerung spielt im praktischen Betrieb nur eine untergeordnete Rolle und führt auf der anderen Seite zu einer besseren Informationsgüte für den Anwender.

Bei der Plausibilitätsprüfung wird das physikalische Systemverhalten mit einem erwarteten Sollverhalten verglichen. Die Beschreibung des Sollverhaltens erfolgt durch logische Zusammenhänge und durch Gleichungen oder Modelle. Hierzu wurden Hauptgruppen für Temperatur, Druck, Massenströme und Abgasemissionen definiert, die in entsprechenden Toolboxen zusammengefasst werden. Eine Toolbox ist als Funktionssammlung zu verstehen, die mehrere Funktionen zur Fehlererkennung in einer Bearbeitungseinheit vereint. Ziel sind einfache, robuste und allgemeingültige Verfahren mit einer guten Detektions- und Trennschärfe.

Die Detektionsschärfe ist dabei sowohl eine Methodeneigenschaft als auch Parameter und damit ein Maß für den kleinsten sicher detektierbaren Fehler. Aufgrund gewisser Vereinfachungen oder Annahmen muss die Detektionsschärfe als Methodeneigenschaft angesehen werden, da diese Annahmen und Vereinfachungen keine genauere Aussage der entsprechenden Methode ermöglichen. Da der Anwender die Detektionsschärfe in Bezug auf die Prüfaufgabe einstellen kann, ist sie aber auch als Parameter zu betrachten.

Die Trennschärfe wurde für die automatische und generische Auswertung der Fehlererkennung im Rahmen der Fehlerisolation eingeführt und wird als die Fähigkeit einer Methode definiert, einen Fehler mit dem fehlerhaften Messkanal zu assoziieren. So hat z.B. die Ungleichung T3 > *T2* zwei gleichwertige Terme und somit eine Trennschärfe von *p = 0,5.* Die Methoden des Gerätechecks haben immer eine Trennschärfe von *p = 1*, da hier immer nur ein Kanal betrachtet wird. Der Vergleich zwischen einem gemessenen Lambdawert und dem berechneten Lambda aus Luft- und Kraftstoffmassenstrom hat z.B. eine Trennschärfe von *p = 0,33* da bei der Prüfung drei gleichwertige Informationen verwendet werden.

Im Folgenden werden einige Funktionen zur Fehlererkennung vorgestellt und besonders in Hinblick auf Robustheit und Trennschärfe diskutiert. Diese Ergebnisse werden anschließend für die Fehlerisolation und Fehlerklassifikation verwendet..

Durch die Benennung der einzelnen Temperaturmessstellen kann auf die Position und damit auch auf das Temperaturniveau zurück geschlossen werden. Die so entstehende Hierarchie der Temperaturen bewirkt, dass die logischen Zusammenhänge mit einfachen Ungleichungen geprüft werden können. Dazu ist in Fig. 34 der Aufbau der Temperatur-Toolbox mit den entsprechenden Ein- und Ausgangsgrößen dargestellt.

Zur besseren Zuordnung und wegen systembedingter Besonderheiten wird bei der Temperatur-Toolbox zwischen Saugmotoren und aufgeladenen Motoren mit Abgasturbolader oder Kompressor unterschieden.

Ein Turboaufbau verfügt im Gegensatz zum Saugmotor in der Regel über Messstellen vor und nach Ladeluftkühler. Bei einer zweiflutigen Anordnung treten viele Größen doppelt auf, wie beispielsweise in Fig. 35 an einem praktischen Beispiel zu ersehen ist, so dass bei der Implementierung der Methoden und Jobs darauf geachtet werden muss, dass diese auch doppelt ausgeführt werden können.

Für den Fall, dass mehrere Größen gleicher Art auftreten, wurden die schon zuvor beschriebenen Masterklassen eingeführt. Bei Mehrfachbelegung einer Masterklasse wird zur Reduktion des Rechenaufwandes im ersten Schritt ein Medianvergleich der entsprechenden Größen durchgeführt. Wenn alle betroffenen Größen diesen Test bestehen, können die Messgrößen als gleichwertig angesehen werden und es wird mit der ersten Größe als "Stellvertreter" weiter gerechnet. Fällt eine Größe aus dem Mediantest heraus, wurde sie bereits als auffällige Größe erkannt und kommt somit auch nicht als Größe für weitere Berechnungen in Frage. Die Zuordnung der entsprechenden Messstellen zu den einzelnen Masterklassen erfolgt beim Normnamenmapping während der Parametrierung.

Tabelle T5.10 zeigt, welche Prüfungen Bestandteil der Temperatur-Toolbox sind und für welche Motortypen diese gelten. Um Fehlmeldungen zu vermeiden, sollten die Methoden der Temperatur-Toolbox nur bei stationären Betriebspunkten verwendet werden (Freigabebedingung). Dies begründet sich z.B. durch das Verhalten der Abgastemperaturen am TDI in einem NEDC-Zyklus (Fig. 36). Es ist leicht zu erkennen, dass es während des gesamten Zyklus durch Schubphasen öfters zur Situation T4 > T3 kommt. Dies würde zwar zu einer formal richtigen Fehlererkennung führen, die jedoch nicht durch einen fehlerhaften Sensor, sondern durch einen instabilen Betriebspunkt hervorgerufen wird. Aus diesem Grund sollten die Methoden der Temperatur-Toolbox im Schubbetrieb und bei instationären Betriebspunkten ausgeschaltet werden.

In Bezug auf die Trennschärfe ist zu bemerken, dass alle Ungleichungen eine Trennschärfe von *p = 0,5* aufweisen. Die Intervallprüfung von Wasser- und Öltemperatur führt zu einer Trennschärfe von *p = 1*. Für den Vergleich mehrerer Temperaturen der gleichen Art gilt eine Trennschärfe von *p = 1/n,* wobei n in diesem Fall die Anzahl der beteiligten Kanäle beschreibt.

Tabelle T5.10 Fehlererkennungsmethoden der Temperatur-Toolbox in Abhängigkeit des Motortyps

| Prüfung | Gültigkeit |
|---|---|
| T3 > T0 | Allgemein |
| T3>T1 | |
| T1≈T0 oder \|T1-T0\| < 10 | |
| TWA>TWE | |
| TKA > TKE | |
| TÖlmin < TÖL < TÖlmax | |
| TWAmin < TWA < TWAmax | |
| T2 > T0 | Aufgeladene Motoren |
| T2>T1 | |

(fortgesetzt)

| Prüfung | Gültigkeit |
|---|---|
| T3 > T2 | Aufgeladene Motoren mit Ladeluftkühler |
| T3 > T2s | |
| T2 > T2s | |
| T2s>T0 | |
| T2s > T1 | |
| $T3_{zyl1} \approx T3_{zyl2} \approx ... \approx T3_{zyln}$ | Motoren mit mehreren Abgastemperaturmessstellen |
| T3 > T4 | Aufgeladene Motoren mit Abgasturbolader |
| T4>T0 | |
| T4>T1 | |
| T4 > T2 | Aufgeladene Motoren mit Abgasturbolader und |
| T4 > T2s | Ladeluftkühler |
| $T4_{Bank1} \approx T4_{Bank2}$ | Aufgeladene Motoren mit Abgasturbolader in zweiflutiger Anordnung (z.B. V6, V8 oder V12) |

Genau wie bei der Fehlererkennung im Temperaturbereich werden die einzelnen Druckmessstellen nach der Messstellenposition charakterisiert. Hierdurch entsteht eine ähnliche Hierarchie wie bei der Temperatur-Toolbox. Allerdings ist bei der in Fig. 37 dargestellten Druck-Toolbox die Unterscheidung der verschiedenen Motorkonzepte noch wichtiger als bei der Temperatur-Toolbox.

Tabelle T5.11 zeigt, welche Prüfungen Bestandteil der Druck-Toolbox sind und für welche Motortypen diese gelten. Dabei sind für die Druck-Toolbox genau die gleichen Einschränkungen zu beachten wie bei der Temperatur-Toolbox. Bei Turboaufladung sind zusätzlich bestimmte Lastbereiche besonders zu beachten.

Im Stationärbetrieb (ab $pme \approx 1$ bar) liefert der Lader in der Regel immer einen geringen Überdruck gegenüber der Umgebung. Diese Annahme rechtfertigt die Methoden zur Prüfung des Ladedrucks gegen die Drücken $p_0$ und $p_1$. Diese Überprüfung ist bei geringen Lasten *(pme < 1bar)* auszusetzen, da der Lader in diesem Fall als Drossel wirken kann. Dies gilt besonders bei kalten Lagerstellen des Laders und der damit verbundenen Lagerreibung ("schwergängiger Lader").

In Bezug auf die Trennschärfe ist zu bemerken, dass alle Ungleichungen eine Trennschärfe von $p = 0,5$ aufweisen. Die Intervallprüfung des Öldrucks führt zu einer Trennschärfe von $p = 1$. Für den Vergleich mehrerer Drücke der gleichen Art gilt eine Trennschärfe von $p = 1/n$, wobei n in diesem Fall die Anzahl der beteiligten Kanäle beschreibt.

Tabelle T5.11 Fehlererkennungsmethoden der Druck-Toolbox in Abhängigkeit des Motortyps

| Prüfung | Gültigkeit |
|---|---|
| P3 > p0 | Allgemein |
| P3 > p1 | |
| pÖlmin < pÖL < pÖlmax | |
| P3 > p4 | Aufgeladene Motoren mit Abgasturbolader |
| P2 > p2s | Aufgeladene Motoren mit Ladeluftkühler / nur bei *pme* $\geq$ 1 bar und $T_{Öl} \geq 60°C$ |
| P2 > p0 | |
| P2 > p1 | |
| $P3_{Bank1} \approx p3_{Bank2}$ | Alle Aufbauten mit zweiflutiger Anordnung (z.B. V6, V8 oder V12) |
| $P4_{Bank1} \approx p4_{Bank2}$ | Aufgeladene Motoren mit Abgasturbolader in zweiflutiger Anordnung (z.B. V6, V8 oder V12) |

Die C-Bilanz (Kohlenstoffbilanz) basiert auf dem Satz der Massenerhaltung und eignet sich grundsätzlich sowohl zur Plausibilitätsprüfung der Abgaskonzentrationen genauso wie für die Prüfung der Luft- und Kraftstoffmassenströme. Methodisch ist sie Bestandteil der in Fig..... dargestellten Abgas-Toolbox.

Bei der C-Bilanz werden die, in den Motor ein- und austretenden Kohlenstoffmassen-ströme berücksichtigt. Für den Gleichgewichtszustand (im Stationärbetrieb) müssen die zu- und abgeführten Kohlenstoffmassen unter Berücksichtigung einer parametrierbaren Toleranz gleich sein.

Die Komponenten der C-Bilanz bestehen aus den über Luft, Kraftstoff und Öl in den Motor eingebrachten und den über das Abgas abgeführten Kohlenstoffmassenströmen. Der eingetragene C-Anteil durch verbranntes Öl ist nur schwer abzuschätzen und wird deshalb bei der Bilanz vernachlässigt. Bei der Definition der Toleranzen für die C-Bilanz muss diese Vernachlässigung berücksichtigt werden.

Weiterhin muss berücksichtigt werden, dass sich Abgasmassenströme, Abgasmolmassen und Abgaskonzentrationen immer auf feuchtes Rohabgas beziehen, woraus sich die Anforderungen ergeben, dass bekannt sein, welche Abgaskomponenten trocken und welche feucht gemessen werden, und dass eine Umrechnung der trocken gemessenen Konzentrationen auf feuchtes Abgas erfolgen muss. Hierzu ist eine sog. Feuchtekorrektur notwendig.

Für alle Abgasberechnungen wird immer die Konzentration des feuchten Rohabgases (Abgasrohemission, Rohemission) verwendet. Bei der Abgasmessung muss jedoch aus Gerätegründen zwischen trockener und feuchter Messung unterschieden werden. Dieser Sachverhalt macht eine entsprechende Umrechnung der trocken gemessenen Komponenten erforderlich. Wird das Abgas vor einem Abgasanalysator in einem Gaskühler abgekühlt, dann spricht man von einer trockenen Abgasmessung. Bei diesen Analysatoren wird das Verbrennungswasser vor der Analyse auskondensiert. Dies führt zu einfacheren Analysatoren.

Bei der feuchten Abgasmessung wird der entsprechende Analysator (z.B. FID) komplett beheizt, um die Kondensation des Verbrennungswassers zu verhindern. In Fig. 39 ist der Einfluss der Feuchtekorrektur am Beispiel des abgeführten Kohlenstoffmassenstroms dargestellt. Der Unterschied zwischen dem korrigierten und unkorrigierten Massenstrom beträgt etwa 5,2% und sollte nicht vernachlässigt werden.

Die Berechnung des Korrekturfaktors zwischen trockener und feuchter Abgasmessung erfolgt nach Richtlinie 91/441/EWG des Rates vom 26. Juni 1991 L 242 1 30.8.1991. Nach diesem Ansatz wird der Korrekturfaktor wie folgt berechnet:

$$t_{corr} = \left(1 - F_{FH} \cdot \frac{m_{fuel}}{m_{air}}\right) - KW_2 \qquad \text{[Gln. AIII.1]}$$

$$F_{FH} = \frac{1{,}969}{\left(1 + \frac{m_{fuel}}{m_{air}}\right)} \qquad \text{[Gln. AIII.2]}$$

$$KW_2 = \frac{1{,}608 \cdot H_a}{1000 + \left(1{,}1608 \cdot H_a\right)} \qquad \text{[Gln. AIII.3]}$$

$$H_a = \frac{6{,}22 \cdot R_a \cdot p_a}{p_B - p_a \cdot R_a \cdot 10^{-2}} \qquad \text{[Gln. AIII.4]}$$

$$p_a = 611{,}15 \cdot 10^{\frac{7{,}602 \cdot T}{241{,}2 + T}} \qquad \text{[Gln. AIII.5]}$$

Dabei ist $m_{fuel}$ der Kraftstoffmassenstrom, $m_{air}$ der angesaugte Luftmassenstrom, $R_a$ die Luftfeuchtigkeit, $p_a$ der Umgebungsdruck und $T$ die Temperatur der angesaugten Luft.

Nach der Berechnung des Korrekturfaktors $t_{corr}$ werden alle als trocken parametrierte Abgaskomponenten mit $t_{corr}$ nach Gln. AIII.6 von trocken auf feucht umgerechnet.

$$x_{feucht} = x_{trocken} \cdot t_{corr} \qquad \text{[Gln. AIII.6]}$$

Die Berücksichtigung der Luftfeuchte verlangt theoretisch ebenfalls nach einer Feuchtekorrektur. Dies wird im Rahmen dieser Arbeit jedoch vernachlässigt.

Neben der Feuchtekorrektur ist oft auch eine Umrechnung von Raum- in Massenanteile notwendig. Die Messwerte der Abgasanalysatoren stellen Raumanteile dar, die über Gln. AIII.7 mit der entsprechenden Molmasse in Gewichtsanteile umgerechnet werden können.

$$g_i = r_i * \frac{M_i}{M_{Gemisch}} \qquad \text{[Gln. AIII.7]}$$

Um den Massenstrom der Einzelkomponente zu berechnen, wird der Gewichtsanteil mit dem Gesamtmassenstrom multipliziert (Gln. AIII.8).

$$r_{i,trocken} * \frac{M_i}{M_{Gemisch}} * \dot{m}_{Gemisch} \qquad \text{[Gln. AIII.8]}$$

Die eigentliche Prüfgröße der C-Bilanz (ECB) berechnet sich nach Gln. 5.36.

$$ECB = \frac{\dot{m}_{Kohlenstoff,zugeführt} - \dot{m}_{Kohlenstoff,abgeführt}}{\dot{m}_{Kohlenstoff,zugeführt}} \qquad \text{[Gln. 5.36]}$$

Ein Fehler wird erkannt, wenn die Gln. 5.37 nicht erfüllt wird.

$$UG \le ECB \le OG \qquad \text{[Gln. 5.37]}$$

Im Gegensatz zur Fehlererkennung im Bereich Druck und Temperatur ist die C-Bilanz grundsätzlich für alle Motortypen anwendbar. Bei niedriger Last *(pme* < 1bar) sollte die Methode ausgeschaltet werden, da in diesem Bereich Luft- und Kraftstoffmassenstrom gegen Null gehen und damit das Potential für Fehlmeldungen stark ansteigt. Weiterhin ist zu berücksichtigen, dass die übliche Abgasmesstechnik in der Regel nicht für den dynamischen Betrieb vorgesehen ist. Aus diesem Grund sollte die C-Bilanz nur bei stationären Betriebspunkten eingesetzt werden.

Aufgrund der getroffenen Vereinfachungen und Vernachlässigungen und wegen Messungenauigkeiten bei der Abgas-, Luft- und Kraftstoffmassenstrommessung sollte für eine robuste und dennoch kritische Fehlerkennung die Toleranzen nicht kleiner als 10% gewählt werden. Tabelle T5.12 ist ein Vorschlag für die entsprechenden Toleranzen in Abhängigkeit der Detektionsschärfe.

| Prüfungen | Detektionsschärfe | Toleranz |
|---|---|---|
| $UG \leq ECB \cdot \mathbf{100} \leq OG$ | Hoch | 10% |
| | Mittel | 15% |
| | Niedrig | 20% |

Wie bereits ein wenig weiter oben erwähnt wurde, ist neben der Detektionsschärfe auch die Trennschärfe einer Methode wichtig. Bei der C-Bilanz gehen wegen der Feuchtekorrektur alle Abgasmessgrößen (*HC, CO, CO2, 02, NOX*) und die Massenströme für Luft und Kraftstoff in die Bilanz mit ein. Dabei wird angenommen, dass die Molmassen, die Kraftstoffdaten und das einbezogene Lambda korrekt sind.

Unter der Annahme, dass alle Größen gleichwertig sind, ergibt sich also eine Trennschärfe von $p = 1/7 \approx 0{,}14$. Diese Annahme ist natürlich nicht haltbar, da z.B. beim Dieselmotor die Größen 02 und *CO2* im %-Bereich und *HC, CO* und *NOX* im ppm-Bereich liegen. Damit steht der Faktor 10.000 zwischen diesen Größen. Hieraus folgt, dass selbst große Fehler in den Größen *HC, CO* oder *NOX* nur zu geringen Effekten in der C-Bilanz führen. Um diesen Sachverhalt zu belegen, wurde Anhand einer Stufenmessung am 2.0l TDI der Einfluss der einzelnen Komponenten auf die C-Bilanz untersucht. Für die Messung wurden folgende Punkte angefahren:

| Drehzahl | Drehmoment | Stufenzeit |
|---|---|---|
| 2000 min$^{-1}$ | 50 Nm, 100 Nm, 150 Nm | 300s |

Im Rahmen der Untersuchung wurden nacheinander alle Komponenten mit einem 50%-Fehler (Messwert * 1,5) beaufschlagt und gegen die Originalmessung verglichen. Das Ergebnis ist in Fig. 40 dargestellt.

Anhand von Fig. 40 ist zunächst zu erkennen, dass sich bei fehlerfreier Messung eine Abweichung von 5% bis 10 % zwischen den einströmenden und ausströmenden Kohlenstoffmassenströmen ergibt und somit die Angabe der minimalen Detektionsschärfe von 10% gerechtfertigt ist.

Ein Fehler von 50% gegenüber dem richtigen Messwert im Luft- oder Kraftstoffmassenstrom (ML bzw. MB) sowie bei der CO2-Konzentration führt nach Fig. 39 zu einer signifikanten Abweichung im Ergebnis der C-Bilanz. Ein entsprechender Fehler in den Größen NOX, CO, 02 und HC hat dagegen keine nennenswerten Auswirkungen.

Da die CO2-Emission nur für die Berechnung der abgeführten Kohlenstoffmassenströme Verwendung findet, macht sich der künstliche 50%-Fehler durch eine negative C-Bilanz bemerkbar. D.h. es wird mehr Kohlenstoff abgeführt als zugeführt. Der Luftmassenstrom geht dagegen auf beiden Seiten der Bilanz ein. Dabei ist aber zu berücksichtigen, dass die CO2-Konzentration der angesaugten Luft (ca. 350ppm) deutlich niedriger als die Konzentration im Abgas ist. Demzufolge ist auch der Effekt auf der abgeführten Seite deutlich größer als auf der zugeführten Seite. Dies drückt sich in einer negativen C-Bilanz aus.

Genau der umgekehrte Fall zeigt sich bei der Betrachtung des Kraftstoffmassenstroms. Hier ist der Einfluss auf der zugeführten Seite durch den Term des zugeführten Kraftstoffs deutlich größer als auf der abgeführten Seite. Dies ist durch eine positive C-Bilanz charakterisiert.

Für den umgekehrten Fehlerfall verhält sich das eben beschriebene Verhalten aufgrund der geführten Argumentation ebenfalls ungekehrt. Für kleinere Abweichungen ist der Effekt gleich aber nicht so deutlich ausgeprägt.

Hieraus kann abgeleitet werden, dass die Trennschärfe der C-Bilanz im Bereich der Massenströme und bei der CO2-Konzentration als gut zu bezeichnen ist. Für die Größen *HC, CO, NOX* und 02 ist die Trennschärfe als quasi Null zu bezeichnen. Bei CO muss noch zwischen Otto und Dieselmotor unterschieden werden. Damit erreicht die C-Bilanz folgende kanalspezifische Trennschärfen:

Tabelle T5.13 Kanalspezifische Trennschärfe der C-Bilanz

| Kanal | Trennschärfe *p* | |
|---|---|---|
| | Otto | Diesel |
| HC | 0,0001 | 0,0001 |
| CO | 0.25 | 0,0001 |
| CO2 | 0,25 | 0,25 |
| 02 | 0,25 | 0,25 |

(fortgesetzt)

| Kanal | Trennschärfe *p* | |
|---|---|---|
| | **Otto** | **Diesel** |
| NOX | 0,0001 | 0,0001 |
| ML | 0,25 | 0,25 |
| MB | 0,25 | 0,25 |

Aus der C-Bilanz kann zusätzlich auch noch eine Merkmalsausprägung abgeleitet werden, die bei einer späteren Fehlerisolation und Fehlerklassifikation besonders wertvoll ist. Eine signifikant negative Abweichung der C-Bilanz kann demnach als Merkmal für einen positiven Fehler bei der Luftmassenmessung oder bei der CO2-Messung benutzt werden. Eine signifikant positive Abweichung spricht für einen positiven Fehler bei der Kraftstoffmassenstrommessung. Positiv bedeutet in diesem Fall, dass der Messwert zu hoch ist.

Die Sauerstoffbilanz beruht auf dem gleichen Ansatz wie die zuvor beschriebene C-Bilanz. Dabei werden die in den Motor ein- und austretenden Sauerstoffmassenströme bilanziert. Fig. 41 zeigt den Aufbau der O2-Toolbox.

Die eigentliche Prüfgröße der O2-Bilanz *(E02B)* berechnet sich nach Gln. 5.38.

$$EO2B = \frac{\dot{m}_{O2,zugeführt} - \dot{m}_{O2,abgeführt}}{\dot{m}_{O2,zugeführt}} \qquad \text{[Gln. 5.38]}$$

Ein Fehler wird erkannt, wenn Gleichung 5.39 nicht erfüllt wird.

$$UG \leq EO\mathbf{2}B \leq OG \qquad \text{[Gln. 5.39]}$$

Genau wie die C-Bilanz, sollte auch die Sauerstoffbilanz nur für den Stationärbetrieb und bei *pme* > 1 bar eingesetzt werden. Tabelle T5.14 ist ein Vorschlag für die entsprechenden Toleranzen in Abhängigkeit der Erkennungsschärfe.

Tabelle T5.14 Richtwerte zur Detektionsschärfe bei der O2-Bilanz

| Prüfungen | Detektionsschärfe | Toleranz |
|---|---|---|
| | Hoch | 10% |
| $UG \leq EO\mathbf{2}B \cdot \mathbf{100} \leq OG$ | Mittel | 15% |
| | Niedrig | 20% |

Für die Diskussion der Trennschärfe wird das Szenario aus dem vorherigen Kapitel verwendet. Das Ergebnis ist in Fig. 42 dargestellt.

Im Gegensatz zur C-Bilanz zeigt sich erwartungsgemäß ein etwas anderes Bild. Die Fehlerauswirkung auf Luft- und Kraftstoffmassenstrom ist zwar zu erkennen, liegt aber immer noch unterhalb der empfohlenen Detektionsschwelle. Die Auswirkungen durch einen 50%igen Fehler im 02- oder im *CO2*-Kanal sind dagegen deutlich signifikant. Die Merkmalsausprägung in negativer Richtung erklärt sich durch den "zu hoch" abgeführten Sauerstoffmassenstrom. Hieraus folgt, dass eine signifikant negative Abweichung der *O2*-Bilanz als Merkmal für einen positiven Fehler bei der 02- oder bei der *CO2*-Messun abgeleitet werden kann.

Damit erreicht die O2-Bilanz folgende kanalspezifische Trennschärfen:

Tabelle T5.15 Kanalspezifische Trennschärfe der O2-Bilanz

| Kanal | Trennschärfe $p$ | |
|---|---|---|
| | Otto | Diesel |
| HC | 0,0001 | 0,0001 |
| CO | 0.2 | 0,0001 |
| CO2 | 0,2 | 0,25 |
| 02 | 0,2 | 0,25 |
| NOX | 0,0001 | 0,0001 |
| ML | 0,2 | 0,25 |
| MB | 0,2 | 0,25 |

Im Rahmen der Messdatendiagnose besteht die Möglichkeit, verschiedene Lambdawerte zu ermitteln bzw. diese zu vergleichen. Dabei handelt es sich immer um das globale Luft-Kraftstoff-Verhältnis, welches den Zusammenhang zwischen zu- und abgeführten Größen im Stationärpunkt beschreibt. Fig. 43 gibt einen Überblick zur Gesamtfunktion des Lambdavergleichs.

Aus Fig. 43 ist zu entnehmen, dass es grundsätzlich drei Informationsquellen für die Berechnung bzw. Messung der jeweiligen Lambdawerte gibt, nämlich Lambda als Messwert (Lambda der ECU aus motor-/fahrzeugeigener Lambdasonde ($\lambda$ECU) oder Lambda als Messwert einer externen Sonde ($\lambda$Sonde)), berechnetes Lambda aus Luft- und Kraftstoffmassenstrom ($\lambda$Luft / Kraftstoff), bzw. berechnetes Lambda aus den Abgasrohemissionen ($\lambda$Brettschneider).

Der Lambda-Vergleich hat im Wesentlichen die Aufgabe, durch Vergleich redundanter Größen Fehler im Bereich der Abgas- und Massenströme zu erkennen. Die Verarbeitung der Einzelergebnisse erfolgt in der Logik-Toolbox. Methodisch ist der Lambda-Vergleich der Massenstrom-Toolbox zugeordnet.

Um den Rechenaufwand für die Brettschneider-Formel zu reduzieren, wurden folgende Vereinfachungen getroffen:

In der Parametrierung werden Daten zur Luftfeuchtigkeit und zur Umgebungstemperatur festgelegt (z.B. $\varphi$ = 50% bei TUmg = 20°C). Der Ölverbrauch wird zu 0 gesetzt. Es wird schwefelfreier Kraftstoff angenommen. Im Abgas sind die Verbindungen NH3, H2S, H2 in so geringen Konzentrationen vorhanden, dass sie vernachlässigt werden. Die HC-Verbindungen CH4, CH3OH und HCHO werden vom FID zu großen Teilen mit erfasst, der Rest wird vernachlässigt.

Aus $\lambda$Brettschneider, $\lambda$Luft/Kraftstoff und $\lambda$Sonde lassen sich die Prüfregeln aus Tabelle T5.16 ableiten. Da nicht zu erwarten ist, dass die berechneten und/oder gemessenen $\lambda$-Werte genau gleich sind, muss bei einem Vergleich eine gewisse Toleranz zugelassen werden. Dieser Sachverhalt wird durch das $\cong$-Zeichen berücksichtigt.

Die Toleranz ist parametrierbar und gleichzeitig auch ein Indikator für die Detektionsschärfe der einzelnen Prüfregeln.

Um den Zielkonflikt zwischen einer guten Robustheit und einer strengen Fehlererkennung objektiv beschreiben zu können, wurde der Einfluss der Vereinfachungen zur Brettschneiderformel sowie der Einfluss des Betriebspunkts und der verschiedenen Messverfahren analysiert.

Tabelle T5.16 Fehlererkennungsmethoden beim Lambdavergleich

| Prüfung | Gültigkeit |
|---|---|
| $\lambda_{Brettschneider} \cong \lambda_{\text{αιρ/φυελ}}$ | Allgemein |
| $\lambda_{Brettschneider} \cong \lambda_{ECU}$ | |
| $\lambda_{Brettschneider} \cong \lambda_{Sonde}$ | |
| $\lambda_{air/φυελ} \cong \lambda_{Sonde}$ | |
| $\lambda_{air/φυελ} \cong \lambda_{ECU}$ | |
| $\lambda_{Sonde} \cong \lambda_{ECU}$ | |
| $0{,}7 \leq \lambda_{Sonde} \cong \lambda_{ECU} \cong \lambda_{Brettschneider} \leq 1{,}3$ | Ottomotoren |
| $1{,}2 \leq \lambda_{Sonde} \cong \lambda_{ECU} \cong \lambda_{Brettschneider} \leq 10$ | Dieselmotoren |

Aufgrund der Vereinfachungen bei der Berechnung nach Brettschneider und wegen Messungenauigkeiten bei der Luft- und Kraftstoffmassenstrommessung sowie beim Messen mit Lambdasonden sollten für eine robuste und dennoch kritische Fehlererkennung die Toleranzen nicht kleiner als 10% gewählt werden. Tabelle T5.17 ist ein Vorschlag für die entsprechenden Toleranzen in Abhängigkeit der Detektionsschärfe.

T5.17 Richtwerte zur Detektionsschärfe beim Lambdavergleich

| Prüfungen | Detektionsschärfe | Toleranz |
|---|---|---|
| $\lambda_{Brettschneider} \cong \lambda_{air/φυελ}$ <br> $\lambda_{Βρεττσχηνειδερ} \cong \lambda_{ECU}$ | **Hoch** | **10%** |
| $\lambda_{Brettschneider} \cong \lambda_{Sonde}$ <br> $\lambda_{air/φυελ} \cong \lambda_{Sonde}$ filet blanc | **Mittel** | **15%** |
| $\lambda_{air/φυελ} \cong \lambda_{ECU}$ <br> $\lambda_{Sonde} \cong \lambda_{ECU}$ | **Niedrig** | **20%** |

Für die Lambda-Toolbox gelten die gleichen Betriebs- und Abschaltbedingungen wie bei der Druck- und Temperatur-Toolbox. Das heißt, dass die Anwendung nur bei stationären Betriebspunkten erfolgen sollte und dass die Methoden bei Schubabschaltung ausgesetzt werden.

Die Diskussion der Trennschärfe für die $\lambda$-Prüfregeln ist etwas differenzierter zu betrachten.

Der Vergleich $\lambda_{Sonde} \cong \lambda_{ECU}$ ist durch eine Trennschärfe p = 0,5 charakterisiert, da nur zwei gleichwertige Messsignale Bestandteil der Prüfung sind.

In die Vergleiche $\lambda_{Luft/Krafisloff} \cong \lambda_{ECU}$ und $\lambda_{Luft/Kraftstoff} \cong \lambda_{Sonde}$, gehen jeweils drei gleichwertige Messsignale ein, woraus sich eine Trennschärfe von *p = 1/3* ergibt.

Die Methodentrennschärfe für $\lambda_{Luft/Karftstoff} \cong \lambda_{Brettschneider}$ und $\lambda_{Brettschneider} \cong \lambda_{ECU}$ bzw. $\lambda_{Brettschnelder} = \lambda_{Sonde}$ muss dagegen kanalspezifisch betrachtet werden und ist in Tabelle T5.18 zusammengefasst.

Da bei Ottomotoren CO in % und bei Dieselmotoren in ppm gemessen wird muss bei der Definition der kanalspezifischen Trennschärfe zwischen beiden Motortypen differenziert werden. Hierbei wird vereinfacht angenommen, dass beim Ottomotor der CO-Term den gleichen Stellenwert wie die Terme CO2, 02, ML, MB, $\lambda_{Sonde}$ und $\lambda_{ECU}$ hat. Der NOX-Term wird bei der Definition der Methodentrennschärfe wegen $p_{NoX}$ = 0,0001 vernachlässigt. Beim Dieselmotor wird zusätzlich noch der CO-Term vernachlässigt.

Die soll kurz am Beispiel der Methode $\lambda_{Luft/Kraftstoff} \cong \lambda_{Sonde}$ erläutert werden. Wird die Methode für einen Ottomotor ausgeführt, so werden für die Berechnung die Größen HC, CO, CO2, 02, NOX und $\lambda_{Sonde}$ benötigt. Allerdings werden HC und NOX wegen ihres geringen Einflusses für die Definition der Trennschärfe vernachlässigt. Daher werden nur noch 5 anstatt 7 gleichwertige Terme für die Definition von *p* verwendet und es ergibt sich eine Trennschärfe von *p = 1/5.*

Tabelle T5.18 Kanalspezifische Trennschärfe der O2-Bilan

| Kanal | Trennschärfe *p* $\lambda_{Luft/Kραφτστοφφ} \cong \lambda_{Brettschneider}$ | | Trennschärfe *p* $\lambda_{Brettschneider} \cong \lambda_{ECU}$ | | Trennschärfe *p* $\lambda_{Brettschneider} \cong \lambda_{Sonde}$ | |
|---|---|---|---|---|---|---|
| | **Otto** | **Diesel** | **Otto** | **Diesel** | **Otto** | **Diesel** |
| HC | 0,0001 | 0,0001 | 0,0001 | 0,0001 | 0,0001 | 0,0001 |
| CO | 0.2 | 0,25 | 0,0167 | 0,2 | 0,0167 | 0,2 |
| CO2 | 0.2 | 0,25 | 0,0167 | 0,2 | 0,0167 | 0,2 |
| 02 | 0.2 | 0,25 | 0,0167 | 0,2 | 0,0167 | 0,2 |
| NOX | 0,0001 | 0,0001 | 0,0001 | 0,0001 | 0,0001 | 0,0001 |
| ML | 0.2 | 0,25 | 0,0167 | 0,2 | 0,0167 | 0,2 |
| MB | 0.2 | 0,25 | 0,0167 | 0,2 | 0,0167 | 0,2 |

Genau wie bei den zuvor beschriebenen Bilanzen lassen sich auch beim Lambdavergleich entsprechende Fehlermerkmale für die Fehlerklassifikation extrahieren. Aus Fig. 44 ist deutlich zu erkennen, dass signifikante Fehler bei der Luftoder Kraftstoffmassenstrommessung zu entsprechenden Merkmalen bei der Lambdaberechnung führen. Bei der Berechnung nach Brettschneider dominieren dagegen erwartungsgemäß Fehler im Bereich der *CO2-* und

$O2$-Messung.

Durch eine Kraftstoffanalyse können die Hauptbestandteile $c_{Brennstoff}$, $h_{Brennstoff}$ und $o_{Brennstoff}$ bestimmt werden. Die Summe dieser Komponenten muss nahezu eins ergeben. In der Parametrierung können entweder Vorgabewerte für den jeweiligen Kraftstoff ausgewählt oder es können aktuelle Werte eingegeben werden.

Bei der Eingabe wird geprüft, ob die Bedingung nach Gln. 5.40 erfüllt ist.

$$0{,}99 < c_{Brennstoff} + h_{Brennstoff} + o_{Brennstoff} < 1{,}01 \qquad \text{[Gln. 5.40]}$$

Zusätzlich konnten aus mehreren Kraftstoffanalysen für die üblichen Kraftstoffe Normal, Super, Super Plus und Diesel minimale und maximale Werte für die Hauptbestandteile als Vergleichsnormal hinterlegt werden.

Tabelle T5.19 Grenzwerte für die gravimetrischen Kraftstoffhauptbestandteile

| Ottokraftstoffe | |
|---|---|
| $c_{Brennstoff\ min}$ = 0,8466 | $c_{Brennstoff\ max}$ = 0,8865 |
| $h_{Brennstoff\ min}$ = 0,1015 | $h_{Brennstoff\ max}$ = 0,136 |
| $o_{Brennstoff\ min}$ = 0,05 | $o_{Brennstoff\ max}$ = 0,0227 |
| **Dieselkraftstoffe** | |
| $C_{Brennstoff\ min}$ = 0,8298 | $C_{Brennstoff\ max}$ = 0,8371 |
| $h_{Brennstoff\ min}$ = 0,127 | $h_{Brennstoff\ max}$ = 0,142 |
| $o_{Brennstoff\ min}$ = 0 | $o_{Brennstoff\ max}$ = 0., |

Hieraus folgt die Prüfung nach Gln. 5.41.

$$c, h, o_{Brennstoff,\min} \le c, h, o_{Brennstoff} \le c, h, o_{Brennstoff,\max} \qquad \text{[Gln. 5.41]}$$

Neben den gravimetrischen Anteilen wird bei der Kraftstoffanalyse natürlich auch die Kraftstoffdichte bestimmt. Dabei wurden folgende Grenzwerte für die entsprechenden Kraftstoffe ermittelt:

Tabelle T5.20 Grenzwerte für die Kraftstoffdichte

| Ottokraftstoffe | |
|---|---|
| $\rho_{min}$ = 730 kg/m$^3$ | $\rho_{max}$ = 773 kg/m$^3$ |
| **Dieselkraftstoffe** | |
| $\rho_{min}$ = 829 kg/m$^3$ | $\rho_{max}$ = 837 kg/m$^3$ |

Hieraus folgt die Prüfung der Kraftstoffdichte nach Gln. 5.42.

$$\rho_{Kraftstoff,\min} \le \rho_{Kraftstoff} \le \rho_{Kraftstoff,\max} \qquad \text{[Gln. 5.42]}$$

An dieser Stelle sei angemerkt, dass die Grenzwerte als Richtwerte zu verstehen sind, da sie nur aus einer sehr beschränkten Stichprobenanzahl berechnet wurden. Die Betrachtung der Kraftstoffdaten ist daher im Wesentlichen zur Vermeidung von Eingabefehlern gedacht.

Die Stillstandsdiagnose soll Fehler an Motor und/oder Prüfstand bereits vor einem Prüflaufstart detektieren. Hierzu werden für ausgewählte Kanäle Messdaten in einem parametrierbaren Zeitfenster (z.B. 60 Sekunden) mit einer Erfassungsfrequenz von 1 Hz gesammelt und in einem einfachen Startup-Check verarbeitet. Das Zeitfenster bildet die Datenbasis, auf die sich alle in diesem Kapitel beschriebenen Einzelfunktionen beziehen.

Mit entsprechenden Methoden wird geprüft, ob alle Temperaturen in etwa der Umgebungstemperatur entsprechen und alle Drücke um den Umgebungsdruck schwanken. Weiterhin wird darauf geachtet, dass alle ausgewählten Messkanäle vorhanden sind und erwartungsgemäße Messwerte liefern. Die letzte Prüfung untersucht, ob alle ausgewählten Messwerte drift- oder rauschfrei sind.

Der Ansatz begründet sich durch die einfache Tatsache, dass sich alle Messgrößen nach hinreichend langer Wartezeit in einen stabilen Gleichgewichtszustand mit der Umgebung begeben. Temperaturen nähern sich z.B. der Umgebungstemperatur an und Drücke logischerweise dem Umgebungsdruck (Fig. 45). Weiterhin kann bereits im Stillstand festgestellt werden, ob sich Signale deutlich vom erwarteten Signalverhalten unterscheiden.

Für eine brauchbare Stillstandsdiagnose sind daher die Funktionen zur Grenzwertüberwachung, zum Wertevergleich, zur Stabilität und zur Signalqualität vorzusehen.

Die Grenzwertprüfung im Stillstand bedient sich der einfachen Tatsache, dass sich Messgrößen an Motorenprüfständen nach mehr oder weniger langer Wartezeit bestimmten asymptotischen Werten annähern. Bei Drücken ist das in der Regel der Umgebungsdruck und bei Temperaturen die Umgebungstemperatur. Bei Temperaturen muss streng darauf geachtet werden, wie lange der letzte gefeuerte Betrieb zurückliegt, da sich Bauteile, Öl und Kühlwasser noch in der Abkühlphase befinden können. Geht man vom kalten, stehenden Motor aus, so müssen Drücke, Temperaturen, "Abgasmesswerte" oder Massenströme in charakteristischen Grenzen liegen. Diese werden im Rahmen der Grenzwertprüfung im Stillstand überwacht. Tabelle T5.21 zeigt eine Übersicht zu typischen Grenzwerten, die im Rahmen der Grenzwertüberwachung untersucht werden.

Tabelle T5.21 Grenzwerte für die Limitüberwachung innerhalb der Stillstandsdiagnose

| Kanaltyp | Einheit | Min | Max |
|---|---|---|---|
| Drehzahlen | min$^{-1}$ | -5 | 5 |
| Drehmomente | Nm | -5 | 5 |
| Kraftstoffmassenstrom | Kg/h | -0,01 | 0,01 |
| Luftmassenstrom | Kg/h | -0,01 | 0,01 |
| 02 | Vol-% | 20 | 21,5 |
| CO2 | Vol-% (ppm) | 0,01 (100) | 0,04 (400) |
| Drücke | mbar | 990 | 1100 |
| Temperaturen | ˚C | 15 | 40 |

Die Temperaturangaben sind Richtwerte, die für die übliche Boxenklimatisierung gelten. In Abhängigkeit der Prüfaufgabe können hier durchaus auch andere Temperaturbereiche notwendig sein (z.B. Kältekammer).

Die Funktion "Wertevergleich im Stillstand" prüft, ob sich Messgrößen gleicher Art um eine definierte Referenz bewegen. Drücke und Temperaturen sind hierfür ein typisches Beispiel. Die Vergleichsbasis kann dabei sowohl ein vorgegebener Wert als auch ein berechneter Referenzwert sein.

Bei einem vorgegeben Grenzwert werden alle Messgrößen gleicher Art mit diesem Referenzwert in einem parametrierbaren Toleranzband verglichen. Ein solcher Grenzwert kann z.B. die gemessene Umgebungstemperatur sein. Alle betrachteten Temperaturen müssen dann Gln. 5.43 erfüllen.

$$T_{Umgebung} - Toleranz \leq T_{prüf} \leq T_{Umgebung} + Toleranz \qquad \text{[Gln. 5.43]}$$

Dabei ist $T_{Prüf}$ die zu bewertende Temperatur und *Toleranz* die durch den Anwender zu parametrierende Toleranz.

Die Bestimmung der Referenzgröße kann auch automatische erfolgen. Hierzu sind allerdings mindestens zwei Messgrößen der gleichen Art erforderlich. In diesem Fall kann die Referenzgröße aus den einzelnen Größen über die Medianberechnung gebildet werden. Die weitere Prüfung erfolgt dann wie oben bereits beschrieben und ist beispielhaft in Fig. 46 dargestellt.

Der Wertevergleich im Stillstand wird im Rahmen der Messdatendiagnose so implementiert, dass der Anwender entscheiden kann, ob er eine Referenzgröße vorgeben möchte oder ob diese aus den Daten berechnet werden soll.

Die Bewertung der Stabilität hat bei der Stillstandsdiagnose die zwei Funktionen der Drifterkennung und der Zeitverhaltens-Kompensation. Für die Drifterkennung wird der Gradient der kanalspezifischen Datenbasis über eine einfache lineare Regression ermittelt und mit einem parametrierbaren Grenzgradienten verglichen. Damit wird festgestellt ob sich der entsprechende Kanal in einem asymptotischen Zustand befindet. Dies ist besonders für Temperaturkanäle wichtig.

Die Kompensation des Zeitverhaltens ist grundsätzlich für alle Messkanäle anwendbar, bezieht sich im Wesentlichen jedoch auf Temperaturkanäle. Bei dieser Methode wird das Zeitverhalten durch lokale, lineare Modelle (LLM) kompensiert, indem bei entsprechendem $r^2$ der Modellwert vom Messwert abgezogen wird. Als Ergebnis erhält man ein drift- und mittelwertfreies Signal um Null (Fig. 47) mit dem die Bewertung der Signalqualität durchgeführt werden kann.

In Fig. 48 sind die ersten vier Teilbereiche für das Zeitintervall $0s < t < 120s$ mit den entsprechenden Modellgleichungen der LLM's und dem Regressionskoeffizienten $r^2$ dargestellt.

Die Bewertung der Signalqualität im Stillstand erfolg genauso wie bereits weiter oben beschrieben. Als Datenbasis werden in diesem Fall die Stillstandsdaten herangezogen.

Allen bisher beschriebenen Fehlererkennungsmethoden ist gemein, dass sie nur für den stationären oder quasistationären Betriebspunkt angewendet werden können. Daher soll an dieser Stelle ein Ansatz zur Fehlererkennung bei instationären Betriebsbedingungen wie z.B. beim NEDC-Abgaszyklus vorgestellt werden.

Wie bereits erwähnt, scheidet die modellbasierte Fehlererkennung aus Zeitgründen in der Regel aus. Es muss also eine Methode gefunden werden, die ohne Aufwand parallel zum Prüflauf Datenmuster lernt und diese anschließend wieder richtig klassifizieren kann. Diese Anforderung entspricht einem selbst lernenden Beobachtersystem.

Als Lösungsansatz wurde die Adaptive Resonanz Theorie (ART) von Gail Carpenter und Stephen Grossberg gewählt. Bei der ART handelt es sich nicht um ein einzelnes Modell sondern um eine Familie von Modellen, die zu den unüberwacht lernenden Algorithmen gehören.

Diese Modelle wurden ursprünglich zur Lösung des Elastizitäts-Plastizitäts-Dilemma neuronaler Netze entwikkelt. Darunter versteht man die Frage, wie neue Assoziationen in neuronalen Netzen erlernt werden können ohne alte Assoziationen dabei zu vergessen.

Damit entspricht die Lösung des Elastizitäts-Plastizitäts-Dilemma aber auch gleichzeitig der Lösung des Klassifikationsproblems eines selbst lernenden Beobachtersystems. Das Lernen kann bei ART-Netzen nach einem langsamen oder nach einem schnellen Lernverfahren erfolgen. Beim langsamen Lernen werden die Gewichte der gewählten Klasse mit Differentialgleichungen angepasst. Beim schnellen Lernen wird die Anpassung dagegen mithilfe algebraischer Gleichungen bestimmt.

Für den Einsatz als Beobachtersystem wird der Schnelllernmodus verwenden, da hierbei ein Eingabemuster nur einmal präsentiert werden, um erlernt zu werden. Dies ist eine Eigenschaft die für ein Bobachtersystem von entscheidender Relevanz ist. Ermöglicht wird dies durch eine hohe Plastizität zum beibehalten bereits erlernter Muster, die aber gleichzeitig eine zu starke Modifikation bereits gelernter Muster verhindert. Hierdurch kann prinzipiell jede Messung als neues Muster erlernt und im Umkehrschluss als Referenz für zukünftige Messungen herangezogen werden.

Grundsätzlich arbeiten die ART-Modelle nach folgendem Schema:

1) Am Netz wird ein Eingangsmuster angelegt.

2) Der Algorithmus versucht das Eingabemuster, je nach Ähnlichkeit mit gespeicherten Mustern, in eine vorhandene Klasse einzuordnen.

3) Kann das Muster zu keiner bestehenden Klasse zugeordnet werden, wird eine neue Klasse erzeugt. Dies geschieht durch Speichern eines dem Eingabemuster ähnlichen Muster.

4) Wird ein Muster gefunden, dass unter Berücksichtigung einer vorgegebenen Toleranz ähnlich ist, wird das gespeicherte Muster leicht modifiziert, um es dem neunen Muster ähnlicher zu machen.

5) Gespeicherte Muster, die dem aktuellen Eingabemuster nicht ähnlich sind, werden nicht verändert.

Mit dieser Vorgehensweise können also neue Klassen erzeugt werden (Plastizität), ohne bestehende Muster zu verändern wenn diese dem aktuellen Eingabemuster nicht ähnlich sind (Stabilität).

Wichtig ist weiterhin, dass es ART-Modelle für binäre und für kontinuierliche Eingabemuster gibt.

Da es sich bei Messdaten um kontinuierliche Daten handelt, kommen für die Umsetzung auch nur die ART-Varianten für kontinuierliche Eingabevektoren in Frage. Diese speziellen Modelle werden als ART-2 oder ART-2A-Modelle bezeichnet und stellen eine Erweiterung der klassischen ART-Modelle dar. Fig. 49 zeigt den schematischen Schnitt durch ein ART2-Netzwerk.

Das Eingabemuster wird an der Eingabeschicht $F_0$ angelegt und anschließen an die Vergleichsschicht $F_1$ propagiert. Dort wird es in verschiedenen Schritten Verstärkt und normiert. Dies geschieht solange, bis sich ein definierter Gleichgewichtszustand zwischen der Vergleichsschicht und der Erkennungsschicht $F_2$ einstellt. Die Steuerung erfolgt über einen Ähnlichkeitsparameter $r$ und über eine Reset-Komponente. Die Neuronen in $F_1$ repräsentieren die Netzattribute wogegen die Neuronen in $F_2$ die Kategorien oder Klassen repräsentieren. Jede Verbindung wird mit spezifischen Gewichten bewertet. Daher wird die Gewichtsmatrix auch als der Langzeitspeicher der ART bezeichnet.

Dem Ähnlichkeitsparameter sollte bei der Parametrierung von ART-Netzen besondere Aufmerksamkeit geschenkt werden. Er hat starken Einfluss auf die Klassifikationseigenschaften des Netzwerks. Ein hoher Wert verursacht dabei eine feine Erinnerung, d.h. es werden viele kleine Klassen gebildet. Ein niedriger Wert führt dagegen zu einer höheren Abstraktion mit weniger, aber dafür gröberen Klassen.

Auf eine ausführliche mathematische Beschreibung des Algorithmus wird an dieser Stelle verzichtet und stattdessen auf "Simulation neuronaler Netze, von A. Zell, Addison Wesley Longmann Verlag, 1994, auf" Entwicklung und Verifizierung eines dynamischen Beobachtersystems für Motorenprüfstände", von E. Maronova, Bachelorarbeit, Darmstadt 2006, oder" Adaptiv-Resonanz-Theorie und Entwicklung eines dynamischen Beobachtersystem zur Motor-Diagnose" von Toma Donchev, Bachelorarbeit, Darmstadt 2007, verwiesen.

Die Aufgabe eines Beobachtersystems besteht aber nicht nur in der Klassifizierung sondern auch im Vergleich der Messwerte mit assoziierten Referenzwerten. Nur so kann das Beobachtersystem Fehler in der Überwachten Zielgröße erkennen. Hierzu müssen in der Parametrierung entsprechende Ein- und Ausgabegrößen angegeben werden. Die Anzahl ist theoretisch unbegrenzt, wird aber aus Gründen der Systembelastung auf 10 Ein- und Ausgangsgrößen beschränkt. Gleiches gilt grundsätzlich auch für die Klassenanzahl.

Durch die Parametrierung wird also festgelegt, welche Daten durch das Netz assoziiert werden sollen. D.h., dass mit dem Beobachtersystem ein empirisches Assoziationsmodell zwischen Ziel- und Antwortgrößen für den fehlerfreien Prozesses gebildet wird. Für diese Aufgabe ist eine Erweiterung der ART notwendig, die als ARTMAP oder Predicted ART bezeichnet wird. Bei ARTMAP-Netzen werden zwei ART-Netze mit einem Verbindungsnetz, dem sog. MAP-Field zu einem überwacht lernenden System kombiniert (Fig. 50). Hieraus folgt, dass ein Trainingsmuster nun aus einem Eingabevektor (Zielgröße oder Faktor) und einem damit assoziierten Ausgabevektor (Antwortgröße) bestehen muss.

Dabei spielt es keine Rolle, ob man ART-1, ART-2 oder ART-2A-Netze verwendet. Im Rahmen der vorliegenden Arbeit wurden ART-2A-Netze verwendet.

Das erste ART-Netz (ART$^a$) verarbeitet den Eingabevektor und das zweite (ART$^b$) den Ergebnisvektor. Die beiden ART-Netze sind durch das MAP-Field miteinander verbunden und werden so miteinander synchronisiert.

Um die Qualität eines bereits trainierten ARTMAP-Nertzwerks zu prüfen legt man einen Eingabevektor an der Erkennungsschicht von ART$^a$ an und lässt gleichzeitig alle Eingaben der Erkennungsschicht von ART$^b$ auf Null. In ART$^a$ wird nun eine passende Klasse für die Eingabe gesucht.

Wird durch die Aktivierung eine bereits trainierte Zelle angesprochen, führt dies zur Aktivierung der entsprechenden MAP-Fieldzelle, die wiederum eine entsprechende Ausgabe erzeugt. Wird dagegen eine untrainierte Zelle in ART$^a$ aktiviert, hat dies die Aktivierung aller MAP-Fieldzellen zur Folge. Dies ist ein Merkmal, dass die Eingabe nicht sicher genug klassifiziert werden kann.

Diese Eigenschaft eignet sich hervorragend zur Steuerung eines automatischen Beobachtersystems. Der oben beschriebene Algorithmus wird nun für jedes Muster durchgeführt. Kann ein Eingabemuster nicht Klassifiziert werden, wird automatisch mit diesem Muster noch einmal der Trainingsalgorithmus durchlaufen. Dies erfolgt solange, bis entweder ein definiertes Abbruchkriterium oder ein trainierter Zustand erreicht wird.

Um die grundsätzliche Eignung eines ARTMAT-Netzwerkes als Basis für ein selbst lernendes Beobachtersystem zu untersuchen wurden diverse NEDC-Zyklen verwendet. Diese wurden zunächst miteinander verglichen um unzulässige Abweichungen für die Bewertung auszuschließen. Aus allen Zyklen wurde ein Zyklus als Referenzmuster selektiert der dem ARTMAP-Prototyp (Fig. 50) als "Messung" präsentiert wurde. Anschließend wurde das Netzt mit den anderen Zyklen betrieben. Dabei sollten zwei Aspekte überprüft werden:

1) Wie gut kann das ARTMAP-Netz ähnliche Muster klassifizieren?
2) Wie gut ist die Vorhersage des ARTMAP-Netzes für die Zielgröße?

Für die Auswertung ist wichtig, dass die zu untersuchenden NEDC-Messungen gleichen Motor (Pkw-TDI-Motor) über mehrere Tage verteilt gemessen wurden.

Die Analyse ist exemplarisch in Fig. 51 für die NOX-Rohemission dargestellt. Es ist leicht zu erkennen, dass die Reproduzierbarkeit der NOX-Messung relativ gut ist. Im Mittel betragen die Schwankungen weniger als 50ppm. Mit diesen Daten wurde untersucht, wie gut ein ARTMAP-Netzwerk als Referenz für einen instationären NEDC-Zyklus geeignet ist.

Die Untersuchung zum ARTMAP-Beobachtersystem erfolgte offline in einem Prototyp. Für die Untersuchung wurde ein ARTMAP-Netz mit sechs Eingangsgrößen und einer Ausgangsgröße erzeugt. Als Eingangsgrößen wurden Drehzahl, Gaspedalstellung, Drehmoment, Ansteuerbeginn der Haupteinspritzung, Einspritzmenge der Haupteinspritzung sowie die Dauer der Haupteinspritzung verwendet. Zielgröße bzw. Ausgangsgröße war die NOX-Rohemission. Für die Trainingsphase wurde das Netz nach dem oben beschriebenen Verfahren mit einem beliebig ausgewählten NEDC-Zyklus trainiert (Rote Linie in Fig. 51). Training bedeutet in diesem Fall, dass die entsprechenden Daten einem untrainierte Netz als Startmuster präsentiert werden. Diese Daten sollen vom Netz Klassifiziert und mit der richtigen Zielgröße assoziiert werden. Bei der Validierung mit anderen NEDC-Daten wird zuerst geprüft, ob das aktuelle Muster bereits bekannt ist oder neu trainiert werden muss. Im Fall eines bekannten Musters erfolgt ein Vergleich zwischen dem aktuellen Messwert und dem vorhergesagten Netzausgang.

In Fig. 52 ist stellvertretend das Ergebnis eines beliebig ausgewählten NEDC-Zyklusses gegen die Referenzmessung dargestellt (Die Untersuchung der anderen Zyklen führt zu ähnlichen Ergebnissen). Aus dem Verlauf kann entnommen werden, dass der Netzausgang der realen Messung gut folgen kann. Größere Abweichungen sind lediglich im Überland- und Autobahnteil des NEDC zu erkennen. Begründet wird dies durch zwei sehrähnliche Klassen und einen zu geringen Kontrast. Dies ist leicht an der oszillierenden Netzausgabe im Bereich von 1750 bis 2000s zu erkennen. Aus der Tatsache, dass Modell und Messung ein gleiches dynamisches Verhalten aufweisen, kann eine grundsätzliche Eignung des ARTMAP-Netzwerks zur dynamischen Diagnose abgeleitet werden. Mit einer maximalen Abweichung von 202ppm (im Mittel ca. 25-30ppm) zwischen Netzausgang und Messung konnte bereits mit dem Prototyp ein überraschend gutes Ergebnis erzielt werden. Hierbei ist zu Berücksichtigen, dass bereits die Messungen um bis zu 50 ppm streuen. Die Anpassung des Ähnlichkeitsfaktors hat an dieser Stelle noch ein deutliches Optimierungspotential.

Der ARTMAP-Ansatz eignet sich grundsätzlich gut als Basis für eine dynamische Fehlererkennung in Form eines Beobachtersystems.

An die Fehlerisolation werden zwei grundsätzliche Anforderungen gestellt:

Sicheres Melden fehlerhafter oder auffälliger Messgrößen unter Berücksichtigung einer parametrierbaren Diagnoseschärfe.

Generischer Aufbau, um zukünftige Methoden zur Fehlererkennung automatisch in die Algorithmen der Fehlerisolation einzubinden.

Zur Umsetzung dieser Anforderungen wurde eine entsprechende Auswertelogik entwickelt die im Folgenden als Logic Layer bezeichnet wird, und die schematisch in Fig. 53 dargestellt ist.

Bei der Entwicklung wurde berücksichtigt, dass sowohl kanalselektive als auch kanalübergreifende Methoden zur Fehlererkennung angewendet werden. Weiterhin wurde zwischen einer Einzelwertfehlererkennung durch die zyklische Online-Fehlererkennung und zwischen der Diagnose von Zeitfenstern in Form von Ringspeicherelementen differenziert.

Damit alle Teilinformationen richtig und generisch interpretiert werden können, basiert die Struktur der Auswertelogik für die Fehlerisolation auf einem kanalselektiven Ansatz.

Der kanalselektive Ansatz verlangt, dass Fehlererkennungsmethoden mit mehreren Eingangsgrößen auf die beteiligten Messkanäle projiziert werden. Die Ergebnisse der entsprechenden Methoden werden dem Logic Layer zugeführt, dort automatisch ausgewertet und zu entsprechenden Meldungen weiter verarbeitet. Die Meldungen werden anschließend an die Visualisierung und parallel an die Datenspeicherung weitergegeben.

Der Aufbau des aus den Blöcken Fehlerisolation und Fehlerklassifikation bestehenden Logic Layer ist in Fig. 54 dargestellt. In Erinnerung an den Diagnoseworkflow wurden dabei die Fehlererkennung und die Fehlerisolation zum Block "Fehlerisolation" sowie die Fehleridentifikation und Fehlerklassifikation zum Block "Fehlerklassifikation" zusammengefasst.

Die Fehlerisolation hat die Aufgabe alle Einzelergebnisse der Fehlererkennung auf die beteiligten Messkanäle zurückzuführen und aufzusummieren. Aus der Summe der Einzelergebnisse wird anschließend eine Prüfgröße berechnet, die mit einem definierten Grenzwert verglichen wird. Hierdurch werden auffällige von unauffälligen Messkanälen getrennt. Der Grenzwert ist demzufolge ein Maß für die Erkennungsschärfe und kann in den Stufen *niedrig, mittel* oder *hoch* eingestellt werden.

Für eine automatische und generische Auswertung der Fehlererkennung im Rahmen der Fehlerisolation wurde die sogenannte Methodentrennschärfe (kurz Trennschärfe) eingeführt. Die Trennschärfe ist eine Kenngröße die definiert, wie gut eine Methode einen fehlerhaften Messkanal identifizieren kann. Sie beschreibt damit die Fähigkeit einer Methode, einen Fehler mit dem fehlerhaften Messkanal zu assoziieren.

So hat z.B. die Ungleichung $T3 > T2$ zwei gleichwertige Terme und somit eine Trennschärfe von $p$ = 0,5. Die Methoden des Gerätechecks haben immer eine Trennschärfe von $p$ = 1, da hier immer nur ein Kanal betrachtet wird. Der Vergleich zwischen einem gemessenen Lambdawert und dem berechneten Lambda aus Luft- und Kraftstoffmassenstrom hat z.B. eine Trennschärfe von $p = 0,33$ da bei der Prüfung drei gleichwertige Informationen verwendet werden.

Es ist selbsterklärend, dass eine Methode mit einer geringen Trennschärfe weniger stark bei der Fehlerisolation eingehen darf als eine Methode mit einer hohen Trennschärfe.

Methoden mit einer Trennschärfe von $p$ = 1 benötigen keine weitere Differenzierung, da sie ein eindeutiges Ergebnis liefern. Bei den Methoden der Plausibilitätsprüfung (Trennschärfe $p < 1$) muss dagegen die Anzahl der Methoden und deren Methodentrennschärfe berücksichtigt werden. Mathematisch betrachtet bedeutet dies, dass eine gewisse Anzahl unabhängiger Prüfinstanzen mit spezifischen Erkennungswahrscheinlichkeiten vorliegen. Das Verbindungsgewicht muss demzufolge die Anzahl und die spezifische Wahrscheinlichkeit in Verbindung bringen.

Als Ansatz wird hierzu der "verallgemeinerte Additionssatz der Statistik für sich nicht ausschließende Ereignisse" verwendet. Danach ist die Wahrscheinlichkeit, dass mindestens eines der Ereignisse $E_i$ eintritt

$$p_{Plausibilität}\left(E_1 \cup E_2 \cup ... \cup E_k\right) = 1 - \left\{\left[1 - P(E_1)\right] \cdot \left[1 - P(E_2)\right] \cdot ... \cdot \left[1 - P(E_k)\right]\right\} \quad \text{[Gln. 1.1]}$$

Für die Fehlerisolation folgt hieraus, dass mit diesem Satz die Erkennungswahrscheinlichkeit der Plausibilitätsprüfung $p_{Plausibilität}$ für einen definierten Kanal unter Berücksichtigung der angewendeten Prüfregeln bestimmt werden kann. Dieser Ansatz funktioniert jedoch nur, wenn die Einzelwahrscheinlichkeiten genau bestimmt werden können. D.h. alle Einflüsse müssen gleich wahrscheinlich und statistisch symmetrisch sein. Es wird also eine physikalische Symmetrie gefordert, die den Schluss auf statistische Symmetrie zulässt (z.B. der ideale Würfel).

In Erinnerung an den Lambdavergleich oder die O2-Bilanz ist aber genau diese Forderung für die gemessenen Abgaskonzentrationen nicht erfüllt, da einige Größen in Vol-% und andere im ppm gemessen werden. Aus diesem Grund werden einige Annahmen getroffen:

1) Bei Dieselmotoren haben die *CO2*- und die *O2*-Konzentration etwa den gleichen methodischen Einfluss wie die Massenströme.
2) Bei Ottomotoren muss zusätzlich noch die *CO*-Konzentration mit berücksichtigt werden. Die Größen *CO2,* 02 und *CO* werden daher als gleichwertig mit den Massenströmen angesehen.
3) Für die Größen *HC* und *NOX* wird die Trennschärfe mit *p = 1/10000* per Definition festgelegt. Streng genommen kann hier auch nach den parametrierten Motortypen unterschieden werden, so dass für den Ottomotor nur *HC* und *NOX* und beim Dieselmotor *HC, CO* und *NOX* mit *p = 1/10000* berücksichtigt werden.

Die Berechnung der Prüfgröße $t_{Fehlerisolation}$ erfolgt nach dem Ansatz, dass jede Plausibilitätsmethode ein binäres Prüfergebnis $E_{bin, Methode}$ produziert. Durch Multiplikation des binären Methodenergebnisses $E_{bin, Methode}$ mit der Methodentrennschärfe $p_{Methode}$ errechnet sich das Methodenergebnis $E_{Methode}$ (Gln. 1.2)

$$E_{Methode} = E_{bin,Methode} \cdot p_{Methode} \qquad \text{[Gln. 1.2]}$$

Die Ergebnisse aller durchführbaren Plausibilitätsmethoden werden anschließend aufsummiert und mit der Gesamtwahrscheinlichkeit der Plausibilität multipliziert. Damit kann nun die Prüfgröße für die Fehlerisolation nach Gln. 1.3 berechnet werden:

$$t_{Fehlerisolation} = \frac{E_{RA} + E_{SA} + 6 \cdot \left(E_{GC} + E_{LC}\right) + E_B + p_{Plausibilität} \sum E_{Methode} \cdot p_{Methode}}{6} \qquad \text{[Gln. 1.3]}$$

mit $E_{RA}$ = *Rohdatenanalyse*
$E_{SA}$ = *1Hz-Signalanalyse*
$E_{GC}$ = *Gerätecheck*
$E_{LC}$ = *Limitcheck*
$E_B$ = *Beharrung*

Der Term 6. ($E_{GC} + E_{LC}$) ist durch die Tatsache begründet, dass ein Kanal bei einer Fehlermeldung im Limitoder Gerätecheck immer als fehlerbehaftet isoliert werden muss.

Als letzter offener Punkt bei der Fehlerisolation bleibt noch die Bestimmung der Grenzwerte für die Einstellungen *niedrig, mittel* und *hoch.* Hierzu wird angenommen, dass pro Kanal im Mittel 4 bis 5 Methoden der Plausibilität angewendet werden. Bei der Einstellung *hoch* soll genau dann mindestens eine Warnung erfolgen, wenn folgende Einzelergebnisse

vorliegen:

$$p_{Plausibilität} \geq 0,5$$
$$\left.\begin{array}{l} Rohdatenanalyse = 0 \wedge 1Hz - Signalanalyse = 0 \wedge Beharrung = 0 \\ Gerätecheck = 0 \wedge Limitcheck = 0 \end{array}\right\} \Rightarrow Warnung$$

Bei der Einstellung *mittel* erfolgt mindestens dann eine Warnung, wenn

$$p_{Plausibilität} \geq 0,5$$
$$\left.\begin{array}{l} 1Hz - Signalanalyse = 1 \vee Rohdatenanalyse = 1 \vee Beharrung = 1 \\ Gerätecheck = 0 \wedge Limitcheck = 0 \end{array}\right\} \Rightarrow Warnung$$

vorliegt.

Um in der Einstellung *niedrig* mindestens eine Warnung auszulösen, müssen mindestens folgende Einzelergebnisse auftreten.

$$p_{Plausibilität} \geq 0,5$$
$$\left.\begin{array}{l} Rohdatenanalyse = 1 \wedge Beharrung = 1 \vee 1Hz - Signalanalyse = 1 \wedge Beharrung = 1 \\ Gerätecheck = 0 \\ Limitcheck = 0 \end{array}\right\} \Rightarrow Warnung$$

Hieraus ergeben sich die in Tabelle T1.1 dargestellten kritischen Grenzwerte.

Tabelle T1.1 kritische Grenzwerte für die Fehlerisolation.

| Meldung | Wert | $t_{krit}$ **für niedrig** | $t_{krit}$ **für mittel** | $t_{krit}$ **für hoch** |
|---|---|---|---|---|
| Kanal ist OK | 0 | $t_{krit} < 0,3$ | $t_{krit} < 0,2$ | $t_{krit} < 0,05$ |
| Kanal ist suspekt | 1 | $0,3 < t_{krit} < 0,6$ | $0,2 < t_{krit} < 0,4$ | $0,05 < t_{krit} < 0,2$ |
| Kanal ist fehlerhaft | 2 | $t_{krit} \geq 0,6$ | $t_{krit} \geq 0,4$ | $t_{kit} \geq 0,6$ |

Das Ergebnis der Fehlerisolation wird in Form eines Zahlenwertes (0, 1 oder 2) an die Fehlerklassifikation übergeben.

Für den Fall der messsynchronen Fehlererkennung wird grundsätzlich die gleiche Struktur angewendet. Der einzige Unterschied besteht darin, dass für die Einzelwertmethoden nicht der aktuelle Messwert, sondern der Mittelwert des Ringspeichers herangezogen wird.

Im Rahmen der Fehlerklassifikation wird die Fehlersignifikanz unter Verwendung des Entprellpuffers $\overline{EP}$ bewertet. Hierzu werden die kanalspezifischen Ergebnisse der Fehlerisolation in einen ebenfalls kanalspezifischen Spaltenvektor mit parametrierbarer Länge geschrieben. Dieser Vektor wird softwareseitig als Rollspeicher ausgeführt.

Aus dem Entprellpuffer wird nach Gln. 1.4 die Prüfgröße $t_{Klassifikation}$ berechnet und mit dem kritischen Wert $t_{Klassifikation,krit}$ verglichen.

$$t_{Klassifikation} = \frac{\sum_{i=1}^{n} EP_i}{2 \cdot n} < t_{Klassifikation,krit}$$

[Gln. 1.4]

Genau wie bei der Fehlerisolation erfolgt eine Einteilung in die Stufen *niedrig, mittel* und *hoch.* Je nach Schärfegrad (Tabelle T1.2) wird der entsprechende Kanal als fehlerfrei, signifikant fehlerbehaftet oder als stark signifikant fehlerbehaftet klassifiziert und mit einer entsprechenden Meldung *("OK", "Warning"* oder *"Error")* assoziiert.

Tabelle T1.2 kritische Grenzwerte für die Fehlerklassifikation

| Meldung | Wert | $t_{krit}$ für niedrig | $t_{krit}$ für mittel | $t_{krit}$ für hoch |
|---|---|---|---|---|
| Kanal ist nicht signifikant fehlerhaft =>OK | 0 | $t_{krit} < 0{,}3$ | $t_{krit} < 0{,}2$ | $t_{krit} < 0{,}1$ |
| Kanal ist signifikant fehlerhaft => Warnung | 1 | $0{,}3 \leq t_{kit} \leq 0{,}6$ | $0{,}2 \leq t_{kit} \leq 0{,}5$ | $0{,}1 \leq t_{krit} \leq 0{,}3$ |
| Kanal stark signifikant fehlerhaft => Fehler | 2 | $t_{krit} > 0{,}6$ | $t_{krit} > 0{,}5$ | $t_{krit} > 0{,}3$ |

Eine allgemeine, weiterführende Bestimmung der Fehlerursache ist mit dem verwendeten Ansatz der signalbasierten Fehlererkennung nicht möglich. Dies begründet sich durch die Tatsache, dass in der Regel kein direkter Schluss von einem Messkanal auf einen Fehler in einer technischen Systemkomponente möglich ist. Damit wird die Fehlerklassifikation automatisch auf die Benennung fehlerhafter Messsignale in Bezug auf Fehlergröße und Fehlerdauer reduziert.

Zur Vermeidung von Fehlmeldungen kann die Fehlerklassifikation durch definierte Freigabebedingungen überbrückt werden. Für den Fall, dass die Freigabebedingungen nicht erfüllt sind, wird der "Schalter" in Fig. 54 geöffnet und der Kanalstatus automatisch auf 3 gesetzt. Dies bedeutet, dass der entsprechende Kanal nicht geprüft werden konnte.

Der Prozess der Fehlerisolation und Fehlerklassifikation soll kurz am Beispiel einer Stationärstufenmessung erläutert werden. Die Bewertung erfolgt dabei einmal für den Luftmassenstrom und einmal für den Kraftstoffmassenstrom.

Für das Beispiel gelten folgende, durch die Parametrierung festgelegte Randbedingungen:

1) Durchführbare Methoden

- $\lambda_{Luft/Kraftstoff} = \lambda_{Sonde}$
- $\lambda_{Luft/Kraftstoff} = \lambda_{Brettschneider}$
- C-Bilanz
- O2-Bilanz
- Rohsignalanalyse
- 1Hz-Signalgüte
- Limitcheck
- Gerätecheck

2) Toleranzen

- C-Bilanz = 15%

- O2-Bilanz = 10%

- Lambdavergleiche = 10%

3) Zeiten

- Länge des Ringspeichers = 30s
- Länge des Entprellungsspeichers = 30s

4) Diagnoseschärfe

• mittel

Zur Berechnung der Methode $\lambda_{Luft/Kraftstoff} = \lambda_{Sonde}$ werden die Messwerte der Lambdasonde sowie der Luft- und Kraftstoffmassenstrom benötigt. Die Methode hat damit eine Wahrscheinlichkeit von $p$ = 1/3 um einen Fehler im Luftmassenstrom bzw. im Kraftstoffmassenstrom zu erkennen.

Für die Methode $\lambda_{Luft/Kraftstoff} = \lambda_{Brettschneider}$ werden neben dem Luft- und Kraftstoffmassenstrom auch die Konzentrationen für *CO, CO2* berücksichtigt. NOX hat in Bezug auf den Luft- und Kraftstoffmassenstrom eine Trennschärfe von p = 0,0001 und wird deswegen vernachlässigt. Demzufolge ergibt sich eine Wahrscheinlichkeit von p = *0,25* um mit der Methode einen Fehler im Luftmassenstrom richtig zu erkennen. Nach dem gleichen Schema erhält man für die C-Bilanz und für die O2-Bila ebenfalls *p = 0,25.* Der Limitcheck und die Signalanalyse gehen je mit *p* = 1 in die Berechnung ein. Die Plausibilität hat damit einen Gesamtanteil von

$$P_{Plausibilität} = 1 - \left\{ \left[ 1 - \frac{1}{3} \right] \cdot \left[ 1 - \frac{1}{6} \right] \cdot \left[ 1 - \frac{1}{4} \right] \cdot \left[ 1 - \frac{1}{4} \right] \right\} = 0,6875$$

Tabelle T1.3 Ergebnis der Fehlerklassifikation für den Kraftstoffmassenstrom

| Beispielrechnung für den Kraftstoffmassenstrom | | | | |
|---|---|---|---|---|
| | 840 bis 870s | 870 bis 900s | 900 bis 930s | 930 bis 960s |
| $\lambda_{Luft/Kραφτσοφφ} = \lambda_{Sonde}$ | 0 | 1 | 1 | 0 |
| $\lambda_{Luft/Kραφτσοφφ} = \lambda_{Brettschneider}$ | 0 | 1 | 1 | 0 |
| C-Bilanz | 0 | 1 | 1 | 0 |
| O2-Bilanz | 0 | 1 | 1 | 0 |
| Beharrung | 0 | 1 | 0 | 0 |
| 1 Hz-Signalgüte | 0 | 1 | 0 | 0 |
| Limitcheck | 0 | 1 | 1 | 0 |
| Gerätecheck | 0 | 0 | 0 | 0 |
| Rohsignalanalyse | 0 | 1 | 0 | 0 |
| $t_{Fehlerisolation}$ | 0 | 1,6131 | 1,1131 | 0 |
| Isolationsergebnis | 0 | 2 | 2 | 0 |
| Klassifikationsergebnis | OK | ERROR | ERROR | OK |

Tabelle T6.4 Ergebnis der Fehlerklassifikation für den Luftmassenstrom

| Beispielrechnung für den Luftmassenstrom | | | | |
|---|---|---|---|---|
| | 840 bis 870s | 870 bis 900s | 900 bis 930s | 930 bis 960s |
| $\lambda_{Luft/Kραφτσοφφ} = \lambda_{Sonde}$ | 0 | 1 | 1 | 0 |
| $\lambda_{Luft/Kραφτσοφφ} = \lambda_{Brettschnezder}$ | 0 | 1 | 1 | 0 |
| C-Bilanz | 0 | 1 | 1 | 0 |
| O2-Bilanz | 0 | 1 | 1 | 0 |
| Beharrung | 0 | 0 | 0 | 0 |
| 1 Hz-Signalgüte | 0 | 0 | 0 | 0 |
| Limitcheck | 0 | 0 | 0 | 0 |

(fortgesetzt)

| Beispielrechnung für den Luftmassenstrom | | | | |
|---|---|---|---|---|
| | 840 bis 870s | 870 bis 900s | 900 bis 930s | 930 bis 960s |
| Gerätecheck | 0 | 0 | 0 | 0 |
| Rohsignalanalyse | 0 | 0 | 0 | |
| $t_{Fehlerisolation}$ | 0 | 0,1131 | 0,1131 | 0 |
| Isolationsergebnis | 0 | 0 | 0 | 0 |
| Klassifikationsergebnis | OK | OK | OK | OK |

Eine Veränderung der Diagnoseschärfe von *mittel* auf *hoch* hat für den Luftmassenstrom im Bereich von 870s bis 930s eine Warnung zur Folge.

Durch die so entwickelte generische Struktur des Logic Layer ist das Hinzufügen neuer Fehlererkennungsmethoden einfach über die bekannte Anzahl der Einflussgrößen und durch die ebenfalls bekannte Methodentrennschärfe uneingeschränkt möglich.

In den vorangegangenen Kapiteln wurde oft auf das interne Datenmanagement verwiesen. Dabei handelt es sich um eine "Minidatenbank", in der die Zwischenspeicherung der verschiedenen Diagnoseteilergebnisse zur Laufzeit in codierter Form erfolgt. Diese Teilergebnisse dienen einerseits zur Fehlerauswertung und andererseits zur Dokumentation der Diagnoseergebnisse. Um diese Funktion optimal auszufüllen, besteht das interne Datenmanagement aus den in Fig. 56 dargestellten Bereichen.

Der Bereich *statische Daten* beinhaltet Daten die nur während der Parametrierung verändert werden. Neben der Verwaltung von Konstanten wird hier z.B. auch die Belegung der Masterklassen analysiert um daraus die durchführbaren Methoden zu bestimmt.

Im Bereich *variable Daten* erfolgt die Dokumentation aller Anwendereingriffe zur Laufzeit. Neben dem Start und der Beendigung der Diagnose werden hier alle Aktionen des Anwenders vermerkt. Besonders wichtig ist z.B. das deaktivieren und redeaktivieren von Fehlererkennungsmethoden oder die Quittierung von Fehlermeldungen.

Um die Ergebnisse der einzelnen Methoden der Fehlererkennung zeitgleich auswerten zu können, müssen diese zu einem bestimmten Zeitpunkt und in einem definierten Speicherelement verfügbar sein. So benötigt die Fehlerisolation z.B. Informationen über die pro Kanal verwendeten Methoden und deren Trennschärfe. Diese Datenverwaltung erfolgt im Block *äquidistante Online-Daten.*

Die Visualisierung, insbesondere die Fehlervisualisierung, ist ein wichtiges Element der Messdatendiagnose. Dabei ist streng darauf zu achten, dass der Anwender nicht durch eine Flut von Informationen zu Fehlern und zum Systemstatus überfordert wird. Hierzu wurde die weiter oben bereits erwähnte Visualisierungspyramide durch drei Visualisierungsebenen exakt umgesetzt, wie in Fig. 57 zu erkennen ist.

In Ebene I werden Informationen zum Funktions- und Fehlerstatus der Diagnose durch eine eindeutige Symbolik angezeigt. Vorzugsweise wird hierzu eine Kombination aus Dreieck und Ausrufezeichen gewählt, da hierdurch sehr einfach drei Informationen vermittelt werden können.

1) Mit einer schwarze Schaltfläche (Warndreieck schwach sichtbar) kann symbolisiert werden, dass aufgrund der Parametrierung und der damit durchführbaren Fehlererkennungsfunktionen zurzeit keine Fehler vorliegen (Fig. 58a).
2) Durch ein dauerhaft rot leuchtendes Warndreieck wird ein neuer Fehler am Prüfstand symbolisiert (Fig. 58b).
3) Für den Fall, dass ein Fehler erkannt wurde und dieser wieder verschwunden ist, wird Fig. 58c verwendet.

In der zweiten Visualisierungsebenen (Ebene 11) werden dem Anwender Informationen zur Diagnosehistorie zur Verfügung gestellt (siehe Fig. 59). Über ein Protokollfenster kann genau verfolgen werden, wann und wie oft ein Ereignis (Fehler, Warnung) auftrat. Dies ist z.B. für den teil- oder unbemannten Betrieb besonders wichtig, da sich der Anwender nach längerer Abwesenheit einen schnellen Überblick über die bis dahin aufgetretenen Ereignisse verschaffen kann.

Die dritte Ebene der Ergebnisvisualisierung zeigt den Umfang und den aktuellen Status der Fehlererkennung an, wobei zwischen einer kanalbasierten und einer methodenbasierten Ansicht unterschieden wird.

Beide Ansichten (die Kanalübersicht der Fig. 60a und die Methodenübersicht der Fig. 60b) sind in einer Baumstruktur mit mehreren Unterschichten aufgebaut. Zu bemerken ist, dass in beiden Ansichten Methoden während der Laufzeit deaktiviert und wieder aktiviert werden können. Dies ist z.B. dann sinnvoll, wenn ein Kanal oder eine Methode ständig Fehler signalisiert obwohl dies für den aktuellen Test ohne Bedeutung ist.

Im Rahmen der Messdatendiagnose werden alle Informationen dokumentiert, die für das Zustandekommen des Diagnosegesamtergebnisses von Bedeutung sind. Hierzu gehören die Daten der Parametrierung sowie alle Klassifikationsergebnisse, Anwendereingriffe und Systemmeldungen.

Für die Ergebnisverwaltung werden folgende externe Referenzen angelegt:

- Parametrierungsdaten
- Systemmeldungen und Benutzereingriffe
- Qualitätssiegel

Die Abspeicherung der entsprechenden Informationen erfolgt gemeinsam mit den Testergebnissen über externe Referenzen oder Attribute in der Puma Datenbank.

Das Qualitätssiegel sollte dabei direkt mit den Messdaten abgespeichert werden. Fig. 61 zeigt die Realisierung des Qualitätssiegels am Beispiel einer MAGIC-Datenbank. In diesem Fall werden korrekte Daten nicht gekennzeichnet. D.h., dass das Qualitätssiegel für fehlerfreie Daten in diesem Fall ein weißer Hintergrund ist.

Die Einführung eines Qualitätssiegels hat für den Anwender eine ganze Reihe von Vorteilen:

1) Durch die Einführung eines Qualitätssiegels ist eine redundante Datennutzung mit größerer Sicherheit möglich.
2) Jeder Anwender kann sofort sehen, ob es sich bei den Daten um geprüfte Informationen handelt.
3) Neben dem Qualitätssiegel stehen dem Anwender alle Informationen zur Parametrierung, Fehlerquittierung, etc. durch entsprechende Referenzen zur Verfügung.
4) Bei DoE-Anwendungen kann der Zeitaufwand für die Rohdatenplausibilisierung deutlich verkürzt werden.

**Patentansprüche**

1. Verfahren zur Analyse und Bewertung von Messdaten eines Messsystemes mit zumindest einem Messkanal, umfassend die Bewertung der Messdaten zu frei wählbaren Zeitpunkten und über frei wählbare Dauer nach zumindest einem von mehreren vorgebbaren Kriterien, **dadurch gekennzeichnet, dass** die Rohdaten des Messkanals einer Fehlerisolations-Stufe und anschließend einer Fehlerklassifikations-Stufe zugeführt werden, und dass anschließend ein Maß für die Güte der Messdaten des jeweiligen Messkanals ermittelt wird.

2. Verfahren nach Anspruch 1, **dadurch gekennzeichnet, dass** die Rohdaten in der Fehlerisolations-Stufe zuerst einer Fehlererkennungs-Stufe zugeführt werden.

3. Verfahren nach Anspruch 1 oder 2, **dadurch gekennzeichnet, dass** die Daten nach Verarbeitung in der Fehlerisolations-Stufe einer Fehleridentifikations-Stufe innerhalb der Fehlerklassifikations-Stufe zugeführt werden.

4. Verfahren nach einem der Ansprüche 1 bis 3, **dadurch gekennzeichnet, dass** die Rohdaten zeitrichtig aufgezeichnet und je nach Bedarf der Fehlerisolations-Stufe bzw. deren Fehlererkennungs-Stufe zugeführt werden.

5. Verfahren nach Anspruch 4, **dadurch gekennzeichnet, dass** die Fehlerisolations-Stufe bzw. deren Fehlererkennungs-Stufe eine Hochfrequenz-Signalanalyse der Rohdaten durchführt.

6. Verfahren nach einem der Ansprüche 1 bis 5, **dadurch gekennzeichnet, dass** das aktuelle Maß für die Güte der Messdaten eines beliebigen Messkanals mit einem vorgebbaren Grenzwert verglichen und dessen Unterschreitung zur Anzeige gebracht wird.

7. Verfahren nach einem der Ansprüche 1 bis 6, **dadurch gekennzeichnet, dass** ein chronologisches Protokoll über den Verlauf der Maße für die Güte der Messdaten generiert und zur Anzeige gebracht wird.

8. Verfahren nach einem der Ansprüche 1 bis 7, **dadurch gekennzeichnet, dass** der aktuelle Status der Fehlerisolations-Stufe ausgelesen und zur Anzeige gebracht wird.

9. Verfahren nach einem der Ansprüche 1 bis 8, **dadurch gekennzeichnet, dass** die Betriebsmodi Stillstandsfehlererkennung, zyklische Online-Fehlererkennung (ZOF) und messsynchrone Fehlererkennung (MSF) vorgesehen sind.

10. Verfahren nach Anspruch 9, **dadurch gekennzeichnet, dass** die Betriebsmodi einzeln oder parallel vorgesehen sein können, insbesondere die zyklische Online-Fehlererkennung (ZOF) und messsynchrone Fehlererkennung (MSF).

11. Vorrichtung zur Analyse und Bewertung von Messdaten eines Messsystems, umfassend eine Einheit für die Bewertung der Messdaten zumindest eines Messkanals des Prüfstandes zu jedem beliebigen Zeitpunkt nach mehreren vorgebbaren Kriterien, **gekennzeichnet durch** einen Eingang für die Rohdaten des Messkanals, eine Einheit, in welcher eine Fehlerisolations-Stufe und anschließend eine Fehlerklassifikations-Stufe implementiert sind, sowie einem Ausgang für ein Maß für die Güte der Messdaten des jeweiligen Kanals.

12. Vorrichtung nach Anspruch 11, **dadurch gekennzeichnet, dass** in der Fehlerisolations-Stufe eine Fehlererkennungs-Stufe mit einem Eingang für die Rohdaten implementiert ist.

13. Vorrichtung nach Anspruch 11 oder 12, **dadurch gekennzeichnet, dass** der Ausgang der Fehlerisolations-Stufe mit einem Eingang einer innerhalb der Fehlerklassifikations-Stufe implementierten Fehlererkennungs-Stufe verbunden ist.

14. Vorrichtung nach einem der Ansprüche 11 bis 13, **dadurch gekennzeichnet, dass** ein Ringspeicher für die zeitrichtige Aufzeichnung der Rohdaten vorgesehen und mit dem Eingang der Fehlerisolations-Stufe bzw. deren Fehlererkennungs-Stufe zur Abfrage durch diese Stufe(n) verbunden ist.

15. Vorrichtung nach Anspruch 14, **dadurch gekennzeichnet, dass** in der Einheit mit der Fehlerisolations-Stufe bzw. deren Fehlererkennungs-Stufe eine Hochfrequenz-Signalanalyse-Einrichtung für die Rohdaten vorgesehen ist.

16. Vorrichtung nach einem der Ansprüche 11 bis 15, **dadurch gekennzeichnet, dass** ein frei wählbarer Grenzwert für das Maß für die Güte der Messdaten eines beliebigen Messkanals abgelegt ist, und dass eine Vergleichslogik vorgesehen ist, die das aktuelle Maß mit dem Grenzwert vergleicht und dessen Unterschreitung signalisiert, wobei dieses Signal vorzugsweise eine Anzeigeeinrichtung ansteuert.

17. Vorrichtung nach einem der Ansprüche 11 bis 16, **dadurch gekennzeichnet, dass** ein auslesbarer Speicherbereich für ein chronologisches Protokoll über den Verlauf der Maße für die Güte der Messdaten vorgesehen ist.

18. Vorrichtung nach einem der Ansprüche 11 bis 17, **dadurch gekennzeichnet, dass** eine Visualisierung für den aktuellen Status der Fehlerisolations-Stufe vorgesehen und abrufbar ist.

FIG. 1

Automatisierungsgrad bei Otto- und Dieselabstimmung

FIG. 2

| Aufgabe | DoE-Plan | Vermessung | Rohdaten-prüfung | Modell-bildung | Optimierung | Kennfeld-rechner | Verifizierung am Prüfstand | Ergebnis |

FIG. 3

Meldung oberer Grenzwert

Meldung unterer Grenzwert

a) Absolutwert

Meldung pos. Grenzwert

Meldung neg. Grenzwert

b) Trend der Größe

FIG. 4

| Fehlerdiagnose | | | | | |
|---|---|---|---|---|---|

**Fehlerdiagnose**

Mess-signal → **Fehlererkennung** (Feststellen, ob und ab wann Fehler vorliegen) → **Fehlerisolation** (Bestimmung der fehlerhaften Messkanäle) → **Fehleridentifikation** (Bestimmung der Zeitabhängigkeit des Fehlers) → **Fehlerklassifikation** (Klassifikationsergebnis OK, WARNUNG FEHLER) → **Fehlerursache** (Bestimmung der physikalischen Fehlerursache unter Verwendung der Messdatendiagnose)

**Beurteilung aufgetretener Fehler, um die Ursache eines aufgetretenen Fehlers zu ermitteln**

FIG. 5

Internes Datenmanagement

Rohdaten

Hochfrequenz-Signalanalyse | Mittelwert-berechnung | Beharrungs-erkennung | Niederfrequenz-Signalanalyse | Daten-umwandlung | Plausibilitäts-prüfung | Fehlerisolation | Fehler-identifikation | Fehler-klassifikation | Ergebnis-visualisierung | Ergebnis-speicherung

Parametrierung

Fehlererkennung    Auswertung der Fehlererkennung    Ergebnisverwaltung    Schnittstelle

FIG. 6

FIG. 7

Versuchsablauf    Sollwerte    Datenspeicherung    Bedien-Ebene

Automatisierung → Sollwertvorgabe → Regelung    Operativ-Ebene

Signal-verarbeitung → Steuerung / Überwachung →

Messsignale    Stellgrößen    Interface-Ebene

FIG. 8

| | | Leit-Ebene |
|---|---|---|
| Prüfläufe | Versuchsergebnisse | |

| | | Bedien-Ebene |
|---|---|---|
| Prüflaufeditor | Visualisierung | |
| Versuchsmanagement | | |

| | | | Operativ-Ebene |
|---|---|---|---|
| Regelung | Automatisierung | Datenerfassung | |

FIG. 9

FIG. 10

Diagnose-Ebene

FIG. 11

FIG. 12

FIG. 13

| ARTE ring buffers | → | Cyclic check buffers | → | MAGIC DATA PROCESSOR (cyclic check) | → | MCF File |

| → | Measurement check buffers | → | MAGIC DATA PROCESSOR (measurement check) | → | PUMA Normnames |

## FIG. 14

**Check events**

| Cyclic check event | Cyclic check event | Start Measurement |  | End Measurement |  | Cyclic check event |
|---|---|---|---|---|---|---|
|  |  | Cyclic check event | Cyclic check event | Cyclic check event | Cyclic check event |  |

**Data**

**Buffer copy**

| Copy to cyclic buffer | Copy to cyclic buffer | Copy to cyclic buffer | Copy to both buffer | Copy to both buffer | Copy to cyclic buffer | Copy to cyclic buffer |
|---|---|---|---|---|---|---|
|  |  | Copy partial data to cyclic buffer |  |  | Copy to both buffer |  |

**Check operation**

| Check cyclic buffer | Check cyclic buffer | Check cyclic buffer | Check cyclic buffer | Check cyclic buffer | Check cyclic buffer | Check cyclic buffer |
|---|---|---|---|---|---|---|

Check cyclic buffer

☐ Data copied to cyclic buffer only    ▨ Parallel data copied to cyclic buffer    ▤ Data copied to both buffers

EP 2 078 945 A2

70

FIG. 15

**Ebene I**
Fehleranzeige

**Ebene II**
Diagnosehistorie zu
Fehlern, Warnungen und
Systeminformationen

**Ebene III**
Aktueller Diagnosestatus via
Methoden- und Kanalübersicht

Zunahme der Informationstiefe

FIG. 16

Internes Datenmanagement

Rohdaten

Hochfrequenz Signalanalyse

Mittelwert berechnung

Beharrungs erkennung

Niederfrequenz Signalanalyse

Daten- umwandlung

Plausibilitäts- prüfung

Auswertung der Fehlererkennung

Eergebnis visualisierung

Eergebnis speicherung

Parametrierung

FIG. 17

Inhalt des Rollspeichers bei $t_0 + 3t_A$
| | | 1 | 2 | 3 | 4 | 5 | 6 | 7 | 8 | 9 |

$t_A = 1$ Sekunde

Inhalt des Rollspeichers bei $t_0 + 5t_A$
| | | 1 | 2 | 3 | 4 | 5 | 6 | 7 | 8 | 9 |

Inhalt des Rollspeichers bei $t_0 + 6t_A$
| | | 1 | 2 | 3 | 4 | 5 | 6 | 7 | 8 | 9 |

## FIG. 18

## FIG. 19

Lambdavergleich am TDI mit ausgefallener Lambdasonde

Lambda nach Brettschneider

eingefrorenes Signal der Lambdasonde

berechnetes Lambda aus Luft- und Kraftstoffmassenstrom

Lambda [ - ]

Laufzeit [s]

FIG. 20

Schnittstellenstörung beim Übertragen der Verbrennungsschwerpunkte am 2.2l Otto DI

FIG. 21

**Ergebnisse der PT1-Regression mit unterschiedlicher Datenmenge;**
**Lastsprung von 30 Nm auf 145 Nm bei 2000 min$^{-1}$ an einem 2.2l DI- Ottomotor**

FIG. 22

Ergebnisse der PT1-Regression mit unterschiedlicher Datenmenge;
Lastsprung von 30Nm auf 145Nm bei 2000 min⁻¹ an einem 2.2l DI- Ottomotor

FIG. 23

FIG. 24

Stationärstufenmessung am Ottomotor

## FIG. 25

Drehzahlmessung mit $f_{Abtast}$ = 1000 Hz

FIG. 26

FIG. 27

FIG. 28

## FIG. 29

**Klopferkennung durch defekten Hydrostössel am 4 Zylinder Ottomotor**
**Lastpunk: N = 2000 min⁻¹, pme = 2 bar**

höhere Abgastemperatur Zyl. 1 durch späteren ZZP (Klopferkennung)

Zündzeitpunk Zyl. 1

Abgastemperatur [°C]

Zündzeitpunkt [°KW v. OT]

Laufzeit [s]

FIG. 30

## FIG. 31

**Stationärstufenmessung am Ottomotor**

FIG. 32

**Gradientenberechnung mit dem Ansatz der linearen Regression während einer Stationärstufenmessung**

FIG. 33

Gradientenberechnung mit dem Ansatz der linearen Regression während einer Stationärstufenmessung

FIG. 34

Messgrößen

$T_0$  $T_1$  $T_2$  $T_{2s}$  $T_3$  $T_4$  TWE TWA TOEL

**Temperatur- Toolbox**

Motortyp
$TWA_{min}$
$TWA_{max}$
$TOEL_{min}$
$TOEL_{max}$

Parameter

Boolsche Matrix

Ergebnisse

| | |
|---|---|
| T0 | Umgebungstemperatur |
| T1 | Lufttemperatur nach HFM / vor Verdichter |
| T2 | Lufttemperatur nach Verdichter / vor Ladeluftkühler (LLK) |
| T2s | Lufttemperatur nach Ladeluftkühler |
| T3 | Abgastemperatur am Krümmer |
| T4 | Abgastemperatur nach Turbine |
| TWE | Kühlmitteltemperatur, Motoreintritt |
| TWA | Kühlmitteltemperatur, Motoraustritt |
| TOEL | Öltemperatur |

## FIG. 35

Abgastemperatur Zyl. 7-12
Abgasgegendruck Zyl. 7-12

Drehzahl (Bremse)
Drehmoment (Bremse)

Abgastemperatur
Zyl. 7 bis Zyl. 12

Abgasanalyse   λ   4   VTG

AGR-Ventil

HFM   1

TKRR   2s
Alpha
Res1

LL   2

TWE

T0
p0   MB

TKRV   2   Alpha   Res2
2s
LL

TWA

Kü

HFM   1

Abgasanalyse   λ   4   VTG

Abgastemperatur
Zyl.1 bis Zyl. 6

Abgastemperatur Zyl. 1-6
Abgasgegendruck Zyl. 1-6

Drehzahl (Motor)
Drehmoment (Motor)

| Temperaturen | Drücke | Motorgrößen | Abgasanalyse |
|---|---|---|---|
| 1x T0 | 1x p0 | 2x Luftmasse | 2x HC |
| 2x T1 | 2x p1 | 1x Kraftstoffverbrauch | 2x CO |
| 2x T2 | 2x p2 | 2x Drehzahl | 2x CO2 |
| 2x T2s | 2x p2s | 2x Moment | 2x O2 |
| 12x T3 | 1x pabg1-6 | 2x Alpha | 2x NOX |
| 1x Tabg1-6 | 1x pabg7-12 | 2x AGR | 2x NO |
| 1x Tabg7-12 | 2x p4 | 2x λ | 2x NO2 |
| 2x T4 | 1x pRes1 | 15x ECU | |
| 1x TRes1 | 1x pRes2 | | |
| 1x TRes2 | | | |
| 1x TKRV | | | |
| 1x TKRR | | | |

⟹ **82 Kanäle**

# FIG. 36

Problematik der Fehlererkennung bei dynamischem Betriebsverhalten

Temperatur [ °C ]

Laufzeit [s]

Abgastemperatur vor Turbine (T3)

Abgastemperatur nach Turbine (T4)

FIG. 37

Messgrößen

$p_0$  $p_1$  $p_2$  $p_{2s}$  $p_3$  $p_4$  pOEL

**Druck- Toolbox**

Motortyp

pOEL$_{min}$

pOEL$_{max}$

Parameter

Boolsche
Matrix
Ergebnisse

| | |
|---|---|
| p0 | Umgebungsdruck |
| p1 | Luftdruck nach HFM / vor Verdichter |
| p2 | Luftdruck nach Verdichter / vor Ladeluftkühler (LLK) |
| p2s | Luftdruck nach Ladeluftkühler |
| p3 | Abgasdruck vor Turbine |
| p4 | Abgasdruck nach Turbine |
| pOEL | Öldruck |

**FIG. 38**

Messgrößen

HC   CO   CO2   ML   MB

Konstanten

$M_C$

$M_{CO_2}$

$C_{Brennstoff}$

Abgasmessung
(trocken, feucht)

Obere Grenze (OG)

Untere Grenze (UG)

Parameter

ECB

Prüfung: UG ≤ ECB ≤ OG

Ergebnisse

| | |
|---|---|
| HC | Kohlenwasserstoffrohemission (vor KAT) |
| CO | Kohlenmonoxydrohemission (vor KAT) |
| CO2 | Kohlendyoxidrohemission (vor KAT) |
| ML | Luftmassenstrom |
| MB | Kraftstoffmassenstrom |

FIG. 39

Einfluss der Feuchtekorrektur auf den abgeführten Kohlenstoffmassenstrom bei einem direkt eingespritzten Turbodiesel im Betriebspunkt 2000min$^{-1}$ / 55 Nm

FIG. 40

Auswirkung eines 50%-Fehler in der Komponente x auf der C-Bilanz

FIG. 41

Messgrößen

O2  NOX  CO  CO2  ML  MB

Konstanten

$M_O$
$\overset{2}{M}_{CO2}$
$M_{NOX}$
$M_{CO}$

Abgasmessung
(trocken, feucht)
Obere Grenze (OG)

Untere Grenze (UG)

Parameter

EO2B

Prüfung: UG ≤ EO2B ≤ OG

Ergebnisse

| | |
|---|---|
| CO | Kohlenmonoxydrohemission (vor KAT) |
| CO2 | Kohlendyoxidrohemission (vor KAT) |
| O2 | Sauerstoffrohemission (vor KAT) |
| NOX | Stickoxydrohemission (vor KAT) |
| ML | Luftmassenstrom |
| MB | Kraftstoffmassenstrom |

FIG. 42

**Auswirkung eines 50%-Fehler in der Komponente x auf der O2-Bilanz**

FIG. 43

Messgrößen

NOX    CO    CO2    MB    ML

Konstanten

mFID
$M_O$
M
$M_{CO2}$
$M_{H2O}$
$c_{Brennstoff}$
$h_{Brennstoff}$
$o_{Brennstoff}$

**Massenstrom- Toolbox**
**($\lambda$-Vergleich)**

Parameter

**Abgasmessung**
**(trocken, feucht)**

**Obere Grenze (OG)**

**Untere Grenze (UG)**

$\lambda_{Luft/Kraftstoff}$    $\lambda_{Sonde}$    $\lambda_{Brett}$

**Prüfung:** UG $\leq \lambda_{Luft/Kraftstoff} \approx \lambda_{Brett} \approx \lambda_{Sonde} \leq$
OG

| | | |
|---|---|---|
| Ergebnisse | NOX | Stickoxydrohemission (vor KAT) |
| | HC | Kohlenwasserstoffrohemission (vor KAT) |
| | CO | Kohlenmonoxydrohemission (vor KAT) |
| | CO2 | Kohlendyoxidrohemission (vor KAT) |
| | MB | Kraftstoffmassenstrom |
| | ML | Luftmassenstrom |

FIG. 44

**Auswirkung eines 50%-Fehler in der Komponente x auf $\lambda_{\text{Luft/Kraftstoff}}$ und $\lambda_{\text{Brettschneider}}$**

EP 2 078 945 A2

100

FIG. 45

Abkühlkurve am 1.9l TDI-Motor

FIG. 46

FIG. 47

Kompensation des Zeitverhaltens am Beispiel der Abgastemperatur Fensterlänge
jeweils 30 Sekunden

FIG. 48

**Kompensation des Zeitverhaltens am Beispiel der Abgastemperatur Fensterlänge jeweils 30 Sekunden**

FIG. 49

FIG. 50

gewünschter Ausgabevektor B

Vergleichsschicht B

$\text{ART}^b$

bi-direktional

Erkennungsschicht B

MAP-Field

Erkennungsschicht A

$\text{ART}^a$

bi-direktional

Vergleichschicht A

Eingabevektor A

$F_1^b$

$F_2^b$

$F^{ab}$

$F_2^a$

$F_1^a$

Reset

Ähnlichkeit

FIG. 51

Vergleich der Test-NEDC-Messungen zur Erprobung des ARTMAP-Beobachtersystems

FIG. 52

Leistungsfähigkeit des ARTMAP-Netzwerks als Beobachtersystem am Beispiel der NOX-Rohemission bei einem Pkw-TDI-Motor im NEDC-Zyklus

FIG. 53

FIG. 54

# FIG. 55

Beispiel zur Fehlerisolation und Fehlerklassifikation anhand einer Stationärstufenmessung

## FIG. 56

EP 2 078 945 A2

Internes Datenmanagement

| statische Daten | variable Daten | äquidistante Online Daten |
|---|---|---|
| • Normnamen<br>• Masterklassen<br>• Einheiten<br>• Konstanten<br>• Aktivierte Methoden<br>• Methodentrennschärfe<br>• Methodenspezifische Einstellungen | • Deaktivierung bzw. Redeaktivierung durchführbarer Methoden durch den Anwender<br>• Quittierung von Alarmmeldungen<br>• Stillstandsdiagnose<br>• Diagnosestopp | • Isolationsergebnis (kanalspezifisch)<br>• Klassifikationsergebnis (kanalspezifisch)<br>• Methodenergebnisse (kanalspezifisch)<br>• Diagnosestatus<br>• Online - Ergebnisdarstellung |

| Parametrierung | Protokoll | Anwender | Protokoll | Mess-ergebnisse | Protokoll |
|---|---|---|---|---|---|

112

EP 2 078 945 A2

# FIG. 57

FIG. 58a                      FIG. 58b                      FIG. 58c

| Diagnose ○ | Diagnose ○ | Diagnose ○ |

Diagnose Details           Diagnose Details           Diagnose Details

Das gesamte Dreieck wird    Das gesamte Dreieck wird in    Nur das Rufzeichen wird in
nicht sonderlich erkennbar     intensiver, roter Farbe        intensiver, roter Farbe
      dargestellt!                  dargestellt!                  dargestellt!

## FIG. 59

| | | |
|---|---|---|
| ⊗ | 8/16/2007 11:09:31 AM | Kanal Disabled!NO2 kann nicht überprüft werden |
| ⊗ | 8/16/2007 11:09:31 AM | Kanal MAIR höchst wahrscheinlich fehlerhaft |
| ⊗ | 8/16/2007 11:09:31 AM | Kanal MFUEL höchst wahrscheinlich fehlerhaft |
| ⊗ | 8/16/2007 11:09:31 AM | Kanal Disabled!EXTO2BALANCE kann nicht überprüft werden |
| ⊗ | 8/16/2007 11:09:31 AM | Kanal Disabled!EXTCBALANCE kann nicht überprüft werden |
| ▲ | 8/16/2007 11:10:49 AM | Kanal MAIR kann fehlerhaft sein |
| ▲ | 8/16/2007 11:10:49 AM | Kanal MFUEL kann fehlerhaft sein |
| ▲ | 8/16/2007 11:10:55 AM | Kanal CO2 kann fehlerhaft sein |
| ▲ | 8/16/2007 11:10:55 AM | Kanal CO kann fehlerhaft sein |
| ▲ | 8/16/2007 11:10:55 AM | Kanal O2 kann fehlerhaft sein |
| ▲ | 8/16/2007 11:10:55 AM | Kanal NOX kann fehlerhaft sein |
| ▲ | 8/16/2007 11:10:55 AM | Kanal HC kann fehlerhaft sein |
| ☺ | 8/16/2007 11:10:55 AM | Kanal MAIR ist nicht mehr fehlerhaft |
| ☺ | 8/16/2007 11:10:55 AM | Kanal MFUEL ist nicht mehr fehlerhaft |
| ☺ | 8/16/2007 11:10:59 AM | Kanal CO2 ist nicht mehr fehlerhaft |
| ☺ | 8/16/2007 11:10:59 AM | Kanal CO ist nicht mehr fehlerhaft |
| ☺ | 8/16/2007 11:10:59 AM | Kanal O2 ist nicht mehr fehlerhaft |
| ☺ | 8/16/2007 11:10:59 AM | Kanal NOX ist nicht mehr fehlerhaft |
| ☺ | 8/16/2007 11:10:59 AM | Kanal HC ist nicht mehr fehlerhaft |

11:07    11:08    11:09    11:10    11:11    11:12    11:13    11:14

## FIG. 60a

```
⊞⊠  P05                          ✔    6/6
⊞⊠  P06                          ✔    6/6
⊞⊠  POIL                         ✔    3/3
⊞⊠  SPEED                        ✔    3/3
⊟☐  T01                          ✔    7/8
    ⊟☐  Freigabebedingungen      ✔
        Temperaturstabilität     ✔
    ⊟⊠  Grenzwert                ✔
        ⊠  T01                   ✔
    ⊟⊠  Hochfrequenz Signal...   ✔
        ⊠  T01                   ✔
    ⊟⊠  Niederfrequenz Sign...   ✔
        ⊠  T01                   ✔
    ⊟☐  Plausibilitätschecks     ✖
        ⊟☐  Temperatur           ✖
            ⊠  T02 > T01         ✖
            ☐  T03 > T01         ✖
            ⊠  T04 > T01         ✔
            ⊠  T05 > T01         ✔
            ⊠  T06 > T01         ✔
⊞⊠  T02                          ✖    8/8
⊞☐  T03                          ✔    7/8
⊞⊠  T04                          ✔    8/8
```

## FIG. 60b

```
⊞⊠  Freigabebedingungen          ✔
⊞⊠  Grenzwert                    ✖
⊞⊠  Hochfrequenz Signalqu...     ✔
⊞⊠  Niederfrequenz Signalq...    ✔
⊟☐  Plausibilitätschecks         ✖
    ⊟☐  Druck                    ✔
        ⊠  P01 > P02             ✔
        ⊠  P03 > P01             ✔
        ⊠  P03 > P02             ✔
        ⊠  P03 > P04             ✔
        ☐  P04 > P01             ✖
        ⊠  P04 > P02             ✔
        ⊠  P05 > P01             ✔
        ⊠  P05 > P02             ✔
        ⊠  P05 > P06             ✔
        ⊠  P06 > P01             ✔
        ⊠  P06 > P02             ✔
    ⊞⊠  Lambdavergleich          ✖
    ⊞⊠  Medianvergleiche         ✔
        ⊠  C-Bilanz              ✖
        ⊠  O2-Bilanz             ✖
    ⊞⊠  Temperatur               ✔
⊞⊠  Zusätzliche Methoden         ✔
```

116

## FIG. 61

**AMPA Automatic Measurement Possibility Analysis**

Datei  Ansicht  Hilfe

**AVL**

Meßdaten: C:\ProgramFiles\AMPA12\_20050407125545467807  Meßpunkte: 150  Fehlerhafte Punkte: 58

Übersicht  Daten  ☐ Nur fehlerhafte Meßpunkte anzeigen

| / Nr. | TORQUE [Nm] | SPEED [rpm] | N [ ] | SB [DCA] | FRAEL [Bar] | B_GNOX_S [G/KWH] | B_GNOX_S [G/KWH] | B_PART [G/KWH] | BH [G/H] | |
|---|---|---|---|---|---|---|---|---|---|---|
| 1 | 0.5 | 750 | 1 | -3 | 300 | 10.7 | 10.7 | 0.120 | 0.120 | |
| 2 | 0.1 | 750 | 1 | *U) 0 | 300 | 8.81 | 8.81 | 0.088 | 0.088 | |
| 3 | 1.2 | 750 | 1 | 3 | 300 | 8.02 | 8.02 | 0.055 | 0.055 | |
| 4 | 2.1 | 750 | 1 | -6 | 300 | 7.52 | 7.52 | 0.014 | 0.014 | |
| 5 | 0.34 | 750 | 1 | *U) 0 | 400 | 12.1 | 12.1 | 0.107 | 0.107 | |
| 6 | 0.23 | 750 | 1 | -3 | 300 | 11.1 | 11.1 | 0.09 | 0.09 | |
| 7 | 3.5 | 750 | 1 | *U) 0 | 400 | *V) 10.8 | 10.8 | 0.03 | 0.03 | |
| 8 | 2.7 | 750 | 1 | 3 | 400 | *F) 9.03 | 9.03 | *U) 0.034 | 0.034 | |
| 9 | 4.6 | 750 | 1 | 6 | 200 | *V) 5.59 | 5.59 | 0.035 | 0.035 | |
| 10 | 1.2 | 750 | 1 | 0 | 200 | 10.7 | 10.7 | 0.006 | 0.006 | |
| 11 | 0.5 | 750 | 1 | -3 | 300 | 8.81 | 8.81 | 0.09 | 0.09 | |
| 12 | 0.8 | 750 | 1 | 0 | 0 | 0 | 0 | 0.09 | 0.09 | |
| 13 | 0 | 750 | *F) 1 | 3 | 300 | 7.52 | 7.52 | 0 | 0 | |
| 14 | *F) 328 | 1080 | 2 | 6 | 700 | 261 | 261 | 1.7 | 7.38 | |
| 15 | 319 | 1080 | 2 | 0 | 700 | 221 | 221 | 1.99 | 1.99 | |
| 16 | 319 | 1080 | 2 | -3 | 700 | 200 | 200 | 2.17 | 2.17 | |
| 17 | 319 | 1080 | 2 | 0 | 700 | 176 | 176 | 2.12 | 2.12 | |
| 18 | 319 | 1080 | 2 | 3 | 800 | 259 | 259 | 0.834 | 0.834 | |
| 19 | 319 | 1080 | 2 | 6 | 700 | 261 | 261 | 1.7 | 1.7 | |
| 20 | 319 | 1080 | 2 | 0 | 800 | 240 | 240 | 0.944 | 0.944 | |
| 21 | 319 | 1080 | 2 | -3 | 800 | 218 | 218 | 1.36 | *F) 1.36 | |
| 22 | 319 | 1080 | 2 | 0 | 800 | 173 | 173 | 4.53 | 4.53 | |
| 23 | 319 | 1080 | 2 | 3 | 600 | 151 | 151 | 4.78 | 4.78 | |
| 24 | 319 | 1080 | 2 | 6 | 600 | 142 | 142 | 4.85 | 4.85 | |
| 25 | 319 | 1080 | 2 | 0 | 600 | 158 | 158 | 4.29 | 4.29 | |
| 26 | 319 | 1080 | 2 | 0 | 600 | 158 | 158 | 4.29 | 4.29 | |
| 27 | 319 | 1080 | 2 | -3 | 600 | 160 | 160 | 4.64 | 4.64 | |

Benutzer: Ebner Thomas (ebnert)  Server: rmes596  Datenbank: MDQ_V30_05

Legende:  *F)-> Fehlerhaft    *V)-> Verdächtig    *U)-> Ungültig

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006048730 A
- DE 102005052921 A

**In der Beschreibung aufgeführte Nicht-Patentliteratur**

- **Frank Kimmich.** Modellbasierte Fehlererkennung und Diagnose der Einspritzung und Verbrennung von Dieselmotoren. *Dissertation,* 2003
- **Führer et al.** Erkennung von Zündaussetzern aus Drehzahlsignalen mit Hilfe eines Frequenzbereichsverfahrens. *Tagung Elektronik im Kraftfahrzeug*
- **M. Willimowski ; Shaker Verlag.** *Verbrennungsdiagnose von Ottomotoren mittels Abgasdruck und Zonenstrom*
- **R. N. Clark ; D.C. Fosth ; V.M. Walton.** Detection of instrument malfunctions in control systems. *EEE Transactions on Automatic Control,* 1984
- Modellgestützte Fehlererkennung und Diagnose am Beispiel eines Kraftahrzeugaktors. **T. Pfeufer.** Fortschrittberichte VDI. VDI-Verlag, 1999, vol. 8
- Modellgestützte Fehlererkennung mit Neuronalen Netzen - Überwachung von Radaufhängungen und Diesel-Einspritzanlagen. **S. Leonhardt.** Forschungsberichte. VDI-Verlag, 1996, vol. VDI-Reih
- **Timo Combé.** Motorsimulation in Echtzeit. *Dissertation,* 2006
- **G. Hohenberg.** Visionen zu einem Motorenprüfstand für das 21. Jahrhundert. *Haus der Technik,* 1999
- **Andreas Flohr.** Konzept und Umsetzung einer Messdatendiagnose an Motorenprüfständen. *Dissertation,* 2005
- **Christian Schyr.** Modellbasierte Methoden für die Validierungsphase im Produktentwicklungsprozess mechatronischer Systeme am Beispiel der Antriebsstrangentwicklung. *Dissertation,* 2006
- **Thomas P. Ryan.** Statistical Methods for Quality Improvement. Wiley & Son Inc, 2000
- **Schöne.** Neue Entwicklungen der statistischen Prozesskontrolle bei korrelierten Daten. *Dissertation,* 1997
- **P. Berthouex ; W. Hunter ; L. Pallesenu ; C. Shih.** The use of stochastic models in the interpretation of historical data from sewage treatment plants. *Water Research,* 1976, vol. 10
- Modification of control chart limits in the presence of data correlation. *Journal of Quality Technology,* 1978
- **P. Berthouex ; W. Hunter ; L. Pallesenu.** Monitoring sewage treatment plants: Some quality aspects. *Journal of Quality Technology,* 1978, vol. 10 (4
- **L. Alwan ; H. Roberts.** Time series modelling for statistical process control. *Journal of Business and Economic Statistics,* 1988, vol. 6
- A multivariate and stochastic framework for statistical process control. **N. F. Hubele ; J.B Keats ; N. F. Hubele.** Statistical Process Control in Automated Manufacturing. Marcel Dekker, Inc, 1998
- **T. Harris ; W. Ross.** Statistical process control procedures for correlated observations. *Canadian Journal of Chemical Engineering,* 1991
- Introduction to Sta- tistical Quality Control. **D. Montgomery.** Introduction to Statistical Quality Control. John Wiley & Sons, 1991
- **D. Montgomery ; C. Mastrangelo.** Some statistical process control methods for autocorrelated data. *Journal of Quality Technology,* 1991
- **W. Woodall ; F. Faltin.** Autocorrelated data and SPC. *ASQC Statistical Division Newsletter,* 1994
- **Thomas P. Ryan.** *Statistical Methods for Quality Improvement,* 2000
- **A. Vasilopoulos ; A. Stamboulis.** Modification of control chart limits in the presence of data correlation. *Journal of Quality Technology,* 1978
- Simulation neuronaler Netze. **A. Zell.** Simulation neuronaler Netze. Addison Wesley Longmann Verlag, 1994
- **E. Maronova.** Entwicklung und Verifizierung eines dynamischen Beobachtersystems für Motorenprüfstände. *Bachelorarbeit,* 2006
- **Toma Donchev.** Adaptiv-Resonanz-Theorie und Entwicklung eines dynamischen Beobachtersystem zur Motor-Diagnose. *Bachelorarbeit,* 2007